Europäisches Patentamt

European Patent Office

Office européen des brevets

(19)

(11) Publication number : **0 481 606 A2**

# EUROPEAN PATENT APPLICATION

(12)

(21) Application number : **91308540.3**

(22) Date of filing : **19.09.91**

(51) Int. Cl.⁵ : **G06K 7/10**

(30) Priority : **19.09.90 US 584968**

(43) Date of publication of application :
**22.04.92 Bulletin 92/17**

(84) Designated Contracting States :
**AT BE CH DE DK ES FR GB GR IT LI LU NL SE**

(71) Applicant : **MARS INCORPORATED**
**6885 Elm Street**
**McLean Virginia 22101-3883 (US)**

(72) Inventor : **Reger, Philip R.**
**126 Northwood Road**
**Newtown Square, PA 19073 (US)**
Inventor : **Shuren, Thomas E.**
**5 Brecknock Terrace**
**West Chester, PA 19380 (US)**

(74) Representative : **Burke, Steven David et al**
**R.G.C. Jenkins & Co. 26 Caxton Street**
**London SW1H 0RJ (GB)**

(54) **Method and apparatus for scanning of barcodes under adverse scanning conditions.**

㊗  The present invention provides an improved portable data scanner apparatus 1 which is suitable for long periods of uninterrupted handheld use for non-contact scanning of data over a range of focal distances under severe environmental conditions. The apparatus is a self-contained unit with no external cabling and operates to scan barcodes under adverse scanning conditions such as bright sunlight, in the presence of glare and reflections, and is capable of scanning a barcode through glass, plastic and other clear materials. The scanner 1 incorporates a keyboard 33 and display 35 which permit the operator to control the aiming period and the decoding process, and uses a laser light source 14 to project a visible beam which is used to aim the apparatus 1 and to scan barcodes. Reflected light of wavelengths other than that of the laser light source is filtered out by an optical bandpass filter 128. A reflective sensor 17 converts the light to an electrical signal which is then filtered to remove noise and decoded. The laser light source beam is focused to provide a spot size substantially the same size as the smallest barcode feature to significantly reduce received signal noise. Further, a scanning algorithm which searches for start and stop characters is employed to decode barcode data. Thus, barcodes printed on reflective materials such as metal, fiberglass and the like can be successfully scanned and decoded.

EP 0 481 606 A2

Field of the Invention

The present invention relates generally to an improved handheld data scanner method and apparatus. More particularly, the present invention relates to such method and apparatus for non-contact scanning of barcoded data over a range of focal distances under severe environmental conditions. For example, the present method and apparatus is designed to operate satisfactorily while scanning barcodes under adverse scanning conditions such as bright sunlight, in the presence of glare and other reflection, and is capable of scanning a barcode through glass, plastic or other clear materials. Further, barcodes printed on reflective materials such as metal, fiberglass and the like can be successfully scanned.

Description of the Prior Art

Barcode symbols consisting of a strip of alternating dark bars and light spaces, and barcode scanners for reading barcodes have become widely used in many industries for a variety of tasks. Various handheld laser scanner arrangements with varying degrees of portability are known. See, e.g., U.S. Patents Nos. 4,460,120, 4,409,470, 4,387,297, 4,360,798 and 4,251,798.

EP-A-0262943, assigned to the assignee of the present invention, describes an integrated, self-contained handheld data scanner apparatus for non-contact scanning of data and barcode symbols. The apparatus includes a rechargeable battery pack, laser scanning element and a data module in an integrated unit which is compact, rugged and lightweight, and operates to scan and decode a variety of barcodes with a range of densities and formats.

Problems faced by operators of portable barcode scanners, such as the above, include the reading of barcodes under adverse lighting conditions, such as direct sunlight, and reading barcodes located under glass, plastic or other clear materials. Barcodes imprinted on reflective materials such as metal, fiberglass and the like also pose barcode reading problems. One specific environment presenting such problems is where it is desired to affix a barcoded label made of metal to the inside of a windshield of a car, truck or other vehicle. Such a label will desirably be read outdoors under widely varying light conditions. For example, such labels might be read in shade or full, bright sunlight.

Some prior art scanners have been designed for use in such environments. These scanners use high power laser scanning sources, such as helium neon lasers, combined with intricate and relatively expensive amplification and decoding circuitry. These units have proven difficult to construct and expensive to make. Further, these units are fragile due to the glass tube construction of the laser, and quite heavy because of other components used, making them impractical for long periods of handheld use in rugged environments.

Summary of the Present Invention

While the prior art addresses many problems related to barcode scanning, it has long been desired to develop a self-integrated, lightweight, and rugged bar code scanner capable of scanning a barcode printed on metal through the windshield of an automobile in bright sunlight. The intense glare and reflections from both the windshield and the metal upon which the barcode is imprinted make data acquisition difficult or impossible using most prior art barcode scanners due to signal saturation and noise problems. The bright sunlight imposes a strong noise signal onto the reflected light signal to be read, sometimes saturating the scanner decoding circuitry resulting in lost barcode data. Even when filtered, a strong noise component still exists which is made worse by noise present due to the texture of the metal barcode being scanned. The present invention makes it possible to successfully scan barcode data under such adverse conditions by solving the problems encountered while attempting to read barcodes in such environments, and comprises a handheld data scanner apparatus for scanning and reading data including barcodes and other data.

In a presently preferred embodiment, apparatus according to the present invention is preferably an integrated self-contained laser scanner apparatus such as described in

EP-A-0262943 discussed above, or as sold under the Trademark MEQ-130 by Mars Electronics of 6885 Elm Street, McLean, Virginia 22101-3883, with the modifications as discussed below. Such a laser scanner has a scanner having a laser diode and optical scanning elements for illuminating and detecting barcodes with a range of densities. The scanner incorporates a keyboard and display which allow the operator to control the decoding process, and includes a large solid state memory for storage of data, such as data generated by a number of successive barcode decodings, and for storage of operating and application programs. The scanner also has a strong and lightweight frame which may be removably attached to a rechargeable battery pack carefully placed to insure user comfort with reduced fatigue over long periods of uninterrupted handheld use. While such apparatus is presently preferred, it will be understood that the teachings of the present invention are more generally applicable to laser scanning under harsh environmental conditions.

In one such application, reading of a barcode through the windshield of a car, truck or other vehicle, an operator aims the apparatus by depressing a trigger switch to activate a laser diode causing a visible spot to appear on the data to be read. After a predetermined interval to permit aiming elapses, the apparatus automatically scans the data and then provides an audio and visual indication to the operator when a successful scan has taken place. A high power laser diode that projects a visible light beam is preferably used by the unit's operator to both aim the apparatus, and to provide a strong reflected light signal for use by the reflective sensor. The strong reflected light signal permits the use of lower gain signal amplifier circuits which lessens the chance of noise saturation of the amplification circuitry of the apparatus, thereby lessening the risk of loss of data. Circuitry to filter out noise imposed on the reflected light signal is also provided to enable the apparatus to correctly scan and process the data even in the presence of glare and reflections caused by bright sunlight. Further, the present invention compensates for received signal noise inherent on highly reflective materials such as metal, fiberglass and the like, on which a barcode may be printed, by employing a laser diode scanning beam having a large enough spot size so that the effect of such noise is significantly reduced.

Additional details, features and advantages of the present invention are clear from the drawings, and the detailed discussion below.

Brief Description of the Drawings

Fig. 1 is a front view of a first embodiment of a handheld light scanner apparatus according to the present invention;

Fig. 2 is a detailed drawing of the scanner housing along with the scanning module and other components making up the scanner;

Fig. 3 is a cutaway view of the scan head assembly which is housed in the scanner module assembly of Fig. 2;

Fig. 4 is a top view of the laser diode board assembly located in the scan head assembly of Fig. 3;

Fig. 5 is a circuit diagram of the laser diode power supply, photodiode amplifier circuit, and associated circuitry;

Figs. 6A-E are several different signal diagrams of received signal barcode data used to illustrate the methods used by the present invention;

Fig. 6F illustrates a barcode of the the which can be read by the present invention;

Fig. 7 is a circuit diagram illustrating the high pass filter, auto-gain control and data separator circuits suitable for use in apparatus according to the present invention;

Figs. 8A-C are signal diagrams illustrating the effects of noise due to the reflective material on which the object to be scanned is printed;

Fig. 9 is a program listing for marginless decode of data used by the present invention; and

Figs. 10A-H are schematic diagrams of a control system suitable for use with the present invention.

Detailed Description

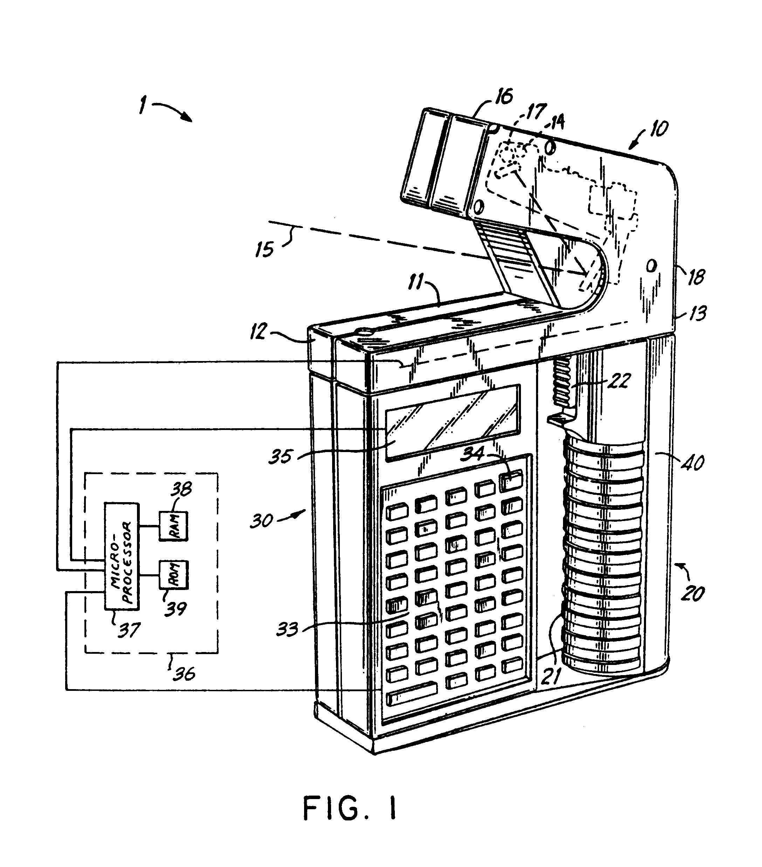

Fig. 1 illustrates a handheld barcode scanner apparatus 1 according to one embodiment of the present invention. Further mechanical and electronic details of such apparatus not pertinent to the present invention can be found in EP-A-0262943, assigned to the assignee of the present invention and incorporated by reference herein. The scanner apparatus 1 includes a first module 10 having an elongate base 11 with first and second ends 12 and 13 respectively, and an upper portion 16. The first module 10 further includes a laser diode 14 for producing a visible aiming and a scanning reading laser light beam in the direction beyond the first end 12 of base 11. The central axis 15 of the scanned laser light beam lies generally parallel to the major axis of upper portion 16. The module 10 also includes a visual indicator 18 such as a light emitting diode (LED) display for providing visual feedback that data has been successfully decoded. Apparatus 1 also includes means 17 for detecting light from the scanned reading light beam which has been reflected from scanned objects and producing a first electrical signal representative of the detected light.

The first module 10 is attached to a second module 30 comprising a data module including one or more data processing components, such as a keyboard 33, a display means 35, and a microprocessor 37. The keyboard 33 includes an on-off switch 34. As shown in Fig. 1, second module 30 is attached to first module 10 generally orthogonal to the first module base 11 near the first end 12.

First module 10 is also attached to a third module 20. The third module 20 is elongate in shape and attached generally orthogonal to base 11 near the second end 13 of base 11. As shown in Fig. 1, the third module 20 comprises the handle for the apparatus 1 and includes a handgrip 21. Third module 20 is sufficiently spaced from second module 30 to allow the operator's fingers to pass freely between them. A trigger 22 is provided for the operator's use in controlling operation of the apparatus 1. A removable battery pack 40 is also located within the module 20. Battery pack 40 supplies normal operating power for the apparatus 1.

This presently preferred embodiment is an integrated self-contained laser based barcode scanner. This self-contained apparatus is rugged, compact, lightweight and intended for long periods of uninterrupted handheld use for non-contact barcode scanning over a range of focal distances in a variety of environments. These characteristics are highly desirable because it is expected that apparatus according to the present invention will be carried by the operator to various locations. Further, the apparatus has no interconnecting cables and belt mounted components. Such features combined together achieve the beneficial result of true portability in a single integrated unit without power or data transfer cabling to separate power packs or data processing apparatus. Consequently, the repetitive scanning of barcodes with the present apparatus can be a one-handed operation allowing the other hand free for other functions.

While it is preferred that the apparatus scan automatically, it should be recognized that scanning can be accomplished by manually moving a steady beam. Finally, the method and apparatus of the present invention are readily applicable to other barcode scanners.

The overall operation of apparatus 1 is briefly as follows. To aim, the operator points the upper portion 16 of first module 10 in the direction of the target to be scanned. Trigger 22 is then depressed to energize the laser diode 14 to provide its stationary, blinking aiming signal for a predetermined period of time, to facilitate the correct aiming of the scanning apparatus onto the barcode to be read. The predetermined aiming period is software controlled and may be altered by the operator to last from 1 to 256 pulses, a time period of from one tenth of a second to approximately 25 seconds where each pulse is on for 50 milliseconds and off for 50 milliseconds. The operator uses the keyboard 33 to alter data that the software program accesses to either shorten or lengthen the aiming period. After the predetermined aiming period expires, scanning of the barcode is automatically initiated.

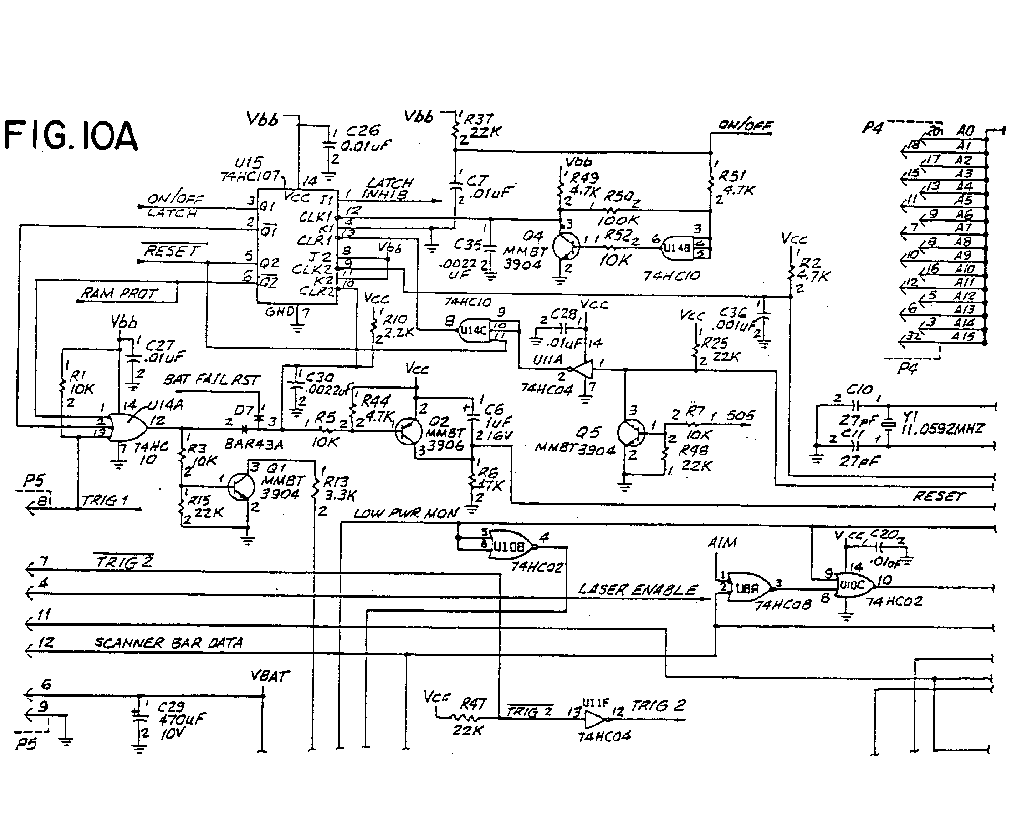

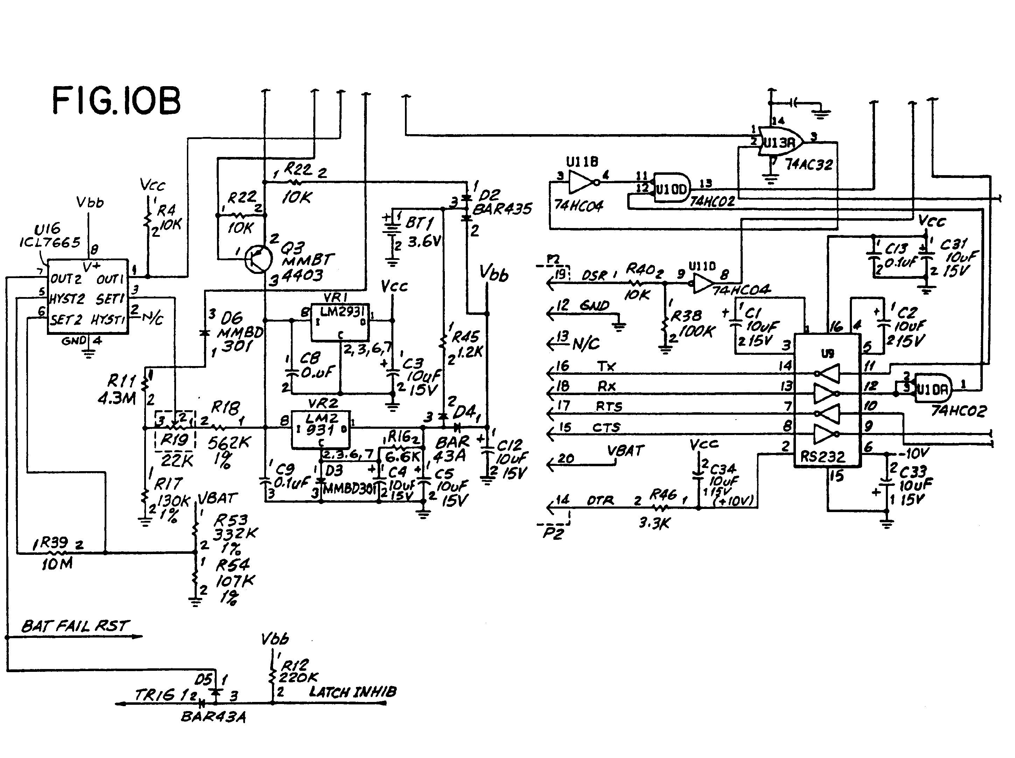

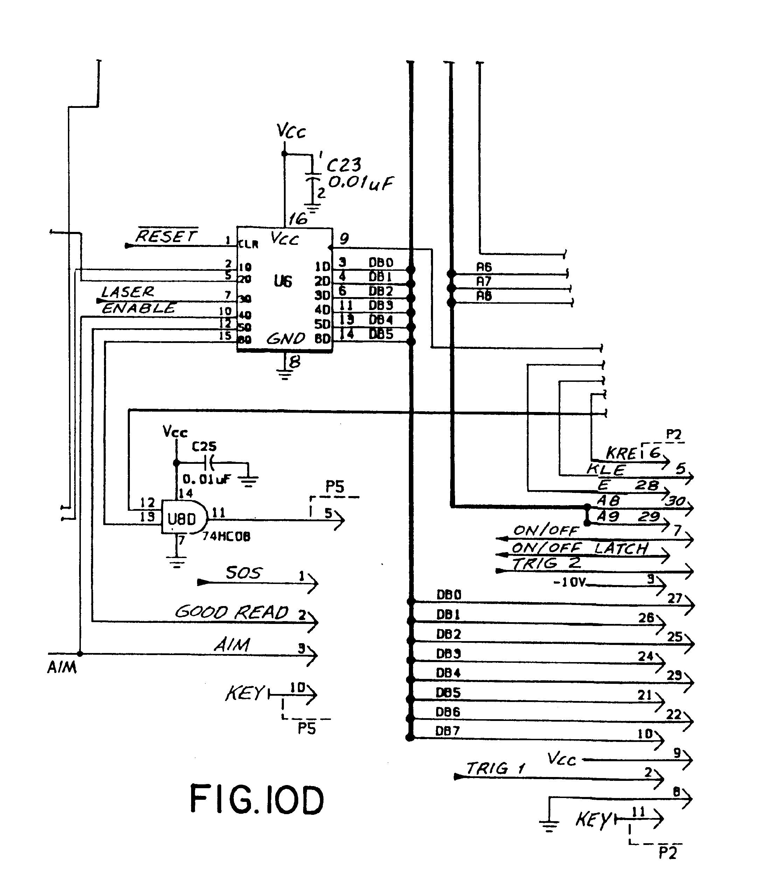

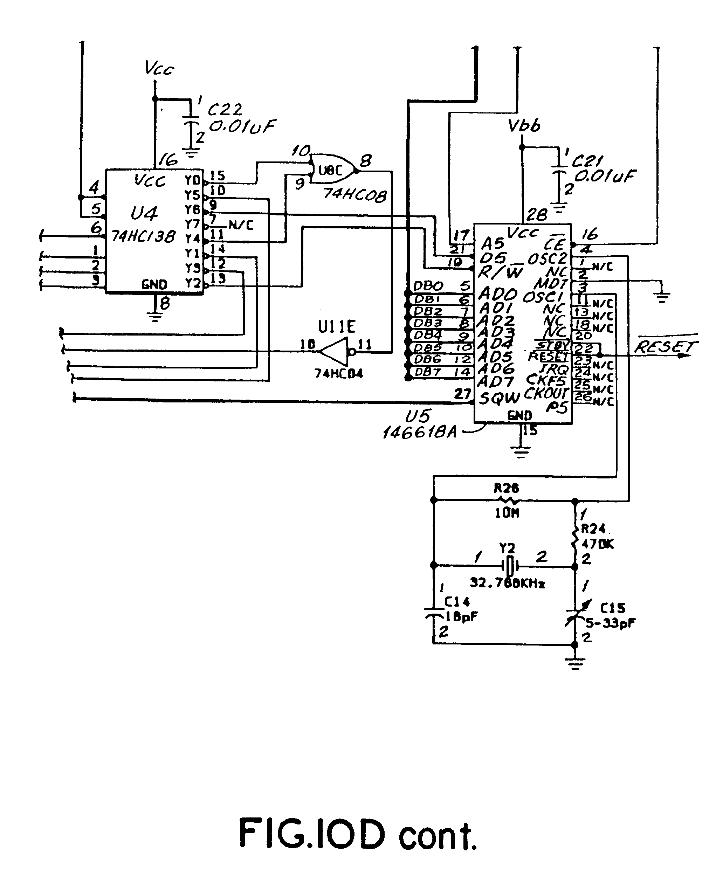

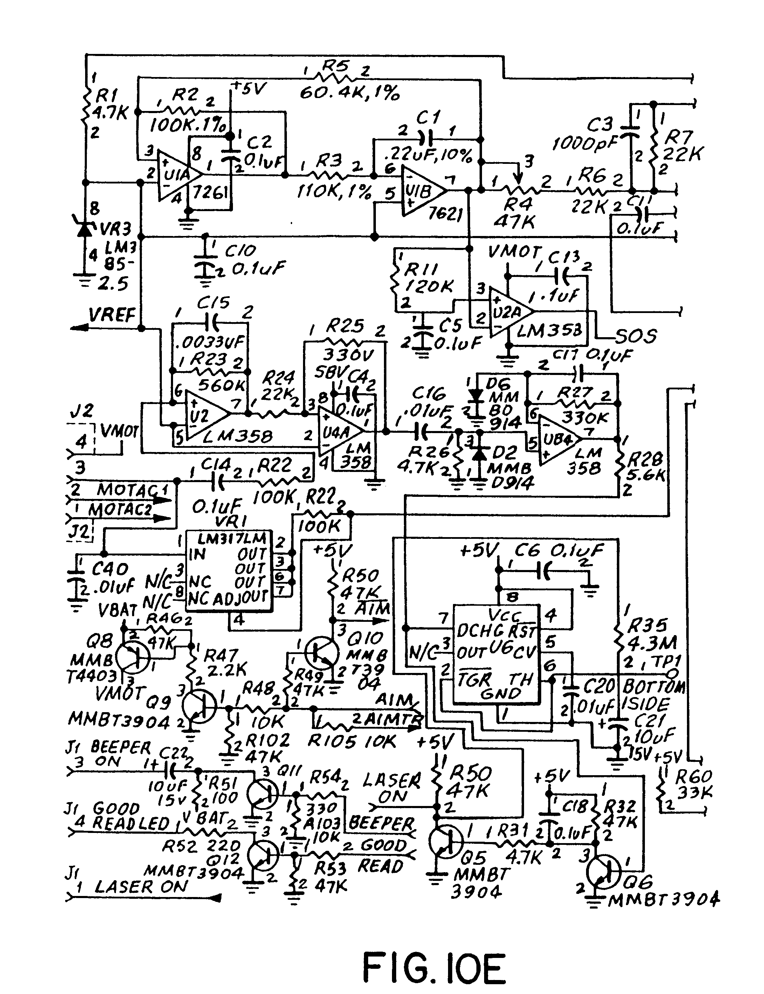

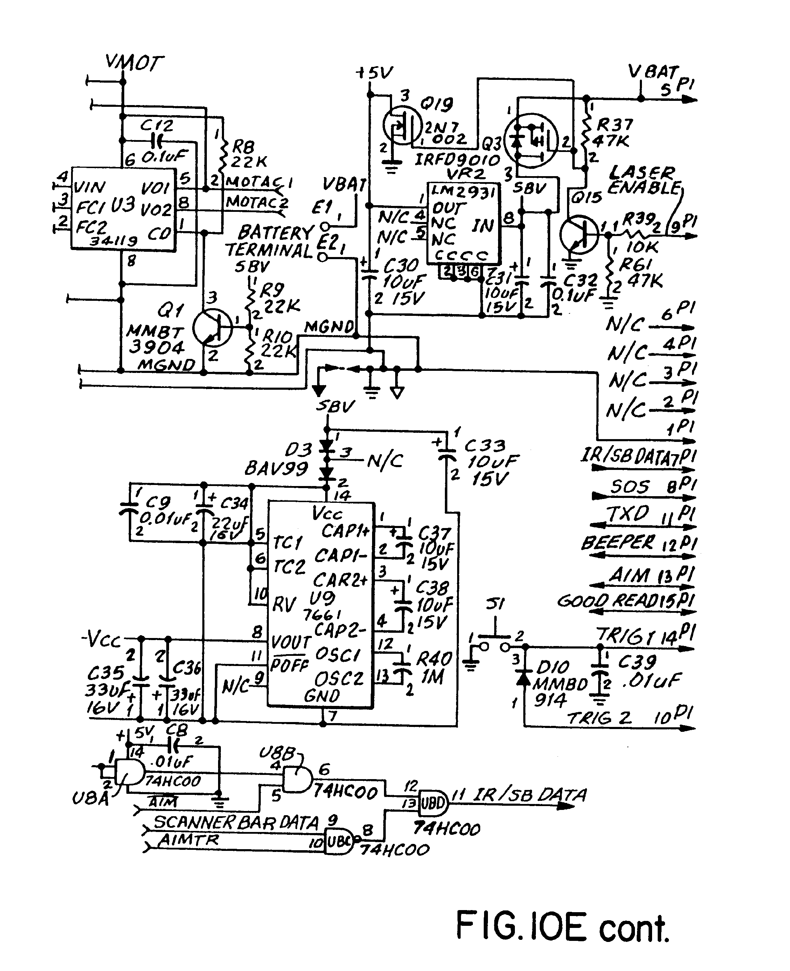

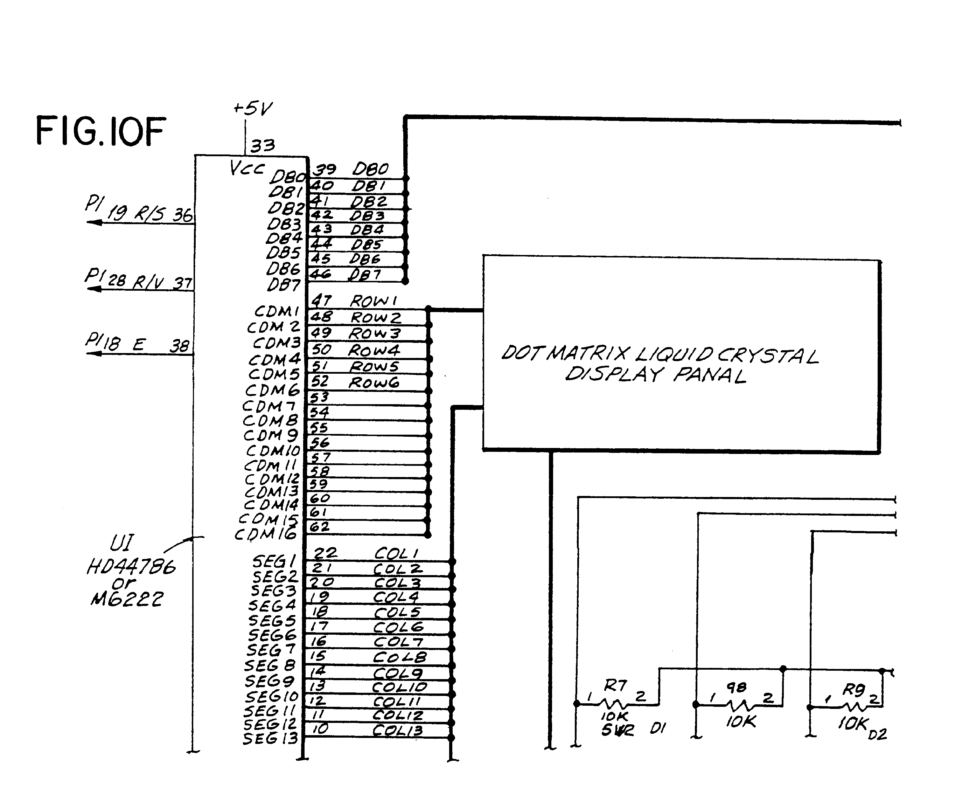

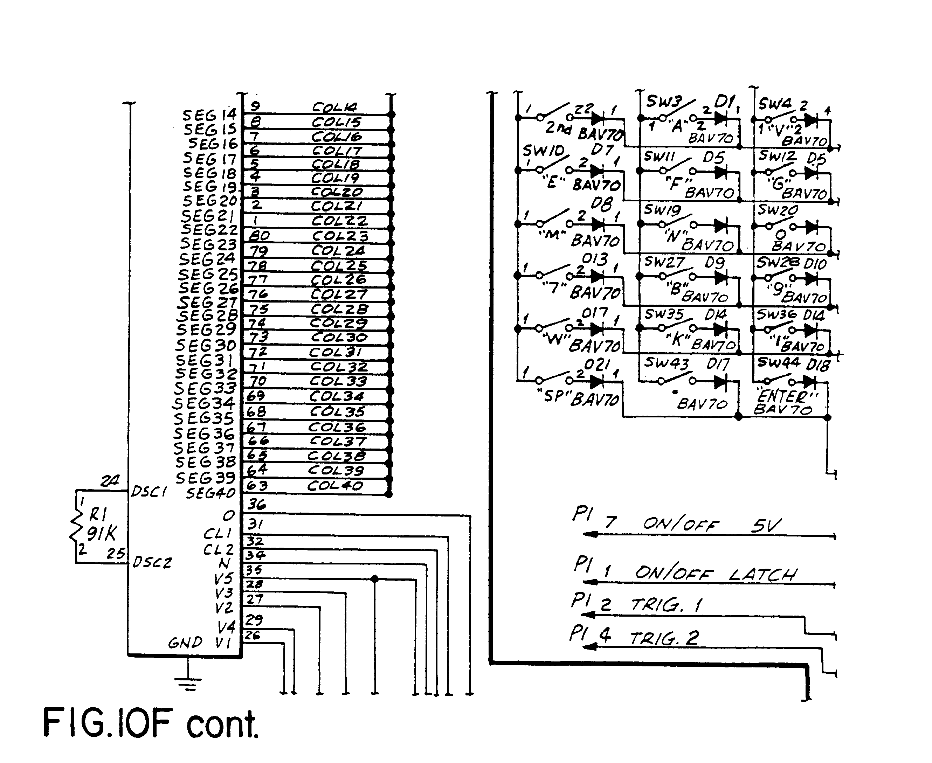

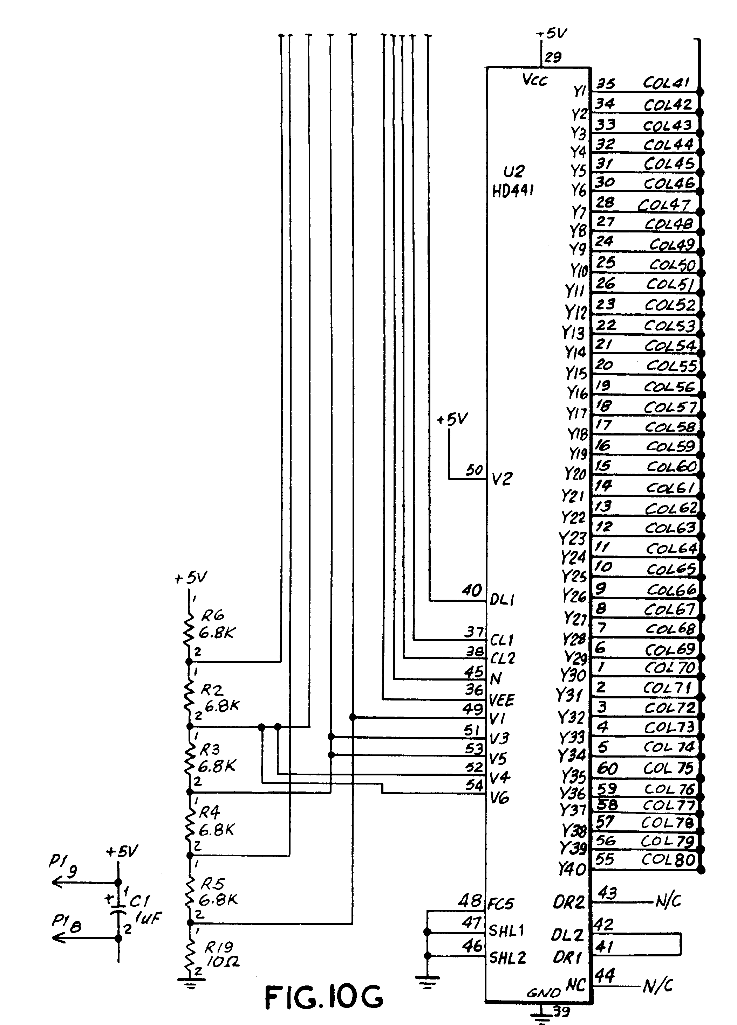

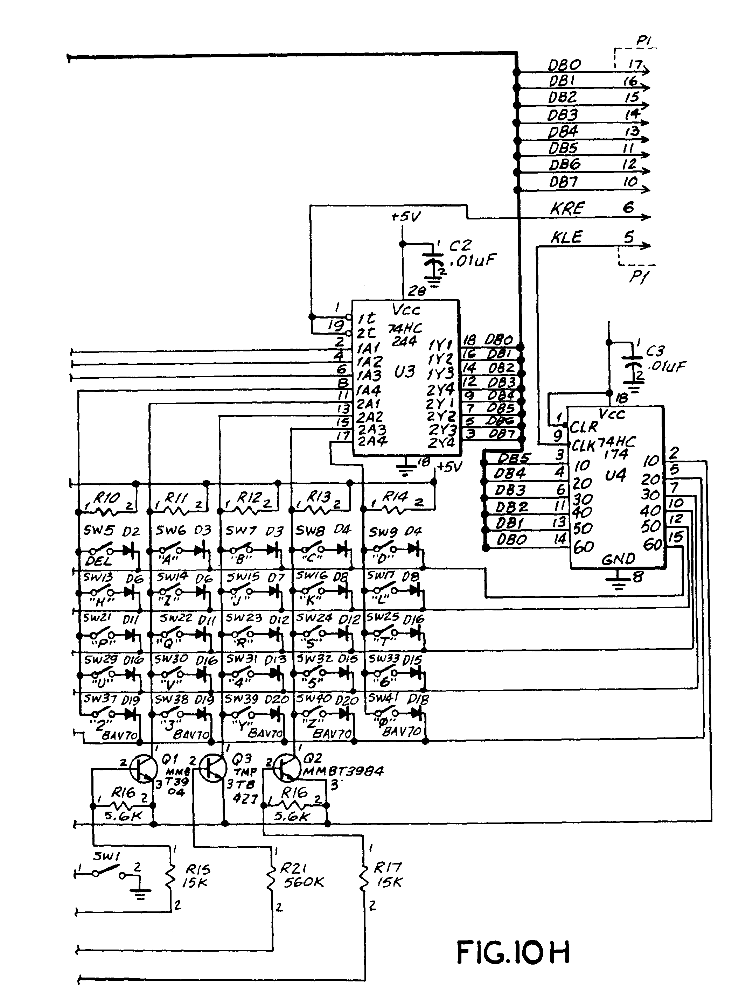

The reflected portion of the laser diode light beam is detected by a detection means 17 for detecting reflected light. Detection means 17 produces an electrical signal representative of the detected light. The reflected light electrical signal is amplified and preferably converted to a digital signal and connected as an input to a data processor 36 located in the second module 30 but shown for purposes of illustration in Fig. 1 in block diagram form outside the second module 30. Data processor 36 includes a microprocessor 37, RAM memory 38 for data or program storage and ROM memory 39 for storage of a fixed operating program for control of microprocessor 37. One suitable microprocessor and control circuit and program is that found in the MEQ-130 product sold by Mars Electronics of 6885 Elm Street, McLean, Virginia 22101-3883 and shown in Figs. 10A-H and in the 39 page object code listing of Appendix A attached hereto. The present invention modifies these circuits and the program of the MEQ-130 product as discussed below.

Microprocessor 37 is also connected to the means 17 for detecting reflected light and producing an electrical signal, as well as, to the keyboard 33 and the display 35. The digital signal is processed and decoded by data processor 36. The decoded data is stored in RAM memory 38. Typically, microprocessor 37 is programmed so that signals are produced to cause data decoded from the digital signal to be displayed on the LCD display 35 and to cause the visual feedback LED 18 to be illuminated and an audio signal to sound indicating to the operator that the data has been scanned successfully.

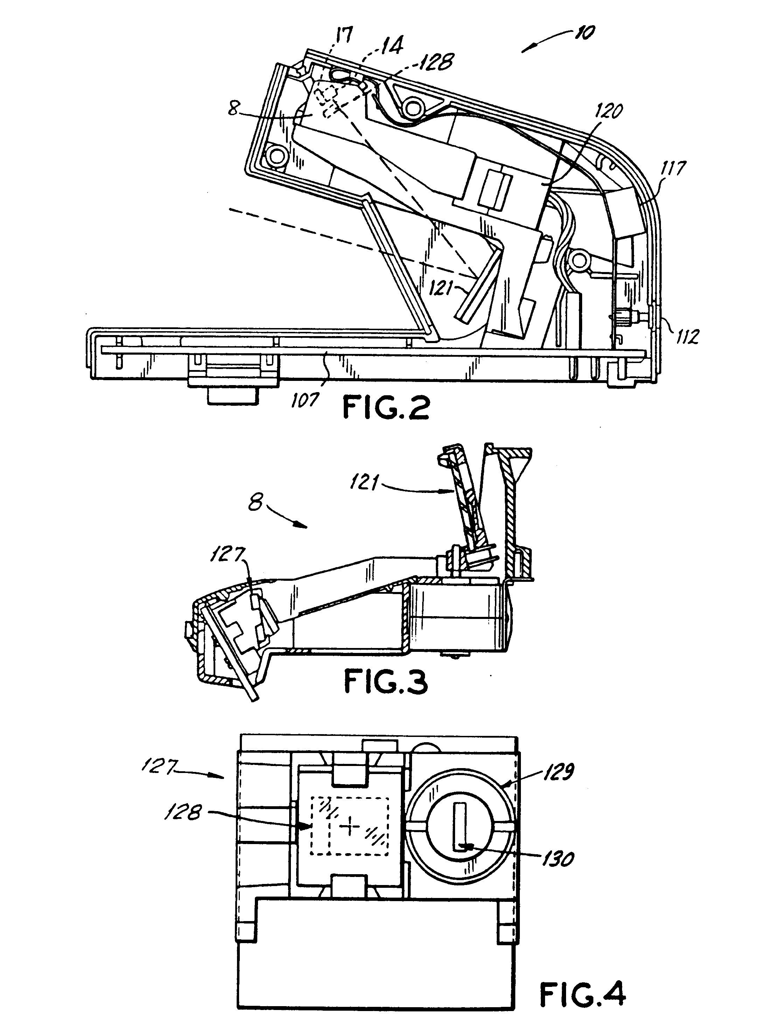

Fig. 2 illustrates further details of the scanner module 10. Scanner module 10 includes a laser scanner assembly 8 which includes the necessary components for generating a scanning laser bar code aiming and reading signal, and for detecting the reflected portion of the reading signal. The scanner module 10 also includes an audible indicator 117 such as a beeper to provide audio feedback, and the visual indicator 112, which is preferably an LED, to provide visual feedback to the operator when the data has been successfully scanned.

Module 10 includes the visible laser diode source 14. The laser diode 14 directs its light output to a scanning mirror 121 which directs light out of the apparatus. The scanning process is activated by a trigger switch 22 (shown in Fig. 1). When properly aimed, a visible spot will appear on the bar code and can be viewed by the operator for a predetermined interval to visually confirm proper aiming. Subsequently, microprocessor 37 causes the mirror driver 120 to drive the scanning mirror 121 to begin the actual process of barcode reading. During scanning, the laser beam is reflected or absorbed by the alternating pattern of bars and spaces in the barcode as the beam moves in an arc back and forth across the barcode located at some distance from the apparatus. A portion of the reflected light returns to the apparatus and is optically directed through an optical bandpass filter 128 to a photodetector 17. Optical detection circuitry produces an analog electrical signal indicative of the portion of the laser beam reflected from the barcode being scanned. This analog signal is processed and converted to a digital electrical signal and transferred to the microprocessor contained in the data module 30 (shown in Fig. 1) for processing. A scanner control circuit board 107 includes circuitry for amplifying and translating the analog electrical signal produced by the photodetector 17 into digital data, and for controlling the scanner assembly 8. This digital data is transferred to the data module 30 where it is processed and stored in memory.

Fig. 3 further illustrates the scan head assembly 8 of Fig. 2. Assembly 8 contains the scanning mirror 121 and a laser diode board assembly 127 upon which the laser diode 14 (shown in Fig. 2) is mounted. Fig. 4 is a top view of the laser diode board assembly 127 illustrating the physical relationship of an optical bandpass filter 128 and the laser diode assembly 129. The light beam emitted from the laser diode passes through an aperture 130 of the laser diode assembly 129 while the reflected light signal is optically filtered by the optical handpass filter 128 as further discussed below.

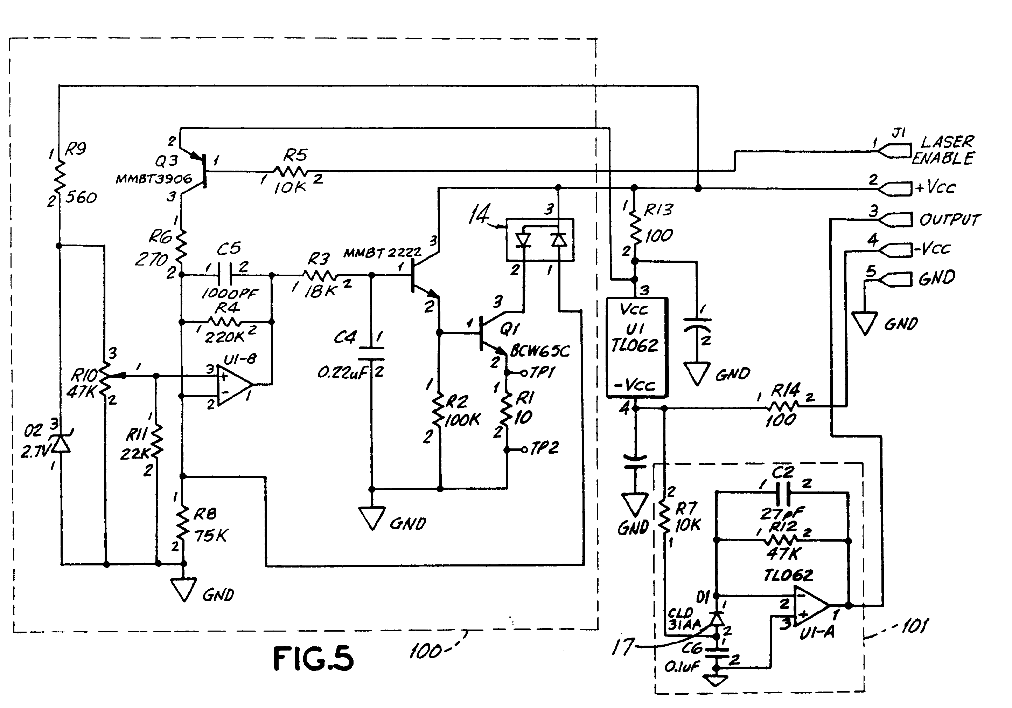

Fig. 5 is a circuit diagram of the laser diode power supply 100, containing the laser diode 14, and the photodiode detector amplifier 101 with associated pin photo diode detector 17.

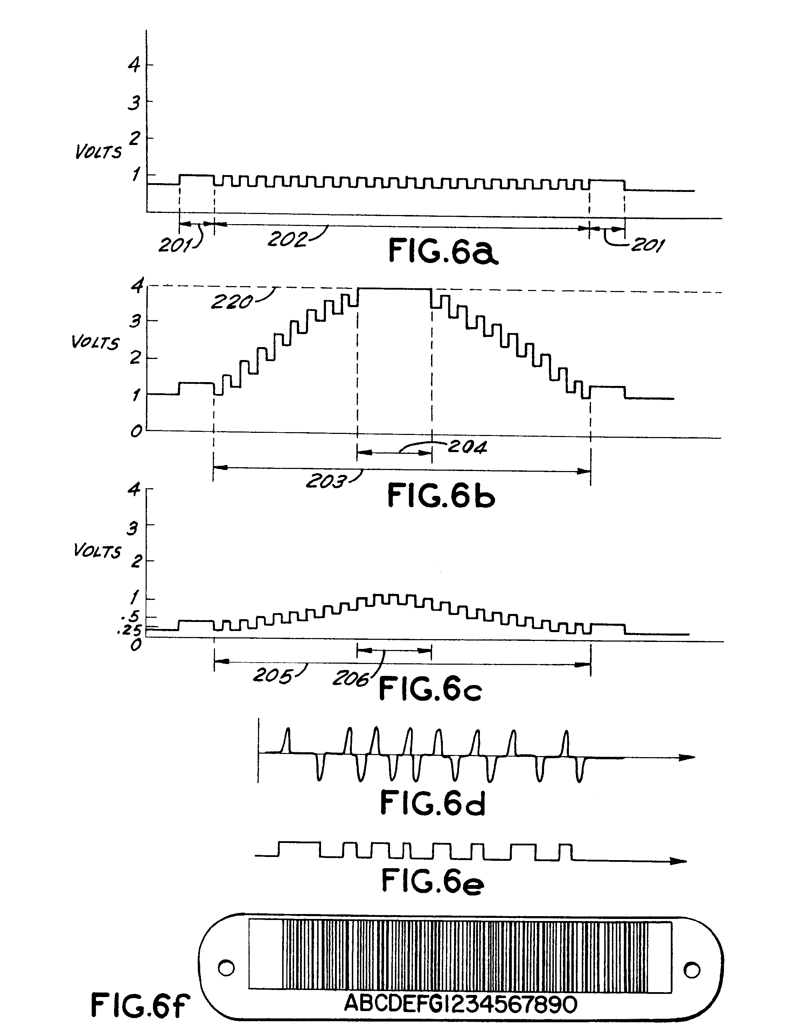

Figs. 6A-E serve to illustrate certain problems encountered when trying to read a barcode in a high glare environment, such as excessive noise in the received signals and saturation of the circuitry designed to process the received signals. For this example, it is assumed the circuitry saturates at 4 volts and begins to clip its output at that level. Figs. 6A-E illustrate how various amplified analog signals indicative of the light reflected from a barcode would appear on an oscilloscope.

Fig. 6A is an idealized representation, not drawn to scale, of a 100 millivolt peak to peak (this peak to peak difference is exaggerated for purposes of illustration) reflected light barcode signal received under optimal environmental conditions in which the barcode was illuminated with an even or flat light source, which can be easily decoded by prior art scanners. The signal of Fig. 6A is made up of margin areas 201 and a barcode data region 202. The margin areas 201 were used by prior art barcode scanners to start and end signal decoding of barcode data.

Fig. 6B depicts the received signal of Fig. 6A with a varying noise signal imposed on it due to excessively bright conditions leading to distortion in area 203 caused by glare from the object scanned. The circuitry designed to receive and process the reflected light signal saturates at a signal strength of 4 volts or more, and this level is depicted as dotted line 220. The noise caused by glare in area 203 includes an area 204 in which data is irretrievably lost due to saturation of the circuitry. Barcode data is lost and consequently cannot be read in area 204. This loss of data is an unacceptable condition.

Fig. 6C depicts the received signal of Fig. 6A also having a varying noise signal imposed on it due to glare in area 205. Although the signal present in area 205 is not ideal, the signal still contains recoverable barcode data throughout including area 206 which was not true of the corresponding area 204 of Fig. 6B where data was lost.

The present invention first increases the chances that the received signal is no worse than that depicted in Fig. 6C, and second accurately and efficiently processes and decodes that signal in most cases. Figs. 6D and 6E, which will be explained further below, illustrates a portion of the barcode signal of Fig. 6C that the circuitry of the present invention has processed under extreme lighting conditions.

In the preferred embodiment, a high power laser diode which emits a light beam having a wavelength of 670 nanometers (nm) and an average power output of 5 milliwatts (mw) is used, for two reasons. First, a stronger reflected light signal will be reflected from the barcode when a higher power laser beam is used which increases the usable signal received and thus requires less amplification and consequently reduces the risk of saturation of the amplification circuitry. Second, the high power output beam is used by the operator to aim the apparatus and can be seen even in bright sunlight.

The present invention utilizes a narrow band optical filter with a wavelength corresponding to that of the laser beam used, such as the filter 128 of Fig. 4, to filter out wavelengths. In the preferred embodiment, a narrow band optical filter of 670 nanometers having a band width of 20 nanometers permits the passage of 670 nanometer wavelength signals while filtering out other undesired wavelengths which would appear as noise. The narrow band optical filter reduces the DC level and glare appearing on the signal by approximately 13 dB. Use of the high power laser results in a higher ratio of desired signal from the barcode with respect to the noise, making it possible to lower the gain of the pre-amplifier circuit used to process the received reflected light signals from the barcode. This noise reduction also helps to prevent saturation of the circuitry and helps to avoid the loss of data illustrated in Fig. 6B and to insure a received signal no worse than that depicted in Fig. 6C, thus preserving all necessary data.

Fig. 6D, not drawn to scale, illustrates an idealized picture of what the output signal of an electronic high pass filter circuit used with the present invention and explained further below, looks like for a portion of the barcode data somewhere in area 205 of Fig. 6C. A differentiated signal is produced so that transitions of the barcode signal appear as pulses as shown in Fig. 6D. Fig. 6E shows the barcode data of Fig. 6D as finally decoded by the present invention.

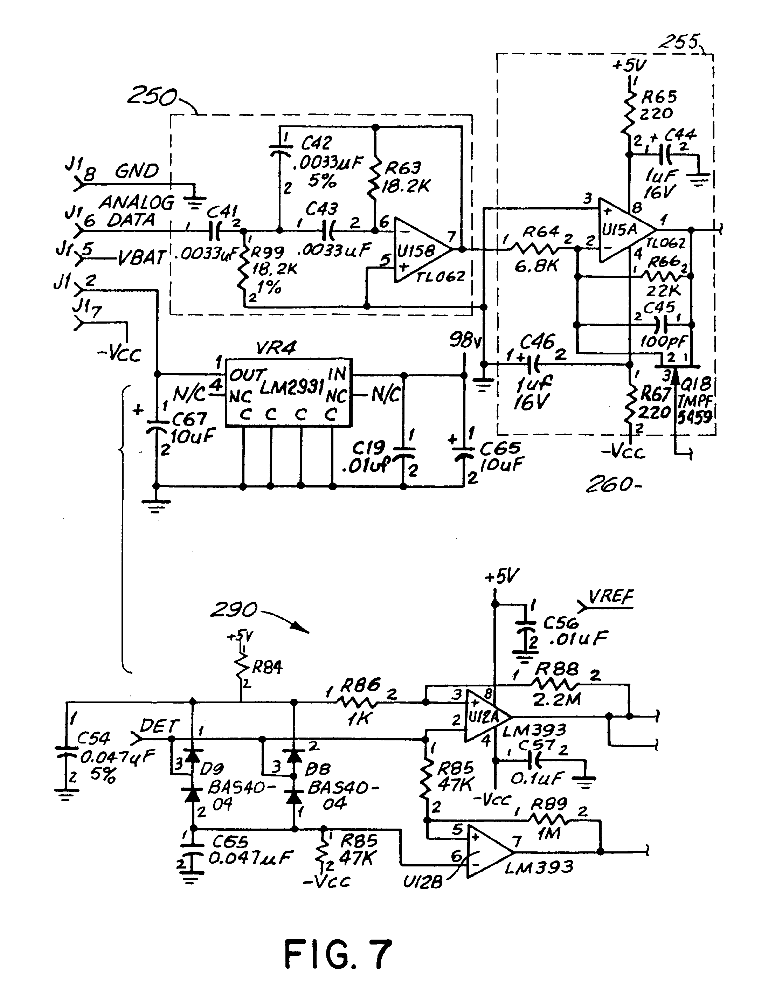

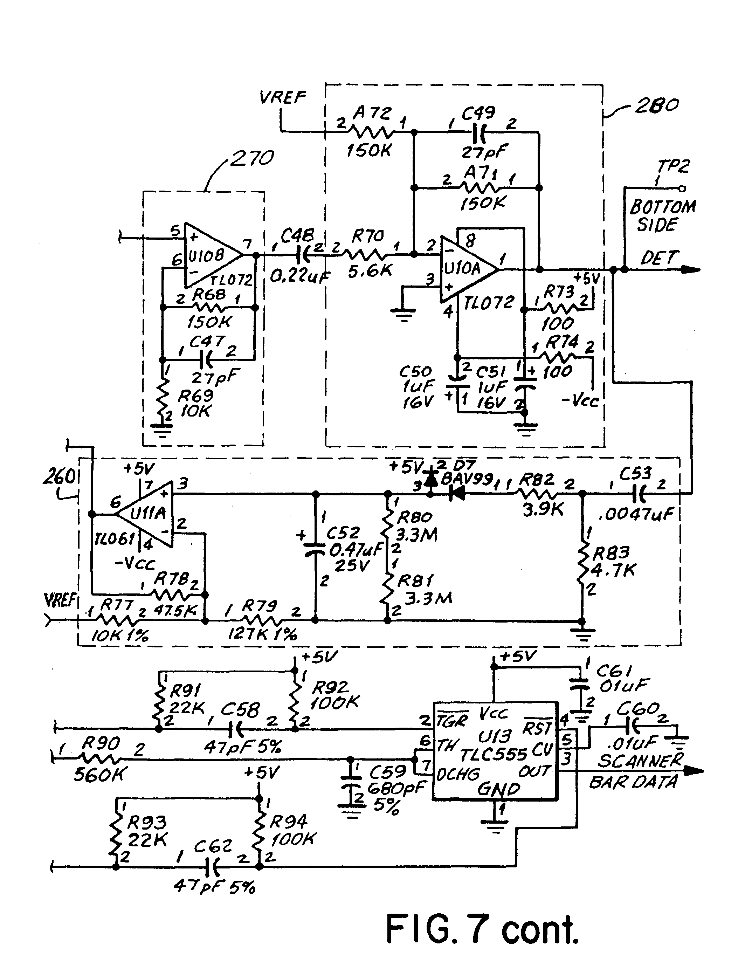

After the reflected barcode signal passes through the optical bandpass filter, it impinges on the diode photodetector 17 of Fig. 5 which generates a current proportional to the intensity of the light received. A current to voltage converter U1-A of the receiver circuit 101 produces an output ranging from 4 to 200 millivolts which is sent to a high pass filter 250 shown in Fig. 7. Referring to Fig. 7, the high pass filter 250, a voltage controlled gain amplifier 255, amplifiers 270 and 280, and data separator circuit 290 are shown for processing the reflected light signal as follows.

High pass filter circuit 250 has a gain of unity and filters out all signals below 2650 Hertz. The high pass filter blocks the DC component of the signal because it is AC coupled due to capacitor C41, which means that ambient light is effectively removed from the signal. The output of comparator U15B is DC coupled to comparator U15A of the voltage controlled gain amplifier 255. The voltage controlled gain amplifier 255 is configured as an inverting amplifier and has a maximum gain of 3.2. A field effect transistor Q18 controls the gain of the voltage controlled gain amplifier circuit 255 and in turn is controlled by the output from comparator U11A of the automatic gain control circuit 260. Capacitor C53 and resistor R83 of automatic gain control circuit 260 form a simple high pass filter with a cut-on frequency of 45 kilohertz (kHz) which permits only high frequency barcode electrical signals to be coupled to the detector circuit. The detector circuit comprises diode D7, resistors R80, R81 and R82, and capacitor C52. Comparator U11A amplifies the voltage across capacitor C52 and adds an offset voltage through resistor R77 to bias field effect transistor Q18 of circuit 255 at the proper operating point.

Amplifier circuit 270 has a gain of 16 which produces an output to capacitor C48 which blocks DC signals. Amplifier circuit 280 has a gain of 26.8 and produces an output to the detector circuit on line DET.

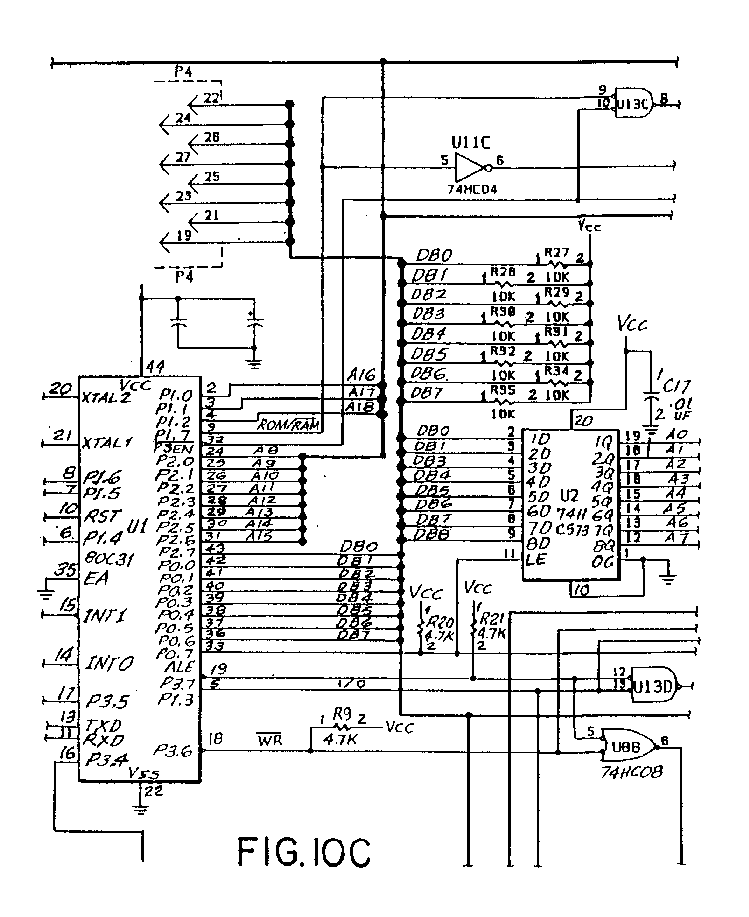

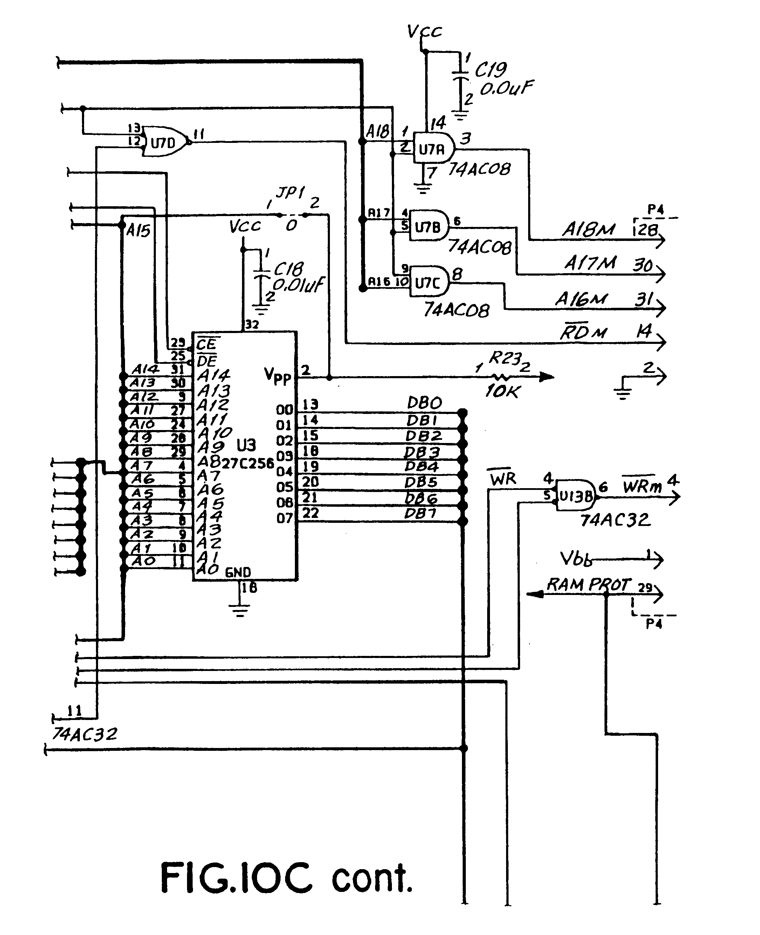

The input to data separator circuit 290 is connected to the DET output of amplifier circuit 280, and diodes D8 and D9 provide positive and negative offsets for the positive and negative transitions of the barcode electrical signals, as illustrated in Fig. 6D. Comparators U12A and U12B, in conjunction with timer U13, of data separator circuit 290, regenerate a square wave from the differentiated signal appearing on input line DET. Figs. 6D and 6E graphically depict the differentiated signal and regenerated square wave signal produced by these circuits. The electrical representation of the barcode signal is output by timer U13 on a line "Scanner Bar Data" which is connected to a microprocessor 80C31 shown in Fig. 10C for decoding.

After being filtered and processed as described above, the reflected barcode signal of Fig. 6D appears to be ready for decoding by the microprocessor. However, the textures of various barcode imprinted surfaces, such as metal or fiberglass, are a source of additional high frequency noise on the received signal which could be incorrectly decoded. Fig. 6F illustrates a barcode which may be imprinted on metal and bolted to the dashboard of a motor vehicle under the windshield.

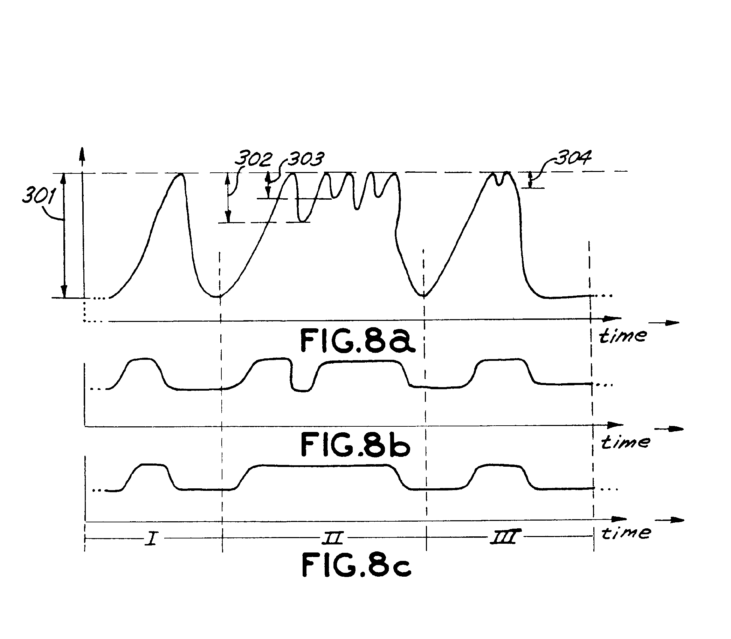

Figs. 8A-C illustrate how the present invention addresses this problem by properly selecting the spot size of the scanning light. Fig. 8A is a partial representation of a reflected signal pulse train scanned from a material such as metal. For illustrative purposes the signal strength depicted in Fig. 8A is approximately 25 millivolts (mv). Zones I, II and III of Figs. 8A-C are of equal duration, and Figs. 8B and 8C depict two different decodes of the partial signal of Fig. 8A.

The metal surfaces for metal-imprinted barcodes, as well as other surfaces, are a potential source of additional high frequency noise which is not screened out by the high-pass filter as that noise is within the band of that filter. Fig. 8A is an idealized, enlarged representation of a portion of a reflected light data signal from a metal surface depicting signal transitions of approximately 10mV (302), 5mV (303) and 2mV (304) of noise imposed on the signal present in zone II as representative of such noise. Fig. 8B illustrates the erroneous decoding of the signal in zone II of 8A by a prior art scanner, as a series of two barcode bars and spaces instead of just one bar or space, as correctly decoded in zone II of Fig. 8C. This is caused by the sensitivity of the apparatus to any changes of 10mV (302) or more, which may be imposed by noise on the signal. Noise less than 10mV (303, 304) is not decoded. Since signal resolution is a function of the spot size of the projected beam, the laser diode scanning source of the present invention is focused to compensate for the noise inherent on metal surfaces and the like so that a larger spot size is used during scanning. The high power laser diode of the present invention is focused so that the spot size actually used to scan the barcode data will be larger than normal and stay larger than normal for a range of scanning distances. The laser diode is focused during manufacture of the scanner so that the spot size of the projected beam is substantially the same size as the smallest feature of the barcode to be scanned. In the preferred embodiment the laser is focused such that a spot size of approximately 202 micrometers (um) exists at a scanning distance of 215 millimeters (mm), a spot size of approximately 226 um is present at a scanning distance of approximately 280 mm and a spot size of approximately 260 um occurs at a scanning distance of 155 mm. The result is that signal transitions occurring due to high frequency noise caused by the texture of the barcode imprinted material, such as the 10 mV example transition in zone II of Fig. 8A, are not recorded so that correct barcode decoding is possible, as depicted in Fig. 8C.

The prior art scanner apparatus disclosed in EP-A-0262943 required the detection of margin bars of as much as 2.5 msecs (ms) in length in order to know when to begin and to stop decoding of the barcode. The prior art scanner apparatus loaded a data buffer with all scanned data and then searched for margin candidate types, defined as a signal level of length of approximately 10 intervals of time, such as margins 201 in Fig. 6A. The barcode was scanned back and forth up to 40 times until a valid margin was found, and then data was decoded starting with the first signal after the beginning margin and ending with the last signal before the ending margin. These margin areas are seen as low frequency noise which is filtered out by the high-pass filter of the present invention, thus making it necessary to alter the way in which processing of the scanned barcode data is initiated and ended.

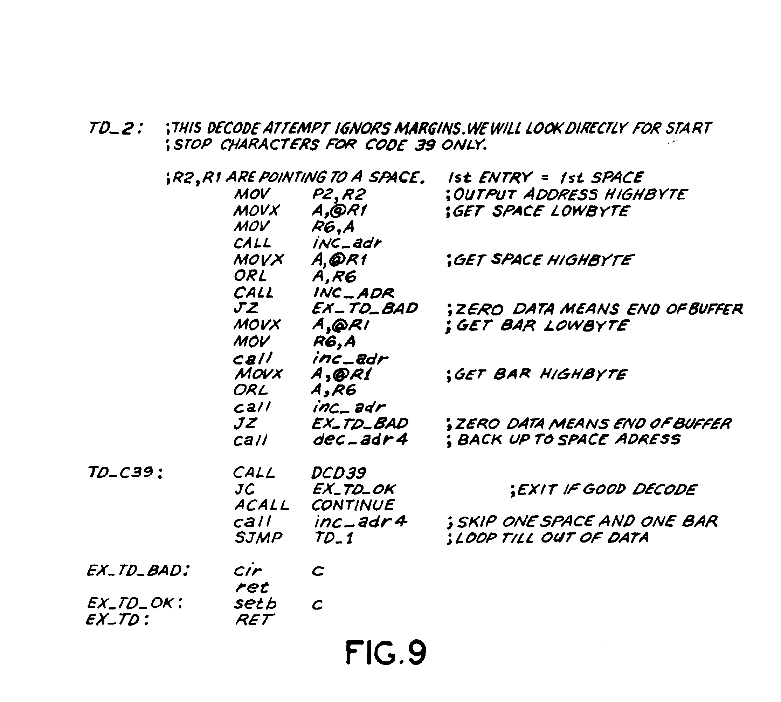

Fig. 9 is a software listing of the code used to initiate marginless decoding of scanned barcode data such as data encoded in Code 39 format which includes start and stop characters. Start and stop characters are searched for by the microprocessor in the data received from each scan. Up to 40 scans of the barcode data occur while valid start and stop characters are searched for after which scanning is stopped if no valid characters are found. A nine element pattern of five bars and four spaces are searched for by the microprocessor by shifting through the signal data one signal at a time. It should be understood that this software routine would work for various other types of barcode data employing start and stop characters with only minor alteration.

Figs. 10A-H are schematic diagrams of a control system of the latest embodiment of the invention at the time the patent application was prepared. Further details of this embodiment are disclosed in the object code listing submitted herewith as Appendix A.

The present invention provides a portable, integrated scanning apparatus capable of accurate barcode scanning under severe environmental conditions, including scanning a barcode imprinted on metal or other reflective materials in bright sunlight. The present invention is also capable of scanning a barcode through glass, plastic or other clear materials, making it possible to scan a motor vehicle identification number imprinted in barcode format on metal, through a windshield, in bright Sunlight.

"APPENDIX A"

:09000000020137200E690250D5FF
:03000B000254E7B5
:0E001300300EF0304328805420B402D29932CF
:10002300120112C0E0C090C0F0C0D0C082C08312E1
:1000330053C8C0E05390F010980261BE613CF56272
:10004300E4108F14C58BF0A3E4C58DF0A3E58354AE
:10005300074561F583E56232F58BF58D14F0A3F066
:10006300A3E58354074561F583E56232F562E41045
:100073008D14C58AF0A3E4C58CF0A3E58354074521A
:1000830061F583E56232F58AF58C14F0A3F0A3E5FC
:100093008354074561F583E56232D29753D0E7D2A3
:1000A300097D007C00C2D57F04EF14F8310BF631D3
:1000B30004DFF6E87002D2D5EB5407FBE86021E5D4
:1000C3009054F844304BF5908AA0310BF33104E996
:1000D3002401F9EA3400FAEB34005407FB1880DCFE
:1000E300310BFF310BFEED6F7014EC6E701030D5D9
:1000F300B01257E1C209C20C7401312F21530263BC
:10010300FD2CFCED3400FD222010FD1264FD22C005
:100113008 3C082C0E0C090907F855390F0E09094BC
:10012300091F0D090D0E0D082D08322E45390F0902D
:10013300C598F0224390FF438780C2960000D29671
:10014300312E75816F74FF1261D47520021261DD47
:10015300E4F5D078FFF6D8FD75816F1257CA90C5C4
:100163009 8E0700450024105E4F5D078FFF6D8FD1D
:1001730075816FE4FFF5A0F85390F042907455F247
:10018300E2B455080FB2A7EFC31380EC5390F0907D
:10019300C598E0C0E0700C900000E493F0A3E58301
:1001A30030E7F7909496EFF01257E11263347588B5
:1001B300050758921758AFF758CED90A001D0E0C040
:1001C300E06004E020E7027422F0F5F01265AE75FA
:1001D300985075A81675B810752002D208D210D29F
:1001E30012D21FC205D21D751EFF756700D2019082
:1001F300946D7406F0A3740DF0125705D0E07002ED
:10020300215E5390F012625B12625B7406126413F8
:10021300740D1264131261F5125462A2E4920B502E
:100223001030E10D74FE1261D41261E830E0022156
:100233006B125759C0E0C0D0C082C083C090C0F0D9
:10024300C2AFC2955390F020410A125462C20320F8
:10025300E502D2031261DD3112907F76E0F5F012F0
:10026300062F11262F1909496E0C313400114F560B9
:10027300D0F0D090D083D082D0D0D0E0C297300CD1
:100283003 3126448C083C082C0E0C0905390F090A2
:100293007FFCE0D21E7002C21ED090D0E0D082D08C
:1002A30083D295C28A3094030263DAD299C21DD2F3
:1002B300AFD28A2275816F12546230E708907FFCB7
:1002C3007401F0D21E90C59D7451F090766812634C
:1002D300BF75F00212620575F04012627190767874
:1002E3001263C290A001E0B4220490C599F0D28AAF
:1002F300710AD2AAD295D2AF127D6EA2B09244D225
:100303000011 27D8702043F53A8D2D202D2031261A5
:10031300DDA29592207F227ED91254C15007DEF9C7
:10032300DFF5D38001C3907F7EE092E79243F053E1
:100333008 8F5D220D2AA027D7DC24090 94937401A5
:10034300F0E59930140F20070730D00774A3800518

```
:1003530030D0F9C2E7F5F0301318204515B4110B6E
:10036300C219301D52C21DD299804CB41304D21944
:100373008045E55804B4FF01E4B559028013C5581C
:100383002460F582E43491F583E5F0F0101002D295
:1003930017201A23E559C39558500224FFC394101C
:1003A3005015201307D2001261DD8009D21C301DC5
:1003B30004C21DD299D21AC2378124C29990949350
:1003C3007401F0D2011261DD101B5C101C5D10463C
:1003D30050E55BB55A028057C24020451820130EE2
:1003E30030B412D242D219D21D1242C58033301911
:1003F3004D21D802CC219C21DC242E55B245FF5E5
:1004030082E43492F583E55B04B4FF01E4F55BC257
:10041300115390F0E0301407A2D020070792E7F5BC
:1004230009902564CB380F6741180EA741380E6D2B5
:0C0433001DE5676005C2011261DD80E577
:1050D5003094041263C732C0E0C090C0F0C0D0C0A5
:1050E50082C0835390F01253C8C0E0C020C2AF53B2
:1050F500D0E7300904C2A86147D200C2051261DDBC
:1051050021B5C08CC08AC088C2A8C0A875A800C037
:10511500044C005C006C007719590C597E0B40200AC
:10512500E4F09080024005F4F0A3F0A3E58354F881
:10513500F56175885575A88512565DA2B292D57C24
:105145000A7F027EFA7D7BA2B282D550060000005E
:105155000000800FA2B272D5B34008A2B292D5DC028C
:105165008029209421DDE0DEDCDFD8C2AFC2D5C2C4
:105175000ED007D006D005D004D0A8D088D08AD0CC
:105185008C20D54961471263C780E0A2B27F3F7E7C
:105195006420B20440F5800450F100002094E7DE5D
:1051A500F0DFECC2AF71B0D2D580C41263C76147DE
:1051B50075A89090048FD246D2372094EE204603EE
:1051C500030370512737F50F2C24675A8567438C041
:1051D500E07454C0E0D20C1257051264199094992EA
:1051E500E004FBC203D2021261DD91DEC203C202FA
:1051F5001261DD91DE74DF1261D47905F5F012617B
:10520500E8B5F0F6D9F630E602DBD8907F7D782256
:10521500E0F6A308E0F675816F90C59BE0A2E092E9
:10522500026301F0A7A80790271F5503341DC718C82
:10523500C2AF908002E58354F8F561D2AF75885509
:1052450075899975A800D202D203300F02C20312E4
:10525500061DDE4F52DF52EF525A2959220918A5074
:105265005F90800212565D91C14004052EB2200563
:105275002D918A504BC2AF908802E58354F8F561B1
:10528500D2AFA295922A7A80790271F59229715648
:10529500404591C14004052EB220052D918A50202C
:1052A500908002E58354F8F561A29592287A887971
:1052B5000271F5922B7156401EE52DB4280040A7CA
:1052C500091D27403916B500A74019146745A9146B8
:1052D500802F126704802A91D2E52C2403916B500C
:1052E500F17A9079408AA0E52CFC049146E52F24BB
:1052F500409146E39146124E1BDCF8200A031266E4
:10530500ECC20E90800271C290880271C290949393
:10531500782C7F03E6F0A308DFFA909498E525F052
:105325009087FEE55EF0A3E521F012575912644817
:10533500C240D28A9087FEE0F55EA3E0F521D0E079
```

EP 0 481 606 A2

:10534500D0E0D0201254D2C28B75A8D6D29902567D
:105355004C12543A400A74FF8AA0F3148BA0F2222F
:10536500301C138AA0E3F5F08BA0E2B5F00A08091A
:10537500DCF11874FFF2D32212543A8AA0E38BA011
:10538500F20809DCF6C32290880071C2F58BF58D11
:1053950009080071C2F58AF58CD20E2220B20C10D5
:1053A5008F15E58BF0A3E58DF08011108D09E58A49
:1053B500F0A3E58CF0800574FFF0A3F0A3E4F0A35F
:1053C500F0A32274FF10A002C2E010A102C2E110F6
:1053D500A202C2E210A302C2E310A402C2E410A515
:1053E50002C2E510A602C2E610A702C2E7F5A02296
:1053F5008AA0E3FE124E1BE34E124E1B602C209436
:105405002D8AA0E3FE124E1BE34E124E1B601BE3DA
:10541500FE124E1BE34E124E1B600F124E6C1250C5
:105425009A4009917B124E2D80D4C322D322C2AF5C
:105435001263DA61477A9079407B907880E52CFC9D
:1054450022C208C0E0E55E2400F582E43491F583CC
:10545500D0E0F0E55E04B44001E4F55E227420F48A
:105465001261D40261E8FCE55FC3955E60025002FB
:105475002440C39CB322201F0BE52CC39404400495
:1054850015811581227F327E612094A291C1500839
:10549500DEF7DFF3C2AFC322C2AF75880071A1206A
:1054A5000D05916230E6EDE4F58AF58CF58BF58D09
:1054B50075885575A885A2959220D322A29582203C
:1054C5004006A2957220B3220000000022C2AF2040
:1054D5004304C202C2030261DD7A6479FAD9FEDAB5
:1054E500FA22C0E0C090C0F0C0D0C082C083125381
:1054F500C8C0E043D018758AFF758CED5390F03025
:105505009402C11BEEB4FF0DEF7002740614FFD1B7
:105515005EF41261D47905F5F01261E8B5F0F6D9BB
:10552500F6EFD168EFB4053C20413953D0E7E020D0
:10553500E63230F607D28BD2E6F0802830E515202A
:10554500F522304305127D62801AD2033002121211
:105555007D87801030F50D304305127D7D8005C2B5
:1055650003D261DD43D018E0F455F07007E5F0F063
:105575007EFF803079FF030930E7FBEFC40349CE96
:105585006E60027D02DD1DBE2C05126406C14CE96C
:10559500D15EF9E049F0E4CEFCD184907F79C2E791
:1055A5006001E0FBEB601414FB7010ECF9D1745052
:1055B5000AECD1846005907F7AE0FB909490E060DE
:1055C5000914F07005C2051261DD30431690C597C8
:1055D50030030CE020B30804D2A87006148003E45D
:1055E500C2A8F0DA627AC853D0E7909491E06007D8
:1055F50014F0700312636790BCBAE0600214F030D7
:105605000421130B40A700C1241EF1265958002D236
:1056150099C2423094081263C7C28B02564C9094CB
:1056250097E06023F5F0909493E06008E4F0907FB4
:105635006AE08003E5F014909497F0700A75F00223
:10564500C203C241127D87D0A0D083D082D0D0D0F2
:10565500F0D090439030D0E032540704F9748023A1
:10566500D9FD225407247FF582E4347FF58322F99E
:1056750023C4D168E9D15EF9E059C36001D3229012
:105685007FCB301F03907F9BEC2582F582E4358329
:105695000F583E0F5F0907FFBE0B5F00A909492E099

```
:1056A500D1745017D227E5F0B48007909492ECF0AE
:1056B500B21FE5F0603320E702D21FC2E7602A126D
:1056C5000112C240C212F5F0E55C04B42001E4B554
:1056D5005D0974051266AEE5F0800EC55C2440F5E3
:1056E50082E43491F583E5F0F0C0F090946EE0A289
:1056F5001F92E0B392E1F5F0126239D0F0E5F022A5
:10570500C0D0C0E0C090C082C08353D0E7C0009035
:10571500935E5390F078FFE6F0A3D8FBE588F0A3FD
:10572500E589F0A3E58AF0A3E58BF0A3E58CF0A36A
:10573500E58DF0A3E598F0A31253C8F0A3E5A8F012
:10574500A3E5B044FFF0A3E5B8F0A3E5F0F0A3E5C9
:1057550081F0805C5390F090946BD0E0F0A3D0E0A2
:10576500F053D0E790935E78FFE0F6A3D8FBE0F521
:1057750088A3E0F589A3E0F58AA3E0F58BA3E0F51E
:105785008CA3E0F58DA3E0F598A3E0F5A0A3E0C216
:10579500E7F5A8A3E0F5B0A3E0F5B8A3E0F5F0A31D
:1057A500E0F581C39406F890946BE0F6A318E0F653
:1057B500D000D083D082A297D0E092E74430F59014
:1057C500D0E0D0D02278031257F0500CA3E06D70D2
:1057D50007A3E06E6004D8EFC322D3221257F0501E
:1057E50008A3EDF0A3EEF0D322C32290000053905E
:1057F500F07D007E00E0B4A504DB04D3227B062DFA
:0C580500FDE43EFEA3E58330E7EBC32288
:100F900080474F544F81524553554D4582524553DA
:100FA000544F524583474F5355428455534949E47FA
:100FB000854F4E455252864F4E4241528749468890
:100FC0005448454E89454C53458A464F528B544FA1
:100FD0008C4E4558548D57454E448E5748494C4584
:100FE0008F524541449052454391575249544459 23E
:100FF0005052494E5493494E50555424945245549E
:101000005552 4E95424545 50964C4F434154459755
:1010100052455752495445984F50454E99434C4F6D
:1010200053459A53544F509B444154419C53494714
:101030004E414C9D44494D9E4D4F44459F53544510
:1010400050A043414C CA1454E44A24C4554A341B1
:1010500053A4424152434F444524A5434C53A65305
:1010600059535041524D53A7444159A85645522413
:10107000AA57414E44AB4F5054494353AC4C4F4395
:101080004BAD554E4C4F434BB0434852 224B153493
:101090005224B2415343B356414CB44E4F54B54918
:1010A0004E54B6414253B7494E535452B84C454E34
:1010B000B95045454BBA504F4B45BB454F46BC4CCC
:1010C0004F43BD4C4F46BE535452494E4724BF5325
:1010D000474EC7434D444B4559C8524E554DC949DB
:1010E0004E50CA4F5554CB4C4142454C24CC4F4FEE8
:1010F000434F4DD052554ED1434C454152 24C4FA7
:101100004144D3444952 2D4434F4E54D54B494C4C 9F
:10111000D64E4557D74C495354D84445444C455 4571
:10112000D94441544452 2DA54494D4524DB455252B3
:10113000DC45524CDD494E4B455924DE46524545 6F
:101140005350DF46494C4524 E0414E44E14F52E2C2
:10115000584F52E32AE43DE53EE63CE72FE82BE911
:101160002DEA28EB29EC2CED3AEE3BEF23F03E3D47
:10117000F13C3DF23C3EF32A2AF5F6F7F8F9FAFB8A
```

```
:03118000FCFDFE75
:1007B30015928015AE80164F8014EC80228C0016A3
:1007C300148016AD801F4A80228C001F9180346AEA
:1007D30080228C00351A8035E380359480408280F6
:1007E300228C0029A9807AD28012C880150F80211B
:1007F300C780212A802A1880118380126C8020F4FC
:100803008021CD8021A0801E4E80215380228C0028
:100813003088802102801E6F80228C00720D03219C
:10082300EC8049E4807CF1037CFB03228C007D0B8C
:10083300807D10807DED807E3D80228C00228C00A7
:1008430028C01528CB1528AF1528F21571E11570AE
:10085300F61570EE1572B51528BA1573181530F71D
:1008630080729015728C15721F15294715713315F7
:10087300228C00228C00228C00228C00228C0022ED
:100883008C00228C001DB8031DE6156FD1036FFC8D
:1008930080702B03705380228C00228C00228C00EA
:1008A300333C80327580688C807892803377805FA8
:1008B300FC8032198031228031C0801C83801C1A55
:1008C300801DE1031DDA031DA7031E1D0329631504
:1008D30071CF2171D82171E5210A4C51716331716
:1008E3004D31715E310A8F512BA272093F7200287C
:1008F30016228C27228C27228C277E7F80228C0035
:10090300716F31717331716931228C00228C002235
:100913008C00224C801E6F842EF7042F3604224550
:100923008C00226F80225F80226C80228C00C8
:10043F00914A2020029176B12380F75390F890953E
:10044F0000E4FFF0A3DFFC90C59EF0909497F0902E
:10045F00C59C7405F0751505755549C1232E975F03D
:10046F0000127E7A023F9F20214B30273512706099
:10047F0090077CF11612663A12706F12660960FBD4
:10048F00B40D07126448C2278049B404028003B434
:10049F0003E9301E05B403E38003B404DE1264489D
:1004AF008013202310202207302428F18C7024126F
:1004BF00734FB4F51E91F41025063021052029133 2
:1004CF00D1A8201E14124AB320200EC2211027D803
:1004DF001023D512390030208E1233915324105 32C
:1004EF0025F8D2202212706079CE12173820211DE4
:1004FF00900773F11620270F20230C12706F1270C4
:10050F0060A3123A0E8004AA40A841F10412706F42
:10051F0085256922539 0F890C59EE0F50E909700BF
:10052F00600390960075F03E1264A6751100C236F6
:10053F001266097002A1F5B4120E90960074D0F0F5
:10054F0074FDA3F01582C14FC083C082B41A0C1280
:10055F00338E90C59EE4F0F50E806FB40F213044BA
:10056F006692003669094 97E0600274FFF4127D5740
:10057F0060081266EC127D6E8050127D87804BB43E
:10058F00130512030A8043B4160A907688D16712B6
:10059F004B518033B4183390C599E0F95407C9C44F
:1005AF00540FFA126419900690D16AE9D178742C1D
:1005BF00D18BEAD17812660960FBB40D13EAC449F6
:1005CF00C2E3F5F01265AE126448D082D083801674
:1005DF00B41808B9060279FF0980CBB419D7BA0F3E
:1005EF00027AFF0A80C0301002A13F1264FDC50ECF
:1005FF006019AF11BF0008850E11850E0F80E7C57A
```

```
:10060F000EF0A3D50FE074FDF08024C50ED19560D8
:10061F00D5B40A028007E58270CC04800E7A9778F1
:10062F0000909600E4F01222916004F12AA1239029
:10063F009600E0B4F5061217E270F022B4FD012225
:10064F007C00C227123900C2271021073020082052
:10065F003AEE22D1A8D220221264191261F575F058
:10066F000041262717405050262AAB40A00400C24F6E7
:10067F00C0E075F031126288D0E02430F5F00262EC
:10068F00884D4F444520B408028003B47F08E582AB
:10069F0060031582E422F0A3221270607B97790029
:1006AF00302005900761800390076AD1F77A00A880
:1006BF0045120EFB20200C90076FD1F7AA46A847D2
:1006CF00120EFB8BA07420F309742AF309E4F39044
:1006DF007FFCE0FFB403028005F121BF0206127414
:1006EF009B12742412706F2275A097E0B43F012201
:1006FF00F309A380F31275C2742012735F08742A72
:10070F00F208E4F20274B31264191261F57F010268
:10071F0074831264191261F50274B3C0E0302D1A9C
:10072F0012749BE89400FD600875F02D1264A6DD2D
:10073F00F875F0581264A61274227F0090076112A8
:10074F0074837A00D0001275C21274C112749BC2E6
:10075F002D222A204552524F52203F2A2045203F1A
:10076F00204C203F2A20425245414B203F20205011
:10077F007265737320454E544552202037F127060AE
:10078F00123A02B4F51A123A0E5390F890BCBBE02D
:10079F00F9A309E0FFA3E0FEA312740F6002D9F3DF
:0407AF0012706F2233
:10229100858113C0E0C235C239E4F510F511F5129C
:1022A100D0E07002717BD23471D585830C85820BAD
:1022B100FF302B0B203504B1A180ED717B80E990BB
:1022C1001152E4A393FEA3E493B50704B12F80D880
:1022D100BEEFEFBF2004D14780CEBF2704D11880C5
:1022E1000ABF2204B1E080C0BF0D58E510601BC3D6
:1022F100E89400F9C002C000188AA0E2B4290308DA
:102301008045D9F4D000D002803D912A850C838587
:102311000B827160909600E0B4F50EA3A3A3A3E530
:102321001124FCF01273878005E51112738774FD87
:10233100F0E4227401802474028020740380 1A74F2
:10234100048016740580127406800E7407800A7466
:102351000880067409800274 0AD22D85138122E552
:102361001 2127397E0B4F5028003B4F608A3E512E4
:1023710014F0027387E512027387E475F00AF9FB22
:10238100C2318AA0E2120F77500C24D0120ECF4036
:102391003471C80880ECB42E0302233CC0E0E94B41
:1023A1007010203120D0E0B420030880D5303514DE
:1023B100C0E074F5F186E4F186EBF186E9F186E49B
:1023C100F186D0E0228090203507EB497003D231AD
:1023D10022C231227900C22B8AA0E2B461004007F7
:1023E100B47B005002C2E5F2B42409B9001C0223F7
:1023F1004C022344B430004027B45B00502AB43A65
:1024010000 4007B441005002801E09C0E0E924FEEB
:10241100D0E04009B43A005004D22B800B0880B8B8
:10242100B90005B42E02D22B22E9700122E924F76A
:10243100500C6002819B188AA0E2B42461088908CB
```

13

EP 0 481 606 A2

:10244100790091E1900F90E493FDA3C22C8AA0E260
:10245100B42405D94209D22C08D9F291E18AA0E22B
:10246100FBE493B5033BA308D9F3E49330E732EDE2
:10247100B48904C235C2398D57F180B4A004D23970
:102481008051B4D900504CB4D7005007B4840050E7
:1024910042D239D235803C02234C041273A5022367
:1024A10040E49320E703A380F8B4E32191E12039CC
:1024B10006303412BF3A0F1227E0E557B4A002C22A
:1024C100397557FC800D91EC7557F78006FDA39186
:1024D100E1808A85830C85820B79008908C23422C8
:1024E100C3E50899F9E899F8A9082290A0437B0966
:1024F100C007C0067FB77EB275F00C1274CBD00650
:10250100D007700574F7022525127529E054F030C3
:102511002C02D2E0F074F702251BA3A3A3C0E07440
:10252100FDF0D0E0F180E50AF186E509E186912A26
:1025310008BF2A088AA0E2B42A02613CBEE7004033
:10254100280298AA0E2B43C004021B43F00501C23
:10255100B5070302233C085001CFBF3D0474F0E1ED
:1025610080B43D0474F1E18074F2E180E510BF288C
:10257100022401BF290424FF5022BF3A1A7018F522
:1025810010850C83850B827160E4C235C239F51266
:1025910074F6F180E4E186F510EEE180180223483B
:1025A10088828A83120C78702F12737FE0B4200224
:1025B1008001A3AA83A88274F8F180750806C0027D
:1025C100C0007A95A8158AA0E2F18618D508F7D03F
:1025D10000D002C239020968A882AA83022350E905
:1025E100702F74F9F18085830C85820BA3088AA072
:1025F100E2B42202800AB40D028019F1860980ED4D
:1026010085830885820 9E9F180850982850883082 7
:102611002202233C022354912A790074FAF1808525
:10262100830C85820BA3088AA0E2B40D028005F118
:10263100860980F2858308858209E9F18085090B85
:1026410085080C790022912A79008AA0E2B420043D
:1026510090880F674FBF180E9E18612734FA3B497
:10266100F52D1227BD12734FF5F0A312734FA3B4CA
:10267100F509E070591227BDA380F0B4FD00504E5A
:10268100FE74F6B5060C743A12735F08A380DCFE83
:10269100802FBEF704D1FE80D2BEF804F10880CBB2
:1026A100BEF904F13C80C4BEFA04F15A80BDBEFB00
:1026B10004F17280B6BEFC04F10380AFD1D5F47091
:1026C100AA742112735F08EE12735F08C16C127451
:1026D100C102737FC083C0825390F8900F8FA3E033
:1026E10030E7FBB4F50474FF800EB506F1A3E020DA
:1026F100E7068AA0F20880F5D082D083227D090204
:10270100279B7D0802279B750806C004C0008A0C20
:10271100880B1275ED751700120D46D00075A09744
:10272100E2B42010150BE50BC398FCA90009E3F2F4
:102731000908DCFAD004AA0CA80B22742212735FD8
:102741000812734FA3FD600A12734F12735FA3083F
:10275100DDF6742212735F0822742712735F081268
:10276100734FA3FD600A12734F12735FA308DDF666
:10277100022212734FA3FD742012735F08DDFA2285C4
:10278100B82850C83C0E0051174FDB51100400773
:10279100D0E0F00512A32202233412734FFEA3E00E

```
:1027A100A3127060F5828E835390F8E0B42002800A
:1027B1000712735FA308DDF312706F22A312734F28
:1027C100F509A3E0F508A3C083C0828A038801A8A4
:1027D10008AA09120EFB89008B02D082D0832290B5
:1027E100BE007B08C007C0067FC57E4E75F00B1288
:1027F10074CBD006D007700574FC0225251275290B
:0528010074FC02251B20
:107348005390F88AA0E2227157E022715780F453D3
:1073580090F8CC4290CC225390F88AA0F222715730
:10736800F022715780F4C0E074017191D0E022C01E
:10737800E0740171A580F5C0E07401719780ED2576
:1073880082F582E43583F5832228F8E43AFA22C5A7
:1073980082C39582F582E5839400F58322C8C39859
:1073A800C8E4CA9ACA228AA0E0F2EE65827005EFA4
:1073B8006583600FE582700215831582E870011AF3
:1073C8001880E322C082C083C0905390F890A03305
:1073D800EC237187E0C0E0A3E0F582D0839173715C
:1073E800878583088582D9D090D083D0828AA0E0DF
:1073F800F2E50965827006E50865836009E804F826
:1074080070010AA380E722C3EF9A400B7006EE983A
:10741800400560057402227401229124740D124201
:107428007B740A02427B0C90000022714FB4FD036A
:1074380074FF22B4FE04912E80F1A3A3E0FFA3E021
:10744800FEA3E0F5F0910FBD0102800B600920E179
:1074580006E5F0917A80D4C0E074047197D0E022F8
:1074680074047187714FFB74046197740471870207
:10747800734F7187714FB4FEE6812E5390F8E0B4D4
:107488003F0122F5F0BF000512427B80031262889B
:10749800A380EB91ACE0600BC0E012427BA3D0E08C
:1074A800B40AF2225390F89097002291ACE0600859
:1074B800F5F0126288A380F522740D715F08740AD2
:1074C800F20822A90885820985830A8AA0E2FCE0DD
:1074D800B4FD02803AB50410A3716ED9EEEB95089D
:1074E8006037E0B420028031850A83850982E5F09F
:1074F8007187C3E50899F9E899F8C002C000AA8322
:10750800A882910FD000D002601120E00E80B474E0
:10751800001858300A8582098001E42274028513812A
:107528002A9088AA0E2F0A3716ED9F7EB9508604A
:107538007F97420F0A3D9FC74F0F022C3E582980F
:10754800FDE5839A60027DFF22E8C39EF8EA9FFA70
:1075580022EEC398FEEF9AFF4E22E58228F582E5D7
:10756800833AF58322EE28FEEF3AFF22E582850A68
:10757800F0A4C0F0C0E0E583850AF0A4D082D083EF
:107588002583F583E5F0700122D322C0037B00E553
:10759800A60238AF0C5F084C0E0AAF0E50AC3C8EF
:1075A800998C8E4CA9ACA0B50F3E50A719188F01B8F
:1075B800A803D0028001C3D003227B977900120E62
:1075C800FBAA03A80122E0FCA3E0FAA3E0F822EC5E
:1075D800F0A3EAF0A3E8F022E0FCA3E0C0E0A3E017
:1075E800F582D08322C09074FA2515F5157A95F89E
:1075F800750806714F715FA318C0E0E508B405026D
:10760800800020D0E0D508ECD0E0D09022C082C083C0
:1076180090A02D803DC082C08390A0218034C0827C
:10762800C08390A030802BC082C08390A024802289
```

```
:10763800C082C08390BCB48019C082C08390A02A45
:107648008010C082C08390A01E8007C082C0839033
:10765800A0275390F8ECF0A3D0E0F0A3D0E0F022FC
:10093300122FBE700431448017126995122E925003
:10094300F85390F875A095A81518E2B2E0F2E422E6
:100953005390F8911AEF600DBE0012910E7F06E2DC
:10096300F31819DFFAE5152406F515E4229E8F30F6
:100973008C2F50098E308B2FF404C8C9C8FFC22FA7
:10098300BD0002D22F912BBF0B0040027F0A752AB4
:1009930000716F7F04792E749EC39CD4CC7001FCCC
:1009A300B45000302F17B331B85008052A7F0171B6
:1009B3006F713D612EE237D45107DFF922E2FEE485
:1009C3003499972ED45107DFF44011B278792E7FF2
:1009D30004749A972400D4F719B3DFF5782B7F00BA
:1009E300E670080F0F08B82FF76160B410005001CC
:1009F3000FE530C39F600B4009F53071A5752A00E0
:100A0300612E615DF7181922122FBE6003022806BA
:100A13005390F8911AE515240CF515C3EEC2D59F32
:100A2300600A4003EB8001EC6001B322BE00028048
:100A330015BD00F07F04181818191919E2FEE39E7A
:100A430070E50809DFF6D2D52251839118BE000262
:100A530061608D2FEF60F92E20E70510D706615DE9
:100A6300500 2615A9481FE71457B04AC018C01E311
:100A7300FA71DBEAC471DB1CDBF38E308D2F41EEA0
:100A8300122FBE60031269955390F8225183911A75
:100A93008D2FBF0003126999EE60B59F20E70450C4
:100AA30004615D50BD2481F530912B7A34AB007520
:100AB3002A007DFFD38B00792E7F045016E2FEE4DB
:100AC30034999E27D45107DFF40D40E9E79401F7E9
:100AD300B380E231B877008A00A6050A7F0171A3CB
:100AE300BA3ECFD53002615D752A007834E6FE60E8
:100AF3000037 13D18087408F928F8B605004013D3AC
:100B0300E41836D4D630E409D9F5187601713D805E
:100B13000619E9C3C898F8792BE6C408D64206F744
:100B23000809B92FF4EE7003753000910E8915781A
:100B330030E6F31819B82AF9E4220530E53070F9E4
:100B4300615AC0017932E2540FF7E2C4540F1951CC
:100B5300007B92AF2D0012212699D1269A171667147
:100B63002EE422E4783DF618B829FB227C00C3EF7B
:100B730060569402501BC000C001792E782DECD72B
:100B8300C4FCE7D6C45107B92AF8E7C4540FF78069
:100B930033FFE4C52AC52BC52CC52DC52EFC80CF3C
:100BA3007C00C3EF60229402501FC000C001782A6A
:100BB300792BE6C4F6E7C4D6F70809B82EF7ECC4D8
:100BC300D654F0FCD001D00022FFE4CCC52EC52DB5
:100BD300C52CC52BC52A80CB540FFF783C7932E452
:100BE300F5331826D430E403180608D68FF0E7A4AB
:100BF300075F00A84C5F026D430E40205F008D6184F
:100C0300E5F019B92ADC2533D4F62275A095A81589
:100C1300740628F9227166910EE2FFE3FE1819E2C9
:100C2300FCE3FB6CFD181922C000782EE3F61918BB
:100C3300B82AF9D000225390F8B12BC083C082E0C8
:100C4300F1774012915C400EC2E5B44803D38001B2
:100C5300C3D082D08322A380E6C2E5B4470040011B
```

```
:100C630022B44100B3225390F87BA07902D1FB74E4
:100C73000DF390A0025390F87166B12BB1319278C5
:100C830078347E7FD2D5F175500B540F120CFFF4DC
:100C93006076A380F1B42E0C20516DD251B834F29A
:100CA300D25280EE20D561B4650280003B44538B1D9
:100CB3002AB1319250F1754005127378029540F88
:100CC300FDA3F175500D540FCD75F00AA42DFD5001
:100CD300F07DFFED305009C39EF4044009740122F6
:100CE3002E5003740222CE8E30BEFF02801AB83417
:100CF300027166E515C3940CF51541EEC2D5700B70
:100D0300B834083052 04DE0274FF22205302C25268
:100D13002052F32051060EBEFF0280EC2053EBB8A5
:100D23003D02D253F60822A3E0B4201680F9B4E3BF
:100D3300002800EB42B028009B4E5028003B42D02B5
:100D4300D3A3225390F8911A3168EFFE7145782BA3
:100D5300E517FB6048B4F0004002A1CFEBC4540F89
:100D6300FAD140CAC39AFF500302699DBE00071F10
:100D7300D162D16F800BD162BA00028004EAFFD145
:100D830024EB540FFA60BBD16BD149B50203EAC11E
:100D93005950FBCAC39ACAD159EAFFC124EE700461
:100DA300D173C16F7BF074772E402194F7401DD12E
:100DB300064D140B40802C124D124D1366062D16B1E
:100DC3007F01D124705AD136605680F4D1647F01FB
:100DD300D124D16BEB540F6006FF1FD1248002B1E5
:100DE300C3D1737D45D175EE600414B48005D1730E
:100DF300E4800C40067D2BD1758004D167F404C2D6
:100E0300E7F87A0079027BA0C083C082D1FB780225
:100E1300D082D08375A0A0E2FDD17508E8B501F4B6
:100E230022EF600EE64430081FFDD175E4B833F1BC
:100E3300745522A900E7700409B933F922EEC3946B
:100E4300805001E4FF22C374809E5001E422EF60CE
:100E5300FCD1731F80F8FFEF60F3D16F1F80F8D1CF
:100E630051EC600C7D2D800A7D2E80067D30800242
:100E73007D205390F8C0E0C002C000A80BAA0C8AE2
:100E8300A0EDF212736E8A0C880BD000D002D0E072
:100E930075A095225390F89139922FF175B340289C
:100EA3007B0079008015A389008B02F175400C301B
:100EB3002F16915C4003A3800F240975F00A302F8D
:100EC30000375F010D1D250DEE492E12275F00AC02E
:100ED300E0C0F0E9A4F9EBABF0D0F0A42BFBE435D0
:100EE300F0F5F0D0E0540F29F9E43BFBE435F0F5DD
:100EF300F0C3E5F06001D3225390F8E49 02710F19A
:100F03001B9003E8F11B900064F11B90000AF11B96
:100F1300900001F11B6020227EFF0ECAB58300CA38
:100F23004012C89582C8CA9583CA50EEC82582C8A4
:100F3300CA3583CA4E60E074302E8BA0F309B90022
:100F4300010B225390F8D173A22E922FEBF16CEB8D
:100F5300F16DC22FE9F16CE9F16D7D48C175C22FC6
:100F63002490D43440D4FD80F3C4540F70F0302F58
:100F7300ED22B12BB43A00400122B43000B3222554
:0D0F830082F582E5F03583F58350010C22E4
:10284B00C000C001C003C006C0F05390F890000058
:10285B00E4FBF9FCF5F0A81575A095E2C39481FE95
:10286B0018E270384022BE060050310EE89404F88E
```

17

```
:10287B00C5F0702808E2C4120ECFDE02800AC5F044
:10288B00701AE2120ECFDEE88B838982ACF012094C
:10289B0068D0F0D006D003D001D000227CFF8C8210
:0428AB008C8380EAB0
:1017E200858113C234C23B7C00A3123A0E123A0224
:1017F200B4FD02D234AF3FAE3E12740F20E00D12A0
:101802003F9FE4FD127433600B20E10D203420125F
:10181200183C800B1218798006203413121911209
:101822001B30E45390F8C23BD23F22740B80027407
:101832000C851381C23B5390F8225390F890A02D4F
:10184200E0FCC002C000AB1151DB501990A02D1278
:1018520075E074FE127366A3121BFE0C51DB40CBC3
:10186200E4FAF85101D03ED03F8A8388828A0C88FC
:101872000D121ACA511222311A127468EB2404FB97
:10188200203409C39511FB404A121ACAA882AA83BE
:10189200EB6079127387303B068AA0E0F280061271
:1018A200734F1273CC8A838882303B0930340A51D9
:1018B20026716480047401717A71BF501051143022
:1018C2003B4A303447850E3F850F3E803FA3121BB3
:1018D200FE8039F404FBC083C082127473127247ADE
:1018E200E583458270111CD082D08374FE12736628
:1018F200C083C082900000313DD082D08312734FEA
:10190200B4FE05A371FE800651CA8002713022AB7B
:1019120011C23B313D51CA22C002C000C083C08205
:1019220071A1D082D083EA65837009E86582700470
:10193200D23B8002C23BD000D00222C083C0828A46
:101942000A880B51DB4008AF83AE8231B3805DC0A1
:1019520003C00471A9FB0C51DB40F85101E4FFFE06
:1019620031D01C71A9FE519751100C9000021273D4
:101972004FFFA3E0FEAA0AA80B12740F30E01690E4
:101982000004E0127387D0E0D003A881E582F61844
:10199200E583F680AE1CD0E0B5040CD003D082D033
:1019A20083C083C082809CC0E01C80A7D082D08389
:1019B20022E4203B1BC002C00071A1C3E89EEA9F43
:1019C2004004740280027401D000D0028002EA480E
:1019D200C0E088828A83EB1273918A0E880F8F0C83
:1019E2008E0D12734F1273AED0E0600A1470047140
:1019F200648003E4717A850E83850F8251142290EC
:101A0200A02D5390F8E0B504005002ECF0225126CC
:101A1200716471BF500D74FD12736612761 4123424
:101A22004ED23322C090127060C002C00071A1E495
:101A3200F50EF50FEC7019C004123F9FD004E58338
:101A42006A7010E58268700B85830C85820D803B7D
:101A5200900000EA48602685830C85820D1274731B
:101A6200127387EA658370EFE8658270EA850C83FA
:101A7200850D82A3123A0E8A0E880F800E1C71A168
:101A82008A838882E4F50CF50D80E8D000D002123A
:101A9200706FD0902271A19000001273530C1273D8
:101AA200661C74FE12736AA312736EC002C0001E1B
:101AB2001273530C1273661CA312736EDEF215902E
:101AC200D082D083121BFE2278007A96A91112735B
:101AD20048127366A308D9F622C090C083C082E57B
:101AE20060B5040050020 12D71A1127353B4F50BBD
:101AF200740412739112735312739171B6500FC022
```

EP 0 481 606 A2

```
:101B0200045390F890A0301275E0D004800390FF47
:101B1200FF127544EDC39B923171B65006A231504B
:101B220004012DA231C231D082D083D090225390B1
:101B3200F890A02D1275E0E583458270241273663 9
:101B42001C71DAE0C0E0A3E0F582D08312734FB4D7
:101B5200F5028005EC70E6800612747312738751E9
:101B62001822C090C083C08271DAE50CF0A3E50DA3
:101B7200F0D082D083D09022C090C083C082C0E0D7
:101B820071A1D0E020E006EB1273918004EB127396
:101B9200A5E8F012737FEAF0D082D083D090227150
:101BA200DAE0FAA3E0F82271A174041273911273BD
:101BB20053240422C083C08290A0308007C083C017
:101BC2008290A02DC0905390F8E0B50403D3800119
:101BD2000C3D090D082D0832290A033EC231273879B
:101BE2005390F822E865827005EA6583600DE48A05
:101BF200A0F2E82401F850EC0A80E922E58345824C
:101C02006005E4F0A380F522E865827005EA658349
:081C12006005E4F0A380F1225B
:1039000085811320400312011230330312333AC516E
:103910004002B4F51C12737F8582448583438C42A3D5
:1039200051 0E8A408841C2365102C0E031E6D0E0F3
:10393000302 80B200808314B90A0240275E0302A73
:1039400018201015314B90A02780F012737FE525C9
:103950005405FF5325FA021725D23AB4A2055102A5
:103960000B4F73A85830C85820B9007B35390F8C265
:10397000E775F003A42582F582E5F03583F583E051
:103980000C9A3E0C0E0C001A3E030E711F9850C83D2
:10399000085 0B82E422740B8018740C8014740D80E3
:1039A00010740E800C740F800874108004740 2D29E
:1039B0003F5390F8851381D2AF75150575549C203F
:1039C00026213 02102D225F545854046854147AC68
:1039D000428543838544823029091276 1D90A01EBA
:1039E0001275E0D22122302D181270607B97790079
:1039F000120EFB8BA07420F309E4F312749B127077
:103A00006F2212734FB4FB04A3A380F6A322127398
:103A10004FF549A3E0FAA3E0F8A3E0F548A3227527
:103A2000080080087508018003750 8045102B4FE7F
:103A300028036B4F505E0601B802EB4F6028029C2
:103A4000B4FD028024B48902801FB4FA07E0041296
:103A5000738780D8C50830E009C508B4EC02800936
:103A6000C50830E209C508D322C312737F22023988
:103A70009D5102B4F516E07013510E5102B4E91EC7
:103A80005102B4F515E0701251C98018B4E9135110
:103A9000AD5102B4F50451C9800A51BF800651C42A
:103AA000800251A912737F411FAB3FA93E12706083
:103AB000F19FA3A312734FFAA3E0F812706F22AB29
:103AC0003FA93E22AB02A90022A3E0FBA3E0F9A399
:103AD000A3A322C090127060C002C00075080091BC
:103AE00039C0E01275E09125D0E0C0E020E20E3050
:103AF000E00612734FF508A3D0E0023B7912734F32
:103B0000F50CA3E0F50BA3E0F509A3E0F50AA3E0AB
:103B1000F508A3D0E0C0E0127060C0E030E30F12FF
:103B20000284BAF09AE0A719385830D85820E12284A
:103B30004BAF0CAE0B7193D0E030E30671B971A1BD
```

```
:103B400071C8A3AA83A88212706F71D7C083C08284
:103B50008A838882D000D00285080AD0E030E00451
:103B6000050A8003750800E50A700885828375825E
:103B700000800312757412756 28C4A85834B8582AE
:103B80004C85084DD000D00212706FD09022742462
:103B90000239B1EC70F8AA83A88212740F20E0EE0B
:103BA00022E509600EE58370E5C082850983850AF8
:103BB00082D00A12757440D622E50A2401F50A5013
:103BC00006E5093400F50922E582250EF582E58334
:103BD000350DF58340B822750908EC23127387E58B
:103BE0009C39CF509C0E012734FE0FFA3E0FEA3F8
:103BF00012740F601120E10EEF4E60928F0D8E0E49
:103C00000CD509E68088D0E0B5090CE5091423122B
:103C100073871273778 00DAF0DAE0E12755112734C
:103C200077900000225304F0ECC4FC22C0F0C09056
:103C3000C083C08275F0008005C0F075F00153901C
:103C4000F8854E83854F827409127387E020F00651
:103C5000D082D083D090D0F02275080012734FC06C
:103C6000E0A3E0C0E0A35102B4EA23122F80701E4B
:103C70000508C008122B29D0085102B4EC0B050826
:103C8000C008122B29D0085102B4EB0A800312732A
:103C90007FD04FD04E2202399DC003C00512706004
:103CA0000C22CE5086004D2E02323F9913954F1498C
:103CB000F020E00E75090620E204B119803EB152F1
:103CC000080 3A12706F5102B4E31D5102B4F83AC049
:103CD0000081275EDD00812706012137A7031E58207
:103CE000603285820980097509121273 7F12706033
:103CF000D22CE5087004B1198002B152127641123B
:103D00000706FD005D003C22C2202399D0239A974EC
:103D10001B0239B174200239B175F000E509302C6D
:103D200062402500205F0D1C4F152E509302C18E6
:103D300127366A3E4F012737FE50924025006 04AF
:103D400012738774FF0273877906E4127366A3D92E
:103D5000F9221508 12284B7FFF7EFE7193C009855A
:103D60008 30985820AE508601512284B7193C00902
:103D7000C00A85830985820AD00CD00B8005E4F542
:103D80000BF50CD0E0C0E075F000302C062401509B
:103D90000205F02415500205F0D1C4E5091273663E
:103DA000A3E50AF0A3E50BF0A3E50CF0A3D0E0C077
:103DB000E0F0A3C083C082C004E47B10F0A3DBFC6E
:103DC000850B83850C8271B9A3123BA1AF83AE82B0
:103DD000D004D000D002C083C0828A838882740558
:103DE000127397F152D082D083D0E0C083C082C0DA
:103DF000E08A0D880E7410127391F10E4049850D02
:103E0000083850E82D00A302C08050AE50A6002C2BA
:103E10002CC3E5609C04FBEC23127387750B0075C3
:103E20000C00302C06A8027A00800312759312 75DC
:103E300059401E601CF194F18B0CE4FAF8F50DF575
:103E40000EF10E4002DBDBF17944F012735F0239B0
:103E50009512756DD00CD00BF18B8F838E82E50A95
:103E600070088582837582008003127574E50D45A4
:103E70000E601B7410127387E582250EF582E583B0
:103E8000350DF58350080CE560B5040040B98C0C85
:103E9000AA83A8825390F890A02A1275E074151294
```

EP 0 481 606 A2

```
:103EA0007387E50CB5040B5390F8EC4290121C0A92
:103EB000800BE4127366A3121BFE0C80E5AC0C8A27
:103EC000838882225390F8FF90A02A1275E0AA837B
:103ED000A882EFC083C08228F8E5F03AFA5017D0E4
:103EE000E0D0E012742E127641900000E560B50437
:103EF0000050DB02399590A030E0B5040CA3E0FF40
:103F0000A3E0FE12740F30E1EAD082D08322C09089
:103F1000C083C08290A0305390F8E0B50413A3E0B2
:103F2000C0E0A3E0F582D083BB030040097B0280A0
:103F300005401890FFFFC3E58298F8E5839AFA40A0
:103F40000A12736E50057AFF78FFC3D082D083D0F7
:103F50009022C090C002C000F179540FC44CC4122A
:103F6000735F12736EE58312735F12736EE58212D4
:103F7000735FD000D002D09022AA4EA84F740912CD
:103F80007391027348912C5480C422E50BF0A3E591
:103F90000CF0A322E50C28F50CE50B3AF50B22906A
:0D3FA000BCB7C0905390F81275E0D090228D
:102B21007404801274008000E7406800A7402800698
:102B3100740580027401C090C000C001C005C006C8
:102B4100C007C008C009C00AC0F0C015C054C0E029
:102B510020E20AE554B49C45E515B4054075008002A
:102B6100D2305390F871C430300491118002B1A475
:102B710060F3D0F0D006D005B4012CEDB5150DEE03
:102B810004B5541D20F02330F120801924FAB51525
:102B910010EEB5540C20F01220F10F800874C8809B
:102BA1000674198002742302C39B1E4D0F0D00AD03E
:102BB1009D008D007D006D005D001D000D090436D
:102BC100903022AD83AE82123A025390F8F5F0C0F4
:102BD10083C0829007B3C2E7FF232F5002058325EC
:102BE100825002058C0582E0F509A3E0F50AA3E05E
:102BF100C5F0D082D083B4D90A75F00375091D756B
:102C01000A8922B4DA0975F00375091D750A6B2268
:102C1100FFE5F05407B40202815CB40304C23081C1
:102C2100A8B40421C230BFF70281CF8C4A85834BFF
:102C310085824C754DFF91A8700AEF2582C582E40B
:102C41005002058322B4050B918B700E71C4B4EA56
:102C510007818BB4060280F9741922C0F053F07019
:102C610075A09BE508600924FDC8E2B5F000500499
:102C7100D0F08016C009C00A880808E2F50908E208
:102C8100F50A91A8D00AD00980D6E5F0A808B8FFC6
:102C910000501175A09BF208E509F208E50AF20857
:102CA1008808E422742222C0F0127060C008C009B2
:102CB100C00A74C0C0E0742CC0E0C00AC00922D0B0
:102CC1000AD009D00812706FD0F05390F822B141A8
:102CD100705120F21BC008C009C00AC0F0123AD3DB
:102CE100D0F0D00AD009D00820F002C1F7E4E136D3
:102CF100D230854E09854F0A918B85F01175F015FB
:102D010075092D750A27918B701971C4B4EA159153
:102D11008BF1808511F0E5F023C4540168600474DF
:102D21002561A822A1A0E58124FCF8E624FDF67521
:102D3100A09BF8E2F5F008E2F54E08E2F54F809528
:102D4100EC4290E0A3F54EF5A0E0A35390F8F54FC7
:102D51002409500205A0F8E2F5F030E73AC083C03B
:102D610082C0F071C4D0F0C0F0B4EA0730F02AF1AB
```

Mars Electronics International, Inc.
1301 Wilson Drive
West Chester, Pennsylvania 19380
Phone (315) 430 2500
Telex 83 4311

MARS ELECTRONICS

```
:102D71008 06026902DA3C0047C00C008C009C00A51
:102D8100750800123C99D00AD009D008D004D0F0BF
:102D91009C... 22D0F0D082D08374D3
:102DA100 1122EDFFE5F0540714602514602724FC7F
:102DB1006037 14605675F021C005C006915CD006DD
:102DC100D005700B7403B5085D74018D838E82226A
:102DD100915CD2302275F04175092F750AF2BFE975
:102DE100EF750909750A3380E7F18060B2C0F0C060
:102DF10009C00A75F015750930750A3A918B70CFC3
:102E0100D00AD009D0F0918BD23022C005C006C0C3
:102E110007915CD007D006D00570B4E50824FDF514
:102E21000870060480A574192275A09BF919E3B4F2
:102E310028F419E370F019BFEB188908E96011193A
:102E4100E3F50A19E3F50919E3B41504890891A812
:102E5100E422D23019E3B43A0F19E3B4300BBFEDD9
:102E6100C519E3B415C0E42219BFECBA80F35306C7
:102E710007534A078FA0EE4290E05390F8A3C54A4A
:102E81004290C54AF25390F808B8000205A0D9E66D
:102E910022784FE554C3949C600728F8E6B51501E4
:102EA10022D322534A07E515C083C0827906854B98
:102EB10083854C8275A095F829F5155390F8E21891
:102EC100C54A4290C54AF0A3D9F18058534A07C078
:102ED10083C0827EF85390F815548554837582001F
:102EE100E0F909B54D01D34005741B022BA8AF4B86
:102EF100A84CD16F802E534A07E515B40B05741900
:102F0100022BA8C083C08224FAF5157906854B836C
:102F1100854C8275A095F8F12EE0A35390F8F21834
:102F2100D9F57F065390F8D082D083E422E54A5345
:102F310090F8429022534A07F8E554B4A00280BEAB
:102F4100C083C082AF548FA00554F12EFE854B8300
:102F5100854C82E05390F8047A00B8FF087800E5C8
:102F61004DF260150AF9754AF8D192A615A802C06A
:102F710001D16FD0078E4A80ABD192A61580A5C032
:102F810083C082C001C0027801E4F9FA12206953BA
:102F910090F8B4ED06B8011FE88006B4EB0ED8171F
:102FA100E4A802D002D001D082D08322B4EA010881
:102FB100B4EC04B801010AD9D37AFF80E4C001E579
:102FC10015B405028023B4FF02801EE554B49C02AF
:102FD100801B949C244FF9E7B4050280105B1502BB
:102FE1008007400524FAB5150474018001E4D0017D
:102FF10022122FBE700412095322754AF8754BA094
:1030010015 4B754C00754DFF122ECD70EC122E92A2
:1030110040 1D909F00E0A3F960DFAF541F8FA0789F
:10302100000E2FA29400EF20AA8027EF8022E6F741D
:1030310019022BA8741B022BA8122FBE70F112705B
:10304100A1BB000280031269A5C0011270A1BB00DF
:10305100F5B9000109D002122E9240D38554A01572
:10306100A07800E2CAB50100CA4019B501004014B8
:10307100B502005001FAEAC39904F2FAE30908F231
:07308100DAFAE422E4F22276
:10312200123A0212737FB4F90302770BB4F70280EA
:10313200F8127E3030E403027E0F123A7112706090
:10314200123F9FC23420100B1264FDB403051265B6
:10315200958 0647D01127433F4605CF4601820E29F
```

:103162005A20E10F2034357404127387E5F012748B
:103172007A80D2203441103423C002C000AA03A8AE
:103182000112740FD000D00220E12CD234AF03AE72
:103192000112740F7002C234AA03A801C002C00057
:1031A2007A97780012265C12706012749B12706F0C
:1031B200D000D00220348E12706F2202399D123A52
:1031C20071123F9FE4FD1274337049AF03AE0112D6
:1031D200740F20E033AA03A80112706060077D001B
:1031E200127433702F12706FD234127060C002C02A
:1031F20000121879D000D00212706F7D0112743360
:1032020020E105F4600280E2121B30C234C23AD2DD
:1032120020D23F22023999123A1F5390F8123F9F4F
:10322200C082C08390A033D0E0F0A3D0E0F0A3E44A
:103232007C0FF0A3DCFC71A2123F9F74FDF01276AA
:1032420014490BCCE1275E374FDF07568E9914EE4FA
:10325200783D790408F6D9FCF556F5557564207168
:103262009A71CE7516FFD23F752401C22D5325F8EF
:10327200C23A22AF83AE82123A02B4EC0830206224
:10328200122B2D80048F838E82123A1F127060E5FA
:1032920015B405095390F871AC914E803F90A0305F
:1032A2001275CEBC000512737780047AFF78001283
:1032B200284BBC0029E58224A0FEE58334C5FF40EB
:1032C2001D12740F20E117123F9F12734FB4FD0EAF
:1032D20090BCB8EFF0A3EEF07109511C21B9744112
:1032E200800274460239B190BCB7E4F0A374C5F011
:1032F200A374A0F0711C7109511CE560900000FCE0
:10330200E4127366DCFA225390F890BCCE74BEF0DD
:10331200A37400F090C59BE4F0225390F812795AFE
:10332200EFF0A3EEF0A3EDF090B7B37928E4F074D8
:10333200020127387D9F774FDF022123A1F719A7125
:10334200CE914E71AC7568E9718E7516FF752400C9
:103352005325F8C23FC20AC23AC22D7CFF12763808
:10336200E4F55675642090BCBB74FFF071D1023F46
:103372009F744641E6123A1F3020F6203F0B78CE6A
:10338200121520C2208569252202393A512659512DF
:10339200663A12668A0265A0E4F545F546F54722CB
:1033A20090A04374FD7C00027366C083C08290A02B
:1033B20043E0B4FD02800E7409127387E044F0F01A
:1033C200A3A3A380ECC233D082D0832202129B53E8
:1033D20090F87AC5784E90BCCE1275E374081273D9
:1033E2008774FFF0740B12738712754440F3123F17
:1033F2009F12734FB4FD0122B4FE0512742E80F1A8
:10340200C083C082A3123A0E8A408841123A02B4A3
:10341200FC2AE0FAA3E0F8D082D0837408127391F8
:1034220012734830E722EC12735F12736EE5838ADF
:10343200A0F212736EE5828AA0F28004D082D08359
:1034420012747312747A80A9742741E690BCCCE49A
:10345200F0A3F090A02D1275CE12736E50040CE4FE
:08346200FAF890A02A0275D7C8
:101E4E00123A02B4F715123C59123F856010123C3B
:101E5E0099123A24B4EC03A380E62202399D02398A
:101E6E00A9C0E0121F0F123AD3D0F0C04AC04BC027
:101E7E004CC04D123C2CC0E0123A02B4EA20122F94
:101E8E008060511228291 23A02B4ED48122B2912FE

23

```
:101E9E003A02B4EB3FD0E0D2E1C0E0123A0220F0B9
:101EAE0048B4E430D0E0C0E020E004740680027450
:101EBE0004122B3720F20620F303123A24D0E0D07E
:101ECE004DD04CD04BD04AC0E020F23220E115204C
:101EDE00E029800B20F2E302399D74230239B112FE
:101EEE002EA4801A1237DC801512737FD0E020E00A
:101EFE000530F1E680C920F1E180C4122ECDD0E08C
:101F0E0022C0F0123C59123C2CF5F0E50820F717D0
:101F1E0030F210601E14C5F0540803030365F07010
:101F2E00168009700E80057006123C99D0F022744E
:101F3E0011800674128002742502 39B1203605D242
:101F4E0036121FC612204E600C123A02B4882F05AC
:101F5E0055055580287A9AA855127348C0E008E2B4
:101F6E00F582D0834583601E08E2FF08E2FE4F60D3
:101F7E0009C3E5829EE5839F50EE18885522742989
:101F8E000239B1303609302003022 25F021FA274DB
:101F9E00280239B1AC428543838544 8212734FB413
:101FAE00F50712747312747A22E54 904127387E0EE
:101FBE00B4F604A3E080F522127060C002C0007572
:101FCE0055027A9A7800C2317D00122069B4FD0262
:101FDE00805BB4F50AE07055740412738780E9B41F
:101FEE00F603A380E3B48813D2310808E412735FBA
:101FFE0008F208F208F218181880CDB489CA2031F8
:10200E0011C000E8601F18127348F50818E2450861
:10201E0070F1E58312735F08E582F218203102D069
:10202E0000 0C23180A374280239B10239ADE87003C1
:10203E00021F8CB4200050F2D000D00212706F221A
:10204E00122B2D12706012137A458212706F22C0FD
:10205E00F0C09012706075F001800CC0F075F00049
:10206E008005C0F075F003123A02B4F50930F07332
:10207E00A3A3A3A380F1B4FD0820F16720F05F8035
:10208E0062B4F60630F05CA380DDB4F704A3A3803F
:10209E00D6B4F807740612738780CCB4FC04A3A3DD
:1020AE00080C5B4FE0512742E80BDB4F9004007E061
:1020BE000412738780B1B5052020F12730F024C0BB
:1020CE00E0EC12735F12736EE58312735F12736E20
:1020DE00E58212735FD0E0800520F08B80051270D0
:1020EE006FD090D0F022123A1F202003D2232274F8
:1020FE00460239B1123A24B4EC11A3123A02B48159
:10210E0018123A1F5390F8126406225390F8126474
:10211E00062020F6D22002333C02399D7F027E013A
:10212E00791178017D01E41221F28509F015F0E5AF
:10213E0008146004D2F6800A740FB5F00050030242
:10214E0039A1026271E47F06FE790FF87D01F41267
:10215E0021F2E509C44508C0E0123A2440BBB4ECB4
:10216E0021A3122B25123A1F15545390F88554A013
:10217E007800E2B4011908E2B44804D2D58005B45F
:10218E00420DC2D5D0E0A2D592E3F5F00265AE02C3
:10219E0039A17F0431BE601514600F1460091460FC
:1021AE00030267040266CB0266E3D20A22C20A2247
:1021BE00E4FEFD1221F2E50822123A1F0266A91270
:1021CE003A02B4F807740612738780F3B4F904E088
:1021DE000480F4B4EC0280E712737F023A1F123AC5
:1021EE001F0261F5C0E0122B2DED6009123A02B408
```

```
:1021FE00EC2B122B29D0E06005123A248003123A00
:10220E001F127060ED600712284B5131F50912282C
:10221E004BA907A8065131F50812706F2202399D9D
:10222E000239A1EC458370F8E582B5000040F199C2
:10223E00600250ECE5822212734FA3027387127371
:10224E007F8C42858343858244A312734FF549A345
:10225E002220200712129BD23FD220C23A220274B1
:10226E002E302103A3A3227ABC78CC12734FF9A38C
:10227E00E0C912735F12736EE912735FA32274FFCB
:03228E000239B161
:104AB300C23EC222C0255325F812706079FAE581FF
:104AC300F775F04012627175F03E12628875F0203E
:104AD300780F126288D8FB12663A75F04112627140
:104AE3007D647A647508025390F8E5F0C23C1213B2
:104AF3008FA3740DF0909F0005F0126271917BB447
:104B03005102615BB4420261B8B447026180B450A0
:104B13000261D7B4490261F7B4530261A2B45402EB
:104B230061AFB40D06809A740C8006740D80027414
:104B33004A7A00F879FAE7F58175F04112627190CB
:104B4300076170F1127483120704715141C490BC41
:104B5300BA7403F0E070FD22917BB455CE917BB41F
:104B630049C9917BB454C49184D220C22612663AB7
:104B730012644812706FA22DD025922D22917BB41E
:104B83000D02801712737F91939184EB49600E910C
:104B930062A881A68218A68318A60480CE612A91F2
:104BA30084B42C028004D22280C1612E9184102D02
:104BB3002D22D41C4917BB40D04917280141273FF
:104BC3007F9193918491259184B42C04917B80F1FE
:104BD300D22441C491087401D2268581130513059B
:104BE30013123FADC226700A12660960FB127BFDE9
:104BF30041C461349108D2226123900C2261021F231
:104C0300127BFD41C4917B12737FAA83A882909685
:104C1300007C0074011222917006909600C0022A1
:104C23006134C083C08291625390F890BCBBE004AE
:104C3300B408005028C0E0A36013FCE0FFA3E0FE2B
:104C4300A312740F7005D0E0148009DCEEEAF0A320
:104C5300E8F0D0E090BCBBF0D082D083226132AACE
:104C630003A801123F9FE4FD12743360EF612A90A1
:104C7300BCBB74FFF0C22422E0B42003A380F9A3D9
:104C830022917BB42C028003B40D0302737F612E47
:104C9300E4FBF9E0120F77500A24D0120ECF400440
:064CA300A380F022612A4B
:1014EC00F1AFB4F50D123A0EF1B27F00F125F118FF
:1014FC00800DB4FC0BF1B5F1B27F00F125F1A62201
:10150C0002399D75F000F1B2E5566075C3940FF584
:10151C0056F8800375F0015390F875A099E2FC0819
:10152C00E2F58308E2F58208E26002422508E2F562
:10153C004008E2F54108E2A2E0923608E2F54208E2
:10154C00E2F54308E2F54408E2F54808E2F54908FB
:10155C00E2F55508127060900BCCCE2F008A3E2F002
:10156C000820F00E303616C3E5649420F8F5647547
:10157C00A09A909A007F20E2F0A308DFFA12706F15
:10158C0022743B0239B1F1AFB4F509123A0EF1B243
:10159C00F1188009B4FC09F1B5F1B2F1A6C2202210
```

:1015AC00A10C30215E750E00F1AFB48C04050E80D9
:1015BC0010B4F505E070078027B4FC02802B127381
:1015CC007FF1B25390F890A0211275E0E50E601FE8
:1015DC0012734FB4F503A38001A3E0127387800F3D
:1015EC00123A0EF1B2F1188006F1B5F1B2F1A6C0C3
:1015FC0083C082854640854741123339AD082D0837E
:10160C00C22122743A0239B1F1AFB48093F1AFB474
:10161C00FC02801DB4F589123A0EF1B2127060EA28
:10162C00486004F1188013C2292021131239A80C8
:10163C000EF1B5F1B2127060F1A6D22912764A12EF
:10164C00706F22F1AFB4F50FE0701A123A0EF1B2CE
:10165C00127060F1188023B4FC0BF1B5F1B212706A
:10166C0060F1A6801512737FF1B2127060123F9F69
:10167C005390F81276F960248016740512738F172
:10168C00AFB49B02800AB4FC0EA3A3F1AFA380EF0E
:10169C0012763812706F2274420239B174430239D7
:1016AC00B17F01D1B87004C228D1FB22F1AFB48351
:1016BC003CF1AFB4F515123A0EF1B2EA48700122C2
:1016CC00127060C007F118D007800CB4FC1FF1B584
:1016DC00F1B2127060F1A6EF20E20712762FD22839
:1016EC008005127653D22A12706F740122A10CE578
:1016FC0056601124F45390F875A099F8E26006CF67
:10170C00F4CF5FF222E8C3940F50F022E4FD123FB5
:10171C009F12743360EE02399975F000E556F92486
:10172C000F7ECEB50600506FF556800375F0015351
:10173C0090F875A099ECF309E583F309E582F309B8
:10174C00EFF309E540F309E541F309E43036010410
:10175C00F309E542F309E543F309E544F309E548E8
:10176C00F309E549F309E555F30912706090BCCC17
:10177C00E0F309A3E0F320F00F303617E564F92409
:10178C00204014F56475A09A909A007E20E0F3A393
:10179C0009DEFA12706F220239ADAC0D850E83850D
:1017AC000F8222023A02023A1FE0FAA3E0F8A37475
:1017BC0008127391C09012734820E715F50D12733F
:1017CC006E127348F50E12736E127348F50FD090AB
:0617DC002274260239B15F
:1012C800C23E7113B4EF41122B2D7113B4EC397176
:1012D80013750800B4F93712737F122B2112293BBA
:1012E800B4040050236021FB08E2B445054308011B
:1012F800800DB44904D23E8006B4540C430802DB86
:10130800E77113B4EC02800902399D023A021273A4
:101318007FC008122B29D0087113B4ECEB7113B4F9
:10132800F7E6127060717A7040E582603CC08271A5
:101338007AD005AA05702A5390F8E582146007B49C
:10134800031F91D980027181600712706FA3A38077
:101358000DA80212299712706F7401121E6F023ABB
:101368001F742D800A74FC800674408002743F024A
:1013780039B112284BEC45832212627F547FF5F075
:1013880126271E5F0D23CFB530340C2E6FCC37F16
:1013980010CF9F40D060D6FEB502004002AE02904A
:1013A8009EFFC0F08E63126440A3C3EA9E6007FFED
:1013B8007420F0A3DFFCD0F0126271E4F88E82F999
:1013C80075A09F12660960FB303C02F516B40D0249
:1013D8008176B41E028176B41F028176B47F0491AF

:1013E800AC805FB41C10E904B502004004919280FF
:1013F800010991CE804CB41D14E8600118E970040D
:1014080091928004190D8002AD020D8035B4080F49
:10141800E970049192802B1991AC91CE0D8023B480
:101428000303740122C0E0E9B582004002A982D01A
:10143800E0F309E9B5020119B5820280054001A36C
:101444800091CE126271AF06C000C0F0E2F5F0303EF6
:101458000375F02012628808DFF19198D0F0D0006F
:101468001DED600261CBE50820E0030D61CBE508C6
:1014780030E111AF821582E0B42006DFF87A0080EF
:1014880003AA820AA9829198E42274051266AE2200
:10149800EE14B501005005740F4B8003EC294BF591
:1014A800F0026271C001E582C3995004A982800FDD
:1014B800600D146008FF09E319F309DFF915827458
:1014C80020F3D0010D22C3E9049E4002F8227800DF
:1014D80022909F00124236203204B4030122F0A366
:0414E800DDF2E4222B
:1028AF003123313B600208E20271F63123313B8064
:1028BF00F7312B7F0E317C7801022997312B750C64
:1028CF00A0150CE4F50BF517120D46A80BE4F50B4C
:1028DF007583A01583F582E0B4200318050BE50B73
:1028EF000229987F1931251269D6313B04C0E08542
:1028FF005483758201120F75D0E0B58203E480A86E
:10290F00C0E0855483758201120C78F4601AD0E010
:10291F00B58215227F23122E92400D227F23122E75
:10292F00925005E515B405F3EF0239B115545390E4
:10293F00F88554A07800E222122FBE7F1970E97F2C
:10294F000E317C3188FDF890A0001583E0F0A3DDF7
:10295F00FC022997121E06754A0085084B85094C03
:10296F00754D007003754D0874FF022F3631885373
:10297F0090F890A0001583F022C00712284BD007C3
:10298F00EC458370A3E58222E4754A00754BA015D0
:0A299F004BF54C884D74FF022F36F3
:101C1A00B14D127060B159E47918915DC0E0E0B439
:101C2A003A2EA3E4793C915DC0E0E0B43A22A3E401
:101C3A00793C915DC0E0126306D0E0907F6BF0A31F
:101C4A00A3D0E0F0A3A3D0E0F012633412706F22A5
:101C5A00021C7EC0F0C0E0C001120E97D001D0076E
:101C6A0020E111EA700EE8B507004008B5010050FE
:101C7A0003D0F022743E0239B1B14D127060B159ED
:101C8A00E47964915DC0E075F00484E0B42FC1A3E7
:101C9A007401790D915DC0E0C083C082901D41142A
:101CAA00127387E0F909D082D083D0E0C0E0B40291
:101CBA0005E5F0700109E0B42F96A37401915DC0A7
:101CCA00E0126306D0E0907F72F0FFA3D0E0F0FE4E
:101CDA00A3D0E0F0ACF0B4540050042410800224E5
:101CEA00ACF975F00484C5F0600205F0E925F075D9
:101CFA00F00784C0F0E4FAF8EE146016FD901D4176
:101D0A00E0127391A3DDF9BC0008BE030040031280
:101D1A00736EEF127391750A07127593E5F07002EC
:101D2A007407D00129B40800400224F9907F71F0A9
:101D3A0012633412706F221F1C1F1E1F1E1F1F1ECC
:101D4A001F1E1F123A02B4E415122B25023A1F5322
:101D5A00090F81269D61554855483758201220 23986

27

```
:101D6A009DD12B907F6FD131743AF309907F6DD159
:101D7A0031743AF309907F6BD1317808022997D1EF
:101D8A002B907F74D131742FF309907F73D1317402
:101D9A002FF309907F72D1317808022997126609C8
:101DAA007800600790A0001583F008022997E516CD
:101DBA00B4FF0874011271F6027141B40D03E48094
:101DCA000CB41E0474018005B41F0274020271F679
:101DDA00AA46A8470271F9E5450271F6121E067075
:101DEA001385088385098274091273 87E0FAA3E0D0
:101DFA00F80271F974011271F602714112292B125B
:101E0A00137A700AE582B4050040030243CB742DAD
:101E1A001239B112796C909808E4F0909800020C8B
:101E2A0078126306E4F922E075F00A84C445F0F8F2
:101E3A00C4540F243075A0A015A0F309E8540F2448
:041E4A0030F3092246
:1030880074E4C0E07430C0E0123A02B4FC071217CE
:10309800B5D23B800812737F122B29C23B123A0229
:1030A800B4EC14123A02B4F743121F0F123AD3C009
:1030B8004CC04BC04A80E612737F123A1F78F0EC7E
:1030C800F608E583F608E582F6303B051217A68078
:1030D8000031 2284BEC7012C082C0832278F0E6FC01
:1030E80008E6F58308E6F582220239A102399D1225
:1030F8002B2D123A02B4ECF4122B29123A1F12703B
:103108006012137A70E3C08212284BE560C39C40BA
:0A311800D8D0E012736612706F2227
:1037DC00C090127060750A0285820F12137A70689D
:1037EC00D50AF585820EE50E7002050EAC4A854BA6
:1037FC0083854C8212734FF50DC3950E5005850DC4
:10380C000E050EE50DC3950F5003850D0F1554AA2B
:10381C0054780012734808F50CC3E50F950E400B55
:10382C0004950C600E500CF4048013E50C11591126
:10383C00AF800FF911AFE960091238C78004115934
:10384C0011AF12706FD09022741B0239B1F9E50DD3
:10385C0029B54D02800250F0127366C083C082C03D
:10386C0002C000E50D127387AA83A882E912739136
:10387C00C3E50F950EE50D60214004950F8004C340
:10388C00950E0460154013F50D800012734F1273E2
:10389C007F12736A127377D50DF1D000D002D082EB
:1038AC00D08322E50E127387E50C600E850C0B128B
:1038BC00734808127366A3D50BF522E50DC399C0A6
:1038CC0083C082C0E0E50C250E127397D0E0127312
:1038DC0066D082D083E50DC3950FF50D6015AA83D4
:1038EC00A882E91273911273531 2736E127366A34A
:0438FC00D50DF322D1
:10346A00123A02B4F72DE0C0E0A3E0C0E012737F85
:10347A007408121E6F20E01B20E218123A02B48B65
:10348A0012122B29AF83AE82123A02B49F08122B72
:10349A0029801102399DC0905390F8127190D090F2
:1034AA008F838E82123A1FD04FD04E127060F12253
:1034BA007403D1007406D10074061273911 23AD3C0
:1034CA00E54A8AA0F208E54B8AA0F208E54C8AA0F0
:1034DA00F2087D8C7E8A12706FD1121270607407A6
:1034EA001273A58A838882F16E740D127397E0FFB6
:1034FA007405127387127377F70127403127387125E
```

```
:10350A0075E0D0E0D0E0D0E07B00804C12706F22F2
:10351A00F166C236AF83AE82123A02B4F704A3A3AD
:10352A0080048F838E82127060E41237B67403129D
:10353A007397F16E7C00740E1273971275EDC0E0EA
:10354A00120953122EA474FA2515F515D00712374D
:10355A007F701512706F7B017D89122069B4EC05AA
:10356A00BB01F780AB02737FD0E0D0E0D0E07406F5
:10357A00B18574161273971275E0221273877C0054
:10358A0012734FF540A3E0F5412212737FAF83AE69
:10359A0082A312204EFB123A1F1270608F838E8212
:1035AA00C004F122D0046014741212739 18F838EB6
:1035BA00827D8D7E8ED11774161273A512706FEBF1
:1035CA0070C7741412739112734 8F58218127348F3
:1035DA00F58318127348FCE1AB127060123A1F129D
:1035EA00706FF16674011237B67403B185741612DE
:1035FA0073971275E022127391754A008A4B884CB0
:10360A00C000122EA4D00022750A018003750A0098
:10361A00127060E4F50EF50FFF122069B4FD028006
:10362A0075B4F522FFE07004A3A38016C0E01273FC
:10363A007F85830C85820DD0E0A3A3E0F50EA3E07D
:10364A00F50FA3A380D3B4F603A380CCB506020575
:10365A000AB505C4BF810280BF150AC0E0C006E5ED
:10366A000A7043AF83AE82123A02B4F70280078F20
:10367A00838E82E48054E0654E7023A3E0654F7028
:10368A001DA3AF83AE82123A02B4EC36123A02B4E8
:10369A00F769A3A380F0742ABE8E0104807774446C
:1036AA00BE8E01048057123A02B4F719A3A3123A44
:1036BA0002B4EC11123A02B4F70B150AE50A60B625
:1036CA0080EAE48002740112737FC0E0123A1FD0CC
:1036DA00E06006D006D0E0C122D0E0D0E0EC127360
:1036EA005F08EF12735F08EE12735F08E54012730A
:1036FA005F08E54112735F12706F22740D850C43E7
:10370A00850D448C42C0E0E50E450F6006850E40EB
:10371A00850F41D0E00239B1AF83AE82AD04758323
:10372A00BD8568825390F81275CE15821582EDB563
:10373A00040B12740F7006AA83A882E422E5682497
:10374A0017F87ABDF5688AA02417400DEDF208EF44
:10375A00F208EEF2181 87401220239AD7ABDE56852
:10376A002414F8225390F8E0F54AA3E0F54BA3E0BD
:10377A00F54C022EF77C001275EDC007120933D002
:10378A00077A95A8151209681273487002F422186C
:10379A00127348600274FFBF000430E7042230E766
:1037AA0009E568C39417F568E4220422FF127348F6
:1037BA00B5821318127348B5830C18127348B504EE
:1037CA00058A83888222EF700474448002744502 59
:0237DA0039B103
:10768D0012737F123A02B4F76012706 05390F89043
:10769D00BCB41275E0BCFF07123F9FD1F9604212D6
:1076AD003A02B4EC0280F8B4F80474028009B4E92B
:1076BD000280F7B4F91DE4C0E012737F122B37F18D
:1076CD0008D0E012706F4401121E6F123A02B4EC32
:1076DD000A80B012737F123A1F80C012737F023A74
:1076ED001F744812706F0239B102399D7D9B1220B3
:0E76FD0070B4FD03F105E42212737F027638AB
```

:1049E4007D09E4F8F9C238123A294012BD030040A7
:1049F4001502399D12737F122B29D23880E9B4EC49
:104A0400F3BD010280EB5185DDDD123A1F127060A7
:104A14005390F888F07F0030F005907F6951983000A
:104A2400F11051A9FB1262CA54FE4BF5F01262F167
:104A340088F00F30F205907F7C519830F305907F19
:104A44007B51981F30F40A907F7E5198A24392E7DD
:104A5400F030F505907F7D519830F60590C59C5156
:104A64009830F70E907F855198B40102E4F0909449
:104A740091F089F030F00651A9A2E0920912706F0A
:104A840022A238E833F8E933F9C2382212137A70D3
:104A94001BE58222C083C0825190B50700400DD02F
:0F4AA40082D083F0225190B4020040F80239A171
:103FAD00F50F701012404F150E123A2940030240C2
:103FBD003B12737FC00DC00EC00F122B35D00FD02A
:103FCD000ED00D1270605390F8122E924017754A54
:103FDD0000754B98754C00754DFF122ECD909800C5
:103FED00E0FDA38011750C98750B00751700120D6F
:103FFD0046909800AD0BE50F7025ED600D12404316
:10400D00E012427BA3DDF612405612706F123A0297
:10401D00B4EC02809FB4EE02801712737F800FED17
:10402D006007E0127BD4A3DDF912706F8003127468
:10403D0024123A1FE422050EE50EC39451400912D5
:10404D007424750E01750D01227410850DF0A4C335
:10405D00950E601E5010F404C0E0E50E75F010844E
:10406D00250DF50DD0E0FF250EF50E742012427BC7
:05407D00DFF9050D2232
:107CF100126306907F71E00271F6E4F54A754B76E6
:0A7D0100754C88754D05F4022F360D
:107F8600022EA40271F80271F6022EF702284B02A5
:057F96002F36022ECD84
:0B7F5E00D20DD28B0000C20DD28D228C
:107F2800027141020EFB02321C0204410217E202F6
:107F380022910264FD0264A6020933020A8F020E2E
:107F4800CF020A0B020C690245FD0266090209553B9
:067F5800020A4C0239B1DF
:106FD100E430B402D2E7300002D2E0300F02D2E155
:106FE100300902D2E2FF1262CAA2E0EF92E330401E
:106FF10002D2E4303202D2E50271F67FFF1221BEE5
:107001005390F8A2E09200A2E1920FA2E29209A2AB
:10701100E49240A2E59232C4548023F91262CA5428
:10702100FE49F5F01262F10261DD90BCCC1275E30C
:1070310085834B85824C7900E58345826 00BE0B402
:107041002002800509A3B908F5E4F54A894DF40247
:107051002F367F041216B87005C22A1216FB22D0F1
:107061 0065D066C004C083C082C066C06522D06599
:0D707100D066D082D083D004C066C06522F6
:107D0B0075F000800375F001122B2D123A1F1270C3
:107D1B006020430330F03012137A7026E58230F086
:107D2B00032 00321B15720F00A6004B160800FB12A
:107D3B007B800B3044116004B16E8002B1871270EE
:107D4B006F220239A160F774460239B1909497F013
:107D5B00907F6AF022D241B1E5B1AAD203C2AAB197
:107D6B00EAA1BE127DAA756701C201B1EA0265A044

```
:107D7B00B191C2A8B1AEC203C24180E1B1E5B1AECF
:107D8B00B191D2AA80E7C090C083C082C0E053906B
:107D9B00F8909497E4F0D0E0D082D083D09022D2A8
:107DAB00028002C20253A8D0B1EAC083C08290FC09
:107DBB00658007C083C08290DE3FC0D0C0E03094A6
:107DCB00031263C7A3E582458370F3D0E0D0D0D014
:107DDB0082D0835388F575A8D622756700D201022D
:107DEB0061DDD11820E41DD2E4C5F01262F3740FEB
:107DFB008FF01262F37D10E0C5F0ED1262F3A30D6C
:107E0B00DFF5C16374508002745102391122B2516
:107E1B00123A1F5390F8AB83AA82D136FFA360E8C6
:107E2B00B4290050E375F00E0262DA1554909C00F1
:107E3B00E022D11830E42120E731FE75F00F1262F9
:107E4B00DAB5071905F0E0FD1262DAA305F0B50506
:107E5B000CDFF375F000D17A8B838A82220E8EF0C1
:107E6B0020F304D17AC113D2F7D17A7452C11574AD
:107E7B000E0262F3123A02B4F94AE0604EB4090002
:107E8B005049E48C4A85834B85824C122F36E00493
:107E9B00127387123A02B4E42B122B29123A1F12D7
:107EAB007060123F9F5390F8E0B4FD18D136F5087F
:107EBB0012284BEC7011E583B4C505E582B4A00024
:107ECB004005800F02399D740EC1157404C11574E1
:107EDB0027C1157A9C7801C082C08390BE007FC5F4
:107EEB007E4E75F00B7B081274CB60E3127529E4A0
:107EFB00F0A3D0E0F0A3D0E0F0A374FDF0AE82AF1E
:0D7F0B008390BCCEEFF0A3EEF012706F2259
:101183005390F8122B25124416EE6052123A02B411
:10119300A34631B16045C0E01243CB6044124382A1
:1011A300D0F06008B402031269C9411C21EDC08369
:1011B300C082123A02B4EF06158115818004D082F1
:1011C300D083122B2912706012137A700EE582B449
:1011D300050040071270F6F221269911269B11269FA
:1011E300C11269B51269B91269ADC0F0C008C0096E
:1011F300123A295390F8D009D008401751BBE27036
:10120300E0D0E0F2E4790208B8000205A0F2D9F7D1
:10121300155422B4B8C21269BDC0F0C008C0091287
:101223003A2950C3B4B8B1123A02B4E4AB122B2931
:10123300123A1F12706012284BECA983AA82127013
:101243006F70A1B90803BA00005099E94A60958903
:101253004A8A4BE4F54CF54DD009D008C083C082CF
:101263001242D8D082D08321FF5390F8C083C0822A
:10127300123A29D082D083501B31B11243CB701163
:101283005A2BBE4F2123A295005B4EC0380EB22215E
:10129300DB1269C5519B80EC5390F875A0B778B306
:1012A300E2B4FD0122740851B4E4F2741851B4801D
:1012B300EF28F8500205A022E5092408F88508A0C4
:0512C300500205A0220D
:10699100740D803E7419803A741A8036741C8032EA
:1069A100741D802E741F802A74218026742C8022ED
:1069B100742D801E742E801A742F801674308012EC
:1069C1007431800E7432800A743480067436800209
:1069D10074370239B1E55414B49C0040B7C083C088
:1069E10082F583758200E0B4FF02800504F582E43C
:0669F100F0D082D08322E9
```

EP 0 481 606 A2

:10707E0011CD21BD118C21BD020A4C020A0B74FAEE
:10708E002515B406004006F515F97B95221269A95F
:10709E000269A5E4FBF9A81575A095E2C39481FCDD
:1070AE0018E270EC40190CE89405F808E2C4120ED0
:1070BE00CF40DDDC028008E2120ECF40D3DCEC7450
:1070CE00068001E4A8157A958AA028B40B0280BD2B
:1070DE00F515E2220269A57F1F80027F2102292D6C
:1070EE0011E531417058F22211E911D118E230E068
:1070FE001231B73111317E31A1120A0B20D5253153
:10710E0090410711D19481500711CD907342218285
:10711E0094075010F404FB1818E254F0F2DB01222D
:10712E00E4F2DBF42211E911CD60E018E2FF3190B8
:10713E00EF600B11D1186006E26401F264012211B6
:10714E008972D540C6907158218285000050 5365D2
:10715E001189B380EE1189A2D580F71189B2D5803D
:10716E00F6118980DE118972D580E7020A8F317E91
:10717E0011D1801D118C8BA07B06E493F3A319DB38
:10718E00F92290732F21827BA07917017E78177ACE
:10719E00A00182781D80F811D17406FA28F9E2FB5D
:1071AE00E3F2EBF31918DAF62211D17BA0791D7CEC
:1071BE00068AA0E28BA0F331FCDCF6229073362116
:1071CE008231EEEB5FFAE95E802031EEEB4FFAE9A9
:1071DE004E801711E9315331EEEB6FFAE96E800AEA
:1071EE0011A1AF03AE0101A17A00F8020C6918B823
:1071FE00FF011A19B9FF011B22020933020953122AA
:10720E006643E4F54A754B90754C00754DFF022FA1
:10721E0036C2D57F2D11EBC0D011A1D0D0BB005BF3
:10722E00B90108E55CA85D79208009B90414E55818
:10723E00A85979FFC398F440012930D503C9D399D1
:10724E0021F630D536B905004031E91243CB70270F
:10725E00850883850982740B127387E0FAA3E0C058
:10726E0001C083C08231F8D082D083A3E0FAA3E0BC
:10727E0031F81186D0012231902141021E18D2D54B
:10728E008091518C11D1E2600B18E27017B9050094
:10729E0050063133319041071240F245F070F3122F
:1072AE0096880D30269C57B027F2D1229251554EA
:1072BE00DBF7122E9250C47F2111EB11A1EB704718
:1072CE00E9604489F078008554A0E26037FA05A0A1
:1072DE00E2FBC3EA9B402D04FA801BE2FF15A0E3FC
:1072EE0005A009B5070C08E8B50301D340EDE5F09C
:1072FE0021F605F0A9F0E5F0600AB50201D35004BD
:10730E00780180E3E421F60269A511E512284BE528
:10731E0060B504004008127 34F5390F821F60239FD
:10732E00A1810000000010FF810026594131 81002B
:0A733E0000000002000000000000025
:10280600C2D5122E92403B15548554837582001210
:102816002E92402E15548554A07800E0FAE2FB7FF4
:1028260000B502010F40030FE502600BF9A308E0B3
:10283600FCE2B5040CD9F6BF0204D2D58003BF0171
:052846000022 1269955B
:106BD800C001C002C0031270605390F88554A0151C
:106BE800A0C0E07900E304F9E4F3D0E06005917512
:106BF800B42C669175C2E5FF9190AE83AD82BF4318
:106C080008BE0059BD00478054BF450B917DBD08A3

32

:106C180000504A7406801DBF4E21917DBD09005069
:106C28003CED6009BE0B00503474018007BE0A00B9
:106C3800502B74012DC39E50248013BF5802800E20
:106C4800BF5708BE0017BD06148003BF5013E412D7
:106C5800706FD003D002D00122740180F2743580A5
:106C6800090269CD741B8002741C0239B1E208B4B0
:106C7800200280F922E2B42EE808EE70E0AE059119
:106C880090E58370D8AD822285548315838882125B
:106C98000E9770C98A83E8C582C8C374FF95827449
:106CA80007958340B822C3C008C009C00AC00BC0FA
:106CB8000CC00DC00EC00F5002A1B2123A02B4ECC3
:106CC800038C000C001C002C003BF4335122B2115D4
:106CD800545390F88554A0780012706090 9800E2A0
:106CE800FBEDF0C3ED9B5002816CFAEB600708A343
:106CF800E2F01B80F6B155A14E12737F7401026E4B
:106D08004ABF4554122B29127060C006C005539023
:106D1800F8909800EEF0A3ED0444F0F51785820B87
:106D280085830C120D46D005D006C3E50B149E6072
:106D38000440028170EEC394079DFA850B82850C8E
:106D48008312737FB155E412706F026E42EA6007D6
:106D5800A37420F01A80F622BF4E2A122B29127033
:106D6800605390F8909800EEF0A37401BD00028083
:106D7800001042DC3CE9EC44DF51785820B85830C67
:106D8800120D46A14EBF571D122B29127060539049
:106D9800F8909800EDF0A3754A0085834B85824CE6
:106DA800122EA4A14E8169D381AF123A02B4EC31FC
:106DB800123A02B4F733C000C001C002C003C005D4
:106DC800C006C007127060BF432BEDD15D754A0045
:106DD800754B98754C008D4D74FF122F36740180D9
:106DE8004C12737F7401026E4A02699174388002F2
:106DF80074FD0239B1BF45028003BF4E1BEED15D61
:106E0800074000F0909800C015120C78D0E0B5150405
:106E1800744780DE74038015BF57387406D15D75DA
:106E28004A00754B98754C00122EF7740312706F58
:106E3800121E6FE4D007D006D005D003D002D001CF
:106E4800D000D00FD00ED00DD00CD00BD00AD00966
:106E5800D0082281699098 00F85390F8EB42908A04
:106E6800A0E35390F8F0A3126EADD8ED22C0E0C0B5
:106E7800D0BF45028015BF4E028010BF5017EE4D9F
:106E88006007ED1D700F1E800C8165C3E99EF9EA4D
:106E98009400FA8007C3E99DF9EA9EFAEB9400FB97
:106EA800D0D0D0E022E919700AEA1A7006EB1B70FC
:106EB8 0002A1F822C0E0C082C083BF5009126F0C43
:106EC800126EAD126E75C3E9950FF582EA950EF54F
:106ED80083EB950D401ABF500280217013A3BF4564
:106EE800 0028003BF4E0DC3E5829EE5839400500CDB
:106EF800C3800AC3E5829DE5839E40F4D3D083D046
:106F080082D0E022AB0AAA0BA90C221270601228C8
:106F18004B8583F0E582C3BC0001D312706F221247
:106F28007060C001C002C005C0067008B5F00574E5
:106F38004B0239B1F9AAF01970011A12418F2401D4
:106F4800FDE5F03400FE89F0EDA4F50C85F00BEDBD
:106F58008AF0A4250BF50BE5F03400F50AEE89F06C
:106F6800A4250BF50BE5F0350AF50AEE8AF0A42501

```
:106F78000AF50AE5F07017124153C3E582950CF53E
:106F88000CE583950BF50BEC950AF50A5002A1F870
:106F9800ED1D70011EC3E50C9DF50FE50B9EF50E6A
:106FA800E50A9400F50DD006D005D002D001127084
:106FB8006F22C082C083C0E0740912420BE5F0F072
:096FC800D0E0A3F0D083D08222B6
:10415300C0E0C0D0740F12420BE05407FCA3E0C0D0
:10416300E0A3E0F582D0E0F583D0D0D0E022C0E038
:10417300C0D0127060741212420BE05407FBA3E02C
:10418300FAA3E0F912706FD0D0D0E022740B80064E
:104193007409800274 0D12706012420BE0F5F0A3F3
:1041A300E012706F22740912706031D5F58285F0C8
:1041B300833197C39582E5F09583402B740980057D
:1041C300740D12706031D5F012737FE5F0F0127048
:1041D3006F2212420BE0F5F0A3E024015008C5F072
:1041E30034004003C5F022744B0239B15390F89068
:1041F300C599E0F5F00265AEC0D012737F50061C7E
:10420300BCFF02A190D0D0225390F88508832509E2
:104213 00F5825002058322C0E0C0D0740B510BE538
:104223004AF0A3E54BF0A3E54CF0A3E54DF0D0D065
:1042330 0D0E022C0E0C09012706020420451C580DB
:1042430000251D1202710201505201007801530 17A3
:1042530 0028010E070ED1241EF1265A0C2277413C3
:104263 0000239B112706FD090D0E01264FD3016079E
:1042730031EF74140239B122C0E0C0901270602093
:104283 00420451C580 0251D1202706301112E0703B
:10429300F71241EF126595C227C21974180239B19A
:1042A30012706FD09020130AE55BB55A0530B40243
:1042B30080E9D0E020150630140320E7B3F5F002BF
:1042C30064A65390F890C59CE090BCBAF02253903A
:1042D300F890BCBA225390F88508838509827F0839
:1042E3007420F0A3DFFC8554A0780015A085088313
:1042F300850982E2F5F0FF08E2F0A3DFFA74081201
:1043030 0420BE47F18F0A3DFFC12421A75A0A078D9
:104313 0030E2FFA3F0717BA3E2FEF0717BA3E2FD29
:10432300F01244C7C3ED94FFFDE50E4407CE9EFE95
:10433300EF950DFF402EA3F0A3EEF0A3EDF0ED1DDE
:104343007008EE1E7004EF1F601A75F00090A02A2B
:10435300E0FBA3E0FAA3E0F9C3ED99EE9AEF9B50DB
:104363000B20F00312602C74330239B190A030EFAC
:10437300F0A3EEF0A3EDF02208E8700205A02212EC
:104383007060C0F05390F88554A015A0780090B7E2
:10439300B3E2FFC082C083EFFE7801E0B4FD03F413
:1043A30080677003048049E0F5F0E2B5F00F08A3DD
:1043B300DEF5BF08028004E0B420028032D083D04F
:1043C30082742012738780CB127060C0F0F5F09076
:1043D300B7B35390F8C082C083E0B4FD0280286075
:1043E3001B74082582F5825002058 3E0B5F00DE4C5
:1043F300D083D082858308858209801 1D083D082BF
:104403007420127 38780CE7401D083D082D0F012CF
:10441300706F221270607EFF5390F885548315836A
:10442300758200E0602DFFB409005027B40301FE3C
:10443300A3E0B42300401CB46100400DB47B0050E2
:1044430003C2E5F0B47F00500AB42A011EDFE11273
```

:10445300706F220269C1C0D0C000C001C0071270D2
:10446300605390F8740F12420B7F06780AE0A3F6AC
:1044730008DFFAC37F03780C790FE697F61819DF84
:10448300F9780CE62401F618E63400F618E6340051
:10449300F6B4080050241244C7C37F03780C790F85
:1044A300E697F71819DFF9500474018001E41270DC
:1044B3006FD007D001D000D0D02274330239B17449
:1044C300150239B1C0E0C0D0C005C006C0071270E4
:1044D300605390F812418FAFF0FEC374FF9E7407D0
:1044E3009F40DC0EEE70010F124197ADF0FC8EF091
:1044F300A4F50F85F00EED8EF0A4250EF50EE5F074
:10450300340CF50DEC8FF0A4250EF50EE5F0350D16
:10451300F50DED8FF0A4250DF50DB40800509BE5C6
:10452300F0709712706FD007D006D005D0D0D0E0CE
:1045330022C001C002C003C005C006C007127060DC
:104543005390F890A030E0FFA3E0FE1241531241D4
:1045530071E9197008EA1A7004EB1B6030D1EEEBB5
:1045630054076F7004EE6A60298AA08B90E38C90E5
:10457300F0191582B9FFF4E58315837006EC54072F
:104583001C600AEA1A70D8EB54071B70D274FD0240
:1045930039B1124459530407127626124171 8B0D17
:1045A3008A0E890F7509B37508B7850982850883 53
:1045B300E0B4FD028042603C124171C3E9950FEA09
:1045C300950EEB950D502D124153E50C2582F58286
:1045D300E583350BF583EC350AFEAD83AC8254F8E5
:1045E30070ABE50C29F9EA350BFAEB350AFB54F805
:1045F300709BF106F11380B2C1DEC001C002C0039B
:10460300C005C006C007127060C008C0095390F807
:104613 0090A030E0FBC0E0A3E0FAC0E0A3E0F9C063
:10462300E0E9C39400FDEA9408FEEB9400FF75F003
:1046330017150AC078E838D82124171AF03AE02BC
:10464300AD01D001D002D003D1EEEB54076F70045B
:10465300EE6A60268AA08B90E38C90F0090582B9FC
:104663000000F40AEA70060BEB5407600C0583E5833C
:1046730070D80CEC540770D2A190EC5407F50D855B
:10468300830E85820F5390F8741212420BE50DF0DE
:10469300A3E50EF0A3E50FF0F113850982850883E6
:1046A300E06032B4FD02802F124153C3E5829400CF
:1046B300F582E5839408F583EC9400FEAD83AC8228
:1046C30040B6124171E99400F9EA9408FAEB9400B8
:1046D300FB40A5F10680C1D009D00812706FD00746
:1046E300D006D005D003D002D00122E59054F8447F
:1046F30030F5F0EC45F0FCEB45F0FBE96582600238
:10470300A19022740F12420B7806E6F0A3D8FB2285
:0B47130074202509F50950020508225A
:10789200123A29500CB4F97012737F122B25123A46
:1078A2001F1270605390F8122E92500790B7B3C215
:1078B20038800F124382705315548508838509 82DC
:1078C200D238C083C08290798E3182D082D0832018
:1078D200380CC082C083E0B4FD02803C60197F088E
:1078E2003112516751145126511D5126E0127A6C02
:1078F200E0127A6C127424203822D083D0E0242043
:1079020075F58250CE058380CA02399D742C0239B1AA
:1079120075E012427BA3DFF922D083D0829079BA3180

:10792200821 23F9FAB83AA8290A02D31E331F7519F
:107932006790A02A31E390A02D31ECEA2401FAEB02
:107942003400FBEC3400FC31F7316C510E315A310A
:10795200F512742412706F22E560FF909496E0F4A1
:1079620003447FFE7DFF90A03022127060 90A03011
:1079720031E390A02A31EC31FB127A8F12706F2220
:10798200E49320E70612427BA380F5220D46494C80
:10799200454E414D4520 20232020504E5452202058
:1079A2004C4E544820434E5452202053544152547A
:1079B2002053544F500D0A800D50524F4752414DA3
:1079C2002020202020204441544412020202020204652C3
:1079D200454452020202020 46494C452020200D0AE4
:1079E20080E0FFA3E0FEA3E0FD22E0FCA3E0FBA316
:1079F200E0FA2231EC31FB8010C3ED9AF8EE9BF9EC
:107A0200EF9CF5038902880122127A8FC082C0831B
:107A1200801B127A7CC082C0838027127A82C08245
:107A2200C0838017127A82C082C083800790980038
:107A32007F033112909803E012427B909804E01287
:107A4200427B9098057F0331125167D083D0822206
:107A5200C0E0C45159D0E0540F2430B43A0040027F
:107A6200240702427B742002427B127A59A3E0125D
:107A72007A52A3E0127A52A380EB7B007A00800A4A
:107A82007B008003E0FBA3E0FAA3E0F9A3E4F50A9C
:107A9200F50BF50CF50D7F18C3E933F9EA33FAEB70
:107AA20033FB780A7E04E636D4F608DEF9DFE9C055
:107AB20082C0839098007F04780DE6C451CBE651D2
:107AC200CB18DFF6D083D08222540F2430F0A322C9
:105FFC00122B25123A1F1270601244 16EE70051205
:10600C00331C800B124382600302 69AD12602115B0
:10601C005412706F22C008C009124534D009D00840
:10602C00AA08A8098A8388827420127391BABC05C5
:10603C00B8B302800A8AA0E2F012736EA380EEE479
:09604C00F07408127387E4F022DD
:107AD200AF83AE82123A02B4EF18122B2D127060ED
:107AE20012137A7015E58212706F601DB4040B02D6
:107AF2007C2F8F838E82E4023FAD0269B1026991CD
:107B0200ED4E701F74350239B1123A02B4EC0A120A
:107B12003A02B484E871268005127BBB80021554B8
:107B2200123A1F22122B257801E480027401126B93
:107B3200D86009123A02B4EC7B0269D1BF501B71C2
:107B420002ED14B41000400BB421004004745080C4
:107B5200022430F5F012627180D2BF5830ED1D70F0
:107B620004EE1E60C775F00412624A12627F20E7BB
:107B7200FAB4100040E7B44000400AB4510040DDBE
:107B82001261FD80D875F04012627180D0BF570338
:107B92000269CD126CAE7019C082C083909800E069
:107BA200FA6089A3E0127BD4DAF9D083D082027B17
:107BB2002E123A02B4EE02801812737F12627FC252
:107BC200E7B41000400575F050800375F040126272
:107BD2007122C0E012627FC2E7B45003127BFDD073
:107BE200E0F5F0126288740A1470FD12627F20E7D9
:107BF200FAB4100675F04012627122C0005390F878
:107C02008554A0780075F04012627 17B1012629A5E
:107C1200F208DBF91261F578007B10E2F5F01262EE

36

:107C22008808DBF7D00075F04012627122123A0226
:107C3200B4EC75123A02B48417122B25E4F9FA78DF
:107C42000180027401126BD86009123A02B4EC503E
:107C52000269D1BF501E7102C3ED99F5F0EE9A4050
:107C620003FEADF0ED1D70011E5005740D127CBABD
:107C720091E180CFBF580491E180C8BF57030269E8
:107C8200CD126CAE7017C082C083909800E0FB608A
:107C9200B2A3E091BADBFAD083D08280A6123A0274
:107CA200B4EE03027B20155412737F740D127CBA5A
:107CB200740A127CBA027B22C0E0B40D05E4F9FA20
:107CC2008017B40A028012B47F0AE97004EA6002E3
:107CD2001A19800509E970010AD0E012427B22EDEF
:0F7CE2001D7004EE1E60077420127CBA80F12220
:10770B00122B25124416123A02B4EC0280051273A6
:10771B007F8018122B2115545390F88554A07801B3
:10772B00E2B44804D23B8005B44212C23B123A1F6A
:10773B0012706012438215546006269AD02399DC6
:10774B007B98790012418FF1C0124197F1C07448B8
:10775B00203B0274421277B7740D1277B7740A127A
:10776B0077B79098000E012427BE0A3B40AF7A23BF4
:10777B009215124153124197ABF0FAEA4B601F126C
:10778B00418FAFF0FE1241FBF1B012734F12427BEF
:10779B001241FBF1B070F3EA1A70E01B80DD12416D
:1077AB00EF12706F22EE1E7002EF1F228BA0F309F7
:0F77BB00B900010B22AAF0F8120EFB742C80ED1E
:10688C00122B255390F88554A015A07800E2B40A79
:10689C002108E2B4211CB809F808E2FB90A001E041
:1068AC00BB4204D2E78005BB4828C2E7F0D21502F0
:1068BC00009D124416123A1F1270605390F8909873
:1068CC00007F2012423612069560F8B40A02800648
:1068DC00DFF17417805A909800120E97703BE84ABB
:1068EC006037BA0803B80000502F8A4A884BA312AD
:1068FC000E9770218A4C884DE0B42C05A3E0B4426D
:10690C0004C23B8005B448CAD23B124382600E14C9
:10691C00060350269C97416801774158013121 2BB86
:10692C00E2701712421A124459601F14601074332B
:10693C00C0E01241EFD0E00239B1743C80F2126039
:10694C0021124382B401CB1242D8A23B92151241C0
:10695C0053124197ABF0FA12418FAFF0FEEA4B6045
:10696C001274203188124236318870F9EA1A70E7B5
:10697C001B80E41241EF155412706F2212736612D1
:05698C0041FB0277B0A1
:10408200123A02B4EF02800302768D122B2D126FC8
:1040920013506FC5F0706BC5F0B405004064124355
:1040A200CB705C123A02B4EC5C123A02B48456123F
:1040B2002B25AF83AE82123A02B4EC49123A02B413
:1040C2009012123A02B4E43D122B29126F13503FA0
:1040D20011F580098F838E821241A811F240308F30
:1040E200F0EE126FBA126F27126F0C126EAD802BA8
:1040F200124193AFF0FE124197C39EC5F09F220278
:104102002A7D0269B10269910269CD74FD80097448
:104112004B80050269D174380239B17801E480021A
:104122007401126BD86008123A02B4EC1B80E412DC
:104132006EBC50E2BF500280E7BF58028005126D8C

37

:10414200AF7008126E7580D812737F1554123A1F21
:01415200224A
:1029A900122A8D12445912418F2401F9E5F034009D
:1029B900F5F0E50D700DC3E50F99E50E95F050039F
:1029C9001245FD1241971241DD126F27126F0C1249
:1029D9002ABCC3E9950FC0E0EA950EF5F0EB950D19
:1029E900D0E0401A04700205F07008C5F0600FC508
:1029F900F015F014C0E0E4122B10D0E080EBC00811
:102A0900123A1FD0081241C3124197126FBA22120B
:102A19002A8DAF83AE82123A02B4EC55123A02B44F
:102A29009018123A02B4E449122B29126F13504B31
:102A3900C0E045F06045D0E080078F838E82124167
:102A490093AFF0FE124197C39EE5F09F402D8FF0A2
:102A5900EE126FBA126F27126F0C12471E122ABCA0
:102A6900C008123A1FD0081247B0220269AD0269A4
:102A7900B1026991743280090269CD744C80027483
:102A8900390239B1123A02B4EFE7122B2D126F1342
:102A990050DCC5F0B400D7C5F0B4050040D01243EE
:102AA900CB70D1123A02B4ECC8123A02B484C21201
:102AB9002B25227420122B107801E4800274011254
:102AC9006BD86009123A02B4EC370269D1126EBCB4
:102AD900050ADBF500280E6BF5805126E7580DE12F8
:102AE9006CAE7020C082C083909800E0F5F0600B56
:102AF9005390F8A3E0122B10D5F0F5D083D0828043
:102B0900BC12737F155422C0E05390F8EB42908AAF
:082B1900A0D0E0F3126EAD2222
:10471E00C090C007C006C005C000C0F0127060C0D7
:10472E0003C002C0015390F890A0301279E390A01C
:10473E002A1279EC1279FB12418FC0E0C3C999EAB3
:10474E0095F0EB9400405678F0790A7C06E7F6086F
:10475E0009DCFA8F0A8E0B8D0CD0E0C3C005CD9DFF
:10476E00F50FEE95F0F50EEF9400F50DCDD0051288
:10477E0041DD05F0AC078E838D82FFD001D002D0D3
:10478E00031270601247E1D001D002D00312706F95
:10479E00D0F0D000D005D006D007D09022744902B8
:1047AE0039B1127060AB0AAA0BA90CC00178F0796E
:1047BE000A7D06E6F70809DDFAD001AC0A850B83FF
:1047CE00850C8212418F1241DD05F0FF1247E11276
:1047DE00706F22E59054F84BF5908AA0E3C0E0E5A7
:1047EE009054F84CF590D0E0F0E9197005EA1A7083
:1047FE00011BE58215827007E583158370011CDFAE
:05480E00D2D5F0CF221D
:107F9B00801E1F7F41424344454647484944B4C4C
:107FAB004D4E4F50515253543738395556343536 50
:107FBB005758313233595A30202E0D5000000000E3
:107FCB00809D9C88243D030400222C00000028295E
:107FDB0000000F3A00121300121611A00169899B6E9
:107FEB00009893B2B3991A0FA0AE8D030000000056
:027FFB00030081
:104813008AA0E3FE09E3FF09E970030A8AA0E3FC27
:1048230009E319FDEE4F6027EC4D6023EE5FF47052
:104833004780801C7800C3EE9CFEEF9DFF4004C3
:104843008B808F3B803005008E9C3945B40C3C336
:1048530022124E78E8D322C0D053D0E7E52F540F6D

:10486300240283801000080808080804040404CC
:104873000808040000F52A8530F0A4F529E5F0C501
:104883002A8531F0A4252AF52A4004E5F06006754F
:1048930029FF752AFF8AA0C3E3952909E3952A19FD
:1048A300401443D0088AA0C3E3952909E3952A1944
:0A48B3004004D0D0D322D0D0C3229D
:104CA900E4F514F515F532F533F53414F530F5312D
:104CB900EFFE783B8AA0E3F6F5F00809E3F645F044
:104CC9007002A122301F1030270D1874CD124D9695
:104CD900ECF608EDF6C22718C3E6953008E69531DB
:104CE900500618863008863118C3E6951408E695EB
:104CF9001540061886140886151244DA9087403294B
:104D0900F9E43AFADEAE7830740A124D96C3EB959F
:104D190014EC9515ED94005002C32274A08514F08B
:104D2900A4ACF08515F074A0A42CFCE435F0CCC338
:104D39009530EC953150087510FF7511FF80127888
:104D490010E5302514F608E531351513F618E61384
:104D5900F6783B302112C221E52FB401028003B459
:104D69000606A63008A63118EFFEE4C0E0C3E51038
:104D79009608E5119608D0E033DEF020220DF5F013
:104D8900EFFEE4C5F013C5F033DEF8D322FB86F05D
:104D9900A4CBACF00886F0A42CFCE435F0FD182275
:104DA90018E62532F53208E63533F533E43534F5BE
:104DB9003422E52C543F2440F9E43490FA8AA022A5
:104DC900C0D0C0E043D018B1BBD0E0F3052CD0D09F
:104DD90022C0E0C0D0E52C603420222BB40102802F
:104DE9002643D0187B907840B1BBD17EC3E52C1304
:104DF900FC8BA0E2C5F08AA0E3C5F0F38BA0C5F057
:104E0900F2D17ED145DCEAD0D0C3D0E022D0D0D3D4
:104E190080F8C0E074018016C0E074028010C0E020
:104E29007403800AC0E074048004C0E07406C0D032
:104E390029F9E43AFA8AA0D0D0D0E022C804700354
:104E49000B8BA0C822C0E07412802EC0E0740E80C3
:104E590028C0E0740A8022C0E07408801CC0E07495
:104E6900068016C0E074048010C0E07403800AC094
:104E7900E074028004C0E07401C0D0C3C999C9506C
:104E8900031A8AA080B1853238853339853A22AC
:104E9900C0E0C0D0E5322538F538E5333539F53984
:104EA900E534353AF53A808FC0E0C0D043D01820B8
:104EB90023457838793C3E6970809E6970809E65E
:104EC9009774387835401C8F9C30808E613FF1804
:104ED900E613FE18E613FDC3EF13FFEE13FEED1301
:104EE900FDE72DFD09E73EFE09E73FFFC3ED960803
:104EF900EE9608EF96400B853835853936853A3771
:104F0900C116C11078497B04E42323FCE654034C01
:104F190008DBF622FFE4FEFCFB124E7E0E8EF0E368
:104F2900A42BFBE5F03CFCEEB52A027E00DFEAED9E
:104F3900124F44ECB52902D322C322F8EBFDECFE53
:104F4900E4FC7F10C3ED33FDEE33FEEC33FCC3EC20
:104F59009840020DFCDFED22D222D223D221D227A2
:104F6900C22543D00885010985020A752C00024E25
:0D4F79002143D0187A9079408AA0AF2C22F5
:1048BD00E4F532F533F53404F530F531D2D5EFFEAC
:1048CD0014302201E423243BF88AA0E3F6F5F00826

```
:1048DD0009E3F630250619124E788003124E1B455A
:1048ED00F06067C318E6953008E69531500061886D6
:1048FD003008863130210310D503124DA920220531
:10490D00181818800108DEC330213DC221E52FB4EF
:10491D000517C3E53F9543E5409544E53F8540F0D8
:10492D00401DE5438544F08016B4040EE53F8540F7
:10493D00F0C333C5F033C5F05005E53B853CF07849
:10494D003BF608A6F0124DA9D322C322C0D043D006
:10495D0018FFAEF0783B7949E6FA08E6FB08E62A3F
:10496D00FA08E63BFBE433FC18800BC0D043D018AB
:10497D007F017E077949EA8EF0A4FAE5F0CB8EF03F
:10498D00A42BFBE5F03400CC8EF0A42CFC7D003183
:10499D00D64007ODED20E32D80F5EA2532FAEB35F3
:1049AD0033FBEC3534FCC3EA33FAEB33FBEC33FC6D
:1049BD0031D640010DED600DF709B408005006DF4A
:1049CD0097D0D0D322D0D0C322C3EA9532FAEB953B
:0749DD0033FBEC9534FC22D2
:104F86008AA0C3E53113FCE53013FBC3E39B09E3B9
:104F96009C194022E5308FF0A4FBACF0E5318FF090
:104FA600A420D2122CFC400EC3E39B09E39C1950AB
:104FB60005124E21D322C322124F61752F027F02A2
:104FC600124CA9506DC0E0124E66124CA9F8D0E002
:104FD60050607008E8705B124E78800CB40153E89C
:104FE60020E14F124E6CC22275A07F787BE2F52A33
:104FF60030E00104F52B12506F5037124DC9E52BE6
:1050060030E005124E788003124E4EC223D52BE6B1
:1050160020220312A4E217F02124CA95015C0E01225
:105026004E5A124CA9F8D0E050082022087003E826
:10503600600AC38030B402FAE820E0F6124DDA4086
:10504600F1AF2C7B9078408BA0E2B4FE0DEF14708C
:10505600E1E52A30E0DC152C800A124E45DFEAE550
:105066002A20E0CED353D0E7227F05124CA9500B5D
:1050760020D008124E8F1185B4FF02C322D32254CA
:105086000F048322FE313837353430FF333239FF8F
:1050960036FFFFFF124F61752F011277EE50171082
:1050A6002305B427078012B4270C8003124DC97F4D
:1050B60009124F8640E4C38012124DDA40F81258A6
:0F50C6001175A07F787BE2B52CECD353D0E72295
:1077EE007F05124CA9501B125F88124E8F30230C4E
:1077FE00B406028007B40C0AC2227406127858B47A
:10780E00FF02C322F52A124E4E7F04124CA950F2EB
:10781E0012784512787DB4FF0280E730E508C52A5C
:10782E0030E7DFE48005C52A20E7D7252A124E99D6
:10783E00124EB150CDD322C0E0C3E5169530E517F8
:10784E0095315003125F82D0E022541F04832280B0
:10785E00FFFF06FF0309FFFF0108FF05FFFFFFFF04
:10786E000007FF04FFFFFF02FFFFFFFFFFFFFF54B4
:10787E000F048322FF140AFF00FFFF2B1EFFFF2AB7
:04788E00FF2928FFA7
:10581100C0E0C0D0124F7AE3B409042427801550A8
:1058210004243180FB42400500424378006C3942B
:1058310024125840F3124E1BDFDDD0D0D0E02204F9
:1058410083222D2E202A242F2B25124F61752F0301
:10585100C2241258E0501E30230EC22330E4163009
```

```
:10586100E709C222C2E7800320E40D124DC97F126D
:10587100124F8640DDC3806320E7FAB413278A4FB5
:105881008950853051853152124E211258E050090C
:10589100C2E7B41304D22480D5AA4FA95085513050
:1058A1008552317413124DC9124DDA40C8125A543F
:1058B100301A1E20241B7B9078408BA0E2B4640236
:1058C10080B3E52C1428F8E43BF5A0E2B46402802F
:1058D100A475A07F787CE214B52C0053D0E7227F19
:1058E10004124CA95034125927B4FF02802CF52A16
:1058F100F188124E8F124E547F03124CA9501B1285
:1059010078457009C52A30E711C2E78005C52A200C
:10591100E708252A12593CB4FF02C322124E9912FC
:105921004EB150F6D322540F048322FF0008FF101A
:10593100FFFF8018FFFF88FF9098FF541F04832208
:105941000F00021206FF11FF0C010A1307FF90FF5F
:105951000D040B1008FF93FF0E05099103FF92FF41
:105A5400C0E0C0D0124F7AE35169F3124E1BDFF756
:105A6400D0D0D0E0220483223031323334353637 7B
:0C5A740038392D243A2F2E2B6162636418
:10597200124F61752F061259B7502530230EC223DC
:10598200B40B028014B40618C222800DB40B02803C
:1059920012B4FF02800A124DC97F08124F8640D608
:1059A200C3800E124DDA40F8125A14500412596193
:1059B200D353D0E7227F03124CA9502A1259EAB4DA
:1059C200FF028022F52AF188124E8F124E5A7F0270
:1059D200124CA95011127845252A31F7124E99120C
:1059E2004EB15002D322C32254070483 22FF000483
:1059F200080C1014FF541F048322000702FF0A0B35
:105A020006FF04FFFFFF090803FF01FFFFFF05FF79
:105A1200FFFFC0D043D018124DBB124E7EE3F529D2
:105A2200E52CC39401201D18752A097D0B124F1D08
:105A3200501C124DBB124E78E3F529E52CC394029B
:105A4200752A0A7D0B124F1D5004D0D0D322D0D01C
:025A5200C3226D
:10596100C0E0C0D0124F7A1F201D011F8F2C025A98
:015971005BDA
:105A8000124F61752F0B7F06124CA9502AF52A126E
:105A90004F6B124E21124CA9501D124F6B852AF0EC
:105AA00030F50330E507C222124E338003124E2D2B
:105AB0007F04124CA94002615AF52A124E8FF188D8
:105AC000124E54124CA950EF127845201F11AF2AE4
:105AD000BF000470E28008F54F6FB40FDAE54F1293
:105AE0004E78302202E52A124E99124EB150C8B4B7
:105AF0000A0050C3124DC9C223C009C008202205A4
:105B0000124E2D8003124E3312485AD008D009503D
:105B10009F124E60124E607F05124CA950993022A0
:105B20000820E036124E21800820E42E124DDA4083
:105B30000298A0D890B75A07F7969E3600614C395E6
:105B40002C5017715F4013301E06715F400C052CFE
:105B50001277CAD3AA0DA90B8001C353D0E7221232
:105B60004DBB124E7EE3FF124E7EE52C6034152CA9
:105B700014602FFED2D57C00E3124E7EC330D509CF
:105B800023B40A004002940AB33CFCB2D5DEE9EC2F
:105B900075F00A84740AC395F0B40A01E4B50F02E3
```

:105BA000C322D322124F61752F04125CCF504512CD
:105BB0004DC9B467028008B468028003B469081054
:105BC00023E820222F8030B481028005B48022C2D5
:105BD00022124E5A124E787F071248BD740675F095
:105BE0000D124959E54EB4030B1023BE3022058037
:105BF000063023B6C3800E124DDA40F8125E0C5008
:095C0000F3125C09D353D0E72232
:105CCF007F061248BD5024740575F00B12495950C8
:105CDF001AE549254B254DB40B11124F0D10E70551
:105CEF00125D068003125D89B4FF02C322124E8F2C
:105CFF00124EB150F6D3220483220223FF30FFFF4E
:105D0F00FFFFFF5EFF2205FFFF01FFFF160826FFC3
:105D1F003C12FFFFFFFF2CFF25FFFF37FF2FFFFF79
:105D2F00FFFFFF65FF3618FFFFFF0AFFFF1B3A3D1E
:105D3F004FFF13FF4CFF1714390929FF4D1DFFFFAC
:105D4F00FFFF32FF28FFFFFF1C0BFFFFFFFFFFFFCF
:105D5F00FFFFFFFFFFF4344FFFF2062FF814AFFFF6A
:105D6F00FFFF66FF61FFFFFF4956FFFFFFFFFFFFCA
:105D7F00FFFFFFFFFF191AFFFF5B048322FF63FF83
:105D8F002D0FFFFFFFFF2EFF38FFFFFFFFFFFFFF6E
:105D9F00FF64FF5FFFFFFF4E5360FF3B4BFF21FF91
:105DAF005DFFFF40FFFF5CFFFF3FFF50FFFF0CFF5A
:105DBF004524FF2BFFFF4657FF2AFFFF58350E33B1
:105DCF000607FFFF1534483EFF0DFF47FFFFFFFF9C
:105DDF001011FFFF5AFFFFFFFFFFFFFFFF27FF31EC
:105DEF00FFFF6754FF80FFFF55FF69FF680004FF47
:105DFF00FFFF1F42FFFF51FF410359521EC0D04307
:105E0F00D018E52CC39403FF7A9079408AA07E00C6
:105E1F00E3FB7C000E124E1B8EF0E3A42BFBE5F090
:105E2F003CFCDFF07467124F448CF0124E1BE3B54D
:0A5E3F00F004D0D0D322D0D0C3224B
:105C0900C0E0C0D043D01891C6AF2C1F1F1F8AA077
:105C1900E3124E1BC39467FE7D00C2D58AA0E3F54B
:105C2900F0124E1BEE20E11F20E013E5F0C3944073
:105C3900400694204004804 8E5F02420801EE5F0C9
:105C4900C3946040F38039E5F0C394645032E5F0C1
:105C590075F00A84243091BEC5F0243091BE30D548
:105C690006C2D5EEB2E0FEDFB38D2C91C68BA0E261
:105C79008AA0F3124E1B124E45DDF2D0D0D0E0229D
:105C8900E5F0B46002802CB461028027B46208D2C6
:105C9900D5EEB2E0FE801CB463047E028015B464C4
:105CA90008EE20E00E7E01800AB46507EE60047EEE
:105CB900080008 0B28BA0F2124E450D227A9079B5
:065CC900407B9078C02230
:105E4900124F61C22312678F50531267FF751206F2
:105E5900D224752B067510001260555 03B124DC99E
:105E6900D52BF5751300E5106036B43F087513029C
:105E7900030162A802B7F067E000330E7010EDFF9FA
:105E8900BE0315E51020E50875130430170F80507F
:105E9900751308301907800812674140 03C38067EA
:105EA900124E2112678F50F5124E21E513B40303E8
:105EB9001267FF85101175100085122BC22412601C
:105EC9005550DA124DC9D52BF5E5137013E510B409
:105ED9003F087513013016C580067513073019BDC3

42

```
:105EE900E513B4040B124E2112678F50B0124E788D
:105EF90012678F50A81269F750A31277CAE513C326
:0B5F090014132407F52FD353D0E72218
:10678F001268355019E529252A94054011E52995F8
:10679F002A5005C3E52A952994035002D322C32218
:1067AF001268355014E529252A9406400CE52A95E0
:1067BF0029400694014002D322C322C2217F021234
:1067CF0048BD50077F0312686C4002C322AB3BAC3D
:1067DF003C12685B8F29AB3DAC3E12685B8F2AE59C
:1067EF0029952A5005C3E52A9529940350DDD32214
:1067FF00C3E53F953DFBE540953E13F515EB13F5CE
:10680F0014E53D253FFBE53E354013FCEB13FB75CF
:10681F00F007EBA4F53585F03675F007ECA42536B7
:10682F00F53685F03722C2217F031248BD50077F0E
:10683F000412686C4002C322AB3BAC3C12685B8F06
:10684F0029AB3FAC4012685B8F2AD3227F00C3EB8A
:10685F009532FBEC9533FC40030F80F222C3E534F5
:10686F0013F534E53313F533E53213F532DFEEE587
:0D687F00347008E53245336002D322C32295
:106055007F041248BDC0D043D018783D3024027863
:106065003FE62514FA08E63515FBE51530E701C3CB
:10607500E433FCD0D0124978E549603954030303 71
:10608500FF740375F007124959E549254BB40725F7
:1060950078493024010 8E64FFF08E62323234FF50E
:1060A500F07F147E012024027E15126192B5F00264
:1060B50080050EDFF5C3221FBF0A00B3E51033F5D7
:1060C50010E5F02323540370027404C0D043D018A4
:1060D500783F202402783D12613489148A15D0D086
:1060E500EF1261BDC0D043D018783B20240278411F
:1060F500126134EA651530E70875140075150080DE
:1061050012C3E99514EA9515EA30E701B3500489FD
:10611500148A15D0D0124E8F124EB14008C3E51027
:1061250013F5108090EFB40A004002940AD322F5CB
:10613500298532F0A4FCADF0E5338529F0A42DFDC9
:10614500E5F03400FEE5348529F0A42EFEE5F034B3
:1061550000FFEC75F049A4A9F0ED75F049A429F903
:10616500E5F03400FAEE75F049A42AFAE5F03400BA
:10617500FBEF75F049A42BFBE5F013EB13FBEA13DA
:10618500FAE913F9C3E996F908EA96FA22EE8322A9
:106195005A635C6AE5EC55A39C53629BE4529D549B
:1061A5002D5BA4AB535C6355ECE56A9CA35A549BE9
:1061B500E452AB622D5BA49D04832201010201021E
:0F61C50001040203020302020101010101 03AF
:10674100E52CB4041CE510540F6008B40F13751345
:1067510006800375130530183375120 4124E6080DC
:1067610029301728850109 85020A744429F9E43A78
:10677100FA12485A501685010985020A124E2DC295
:0E6781002275100075130 3752C00D322C3225D
:1069F700C0D043D018E513A2E0B39222124DDA407B
:106A070027E5136023C3940340689402407E9402F1
:106A170040352 0E00671C8C511C510E510B400085F
:106A27007155EEFF71944003026B3FEE2F7185E3C2
:106A3700B51DF57F0DE4124DBDE3CEF3124E1BDFFE
:106A4700F8052CD0D0D32220E002518DE510540F49
```

EP 0 481 606 A2

:106A5700B4001CE4124DBD7F047E00716D740112F9
:106A67004DBD7F03717CEE7185E3B51D0280D402B5
:106A77006B3F20E002518DE510543FB400F1715592
:106A8700E3B51DEB80BDE510F4F5102220E007719A
:106A9700C8518D53103F7405124DBDE3B40A004031
:106AA70002940AC394034062604214602E3FE1219
:106AB7004E78E32EFE124E78E32EFE124E7EE3FF53
:106AC700124E21E32FFF124E21E32FFF805E124E5D
:106AD7007EE3FE124E7EE32EFE124E78E32EFE126A
:106AE7004E7EE3FF124E21E32FFF8040124E7EE3DE
:106AF700FE124E72E32EFE124E7EE3FF124E21E38C
:106B07002FFF124E1BE32FFF8022124E7EE3FE1251
:106B17004E78E32EFE124E7EE32EFE124E7EE3FFEC
:106B2700124E27E32FFF124E21E32FFFEE75F003DE
:106B3700A42F718571AE4004D0D0C322EEB51DF8E5
:106B4700124DBBEEF3052C7F087E00026A3CE4126F
:106B57004DBD7F067E00716D7401124DBD7F0571BD
:106B67007CEE7185ED22E32EFE124E21DFF8EE75E5
:106B7700F003A4FE22E32EFE124E21DFF82275F069
:106B87000A84E5F06005740AC395F0FD227E0AEEDB
:106B9700240983B511031ED322DEF4C3223F343206
:106BA700312C26232A29257E0AEE240983B51003D2
:106BB7001ED322DEF4C322070B0D0E13191C151664
:106BC7001AE5107F067E0013CE33CEDFFAEEF510FE
:016BD700229B
:1077CA00C0E0C0D0124F7AE32430F3124E1BDFF729
:1077DA00D0D0D0E022C0E0C0D043D018FFE51212CA
:0477EA004DBD80E32E
:105F1400D222C223C22443D008852C12751000E576
:105F240013A2E09225124E2130250C850109850229
:105F34000A124E781267FF1267AF503A752B05129A
:105F440060555013124DC9F1881267CA5005D52BFC
:105F5400EE8004152BF182202505124E6C8003126D
:105F64004E2D7405C3952B600DFF125F8F5007EF04
:105F74001277DFD3800485122CC353D0E722851611
:105F84003085173185301685311722C0D043D0189B
:105F9400B40502801BB4024FE512124DBDE375F047
:105FA4000AA4FB124E1BE32B5403651070398033393
:105FB400E512124DBDE3FB124E21E32BFB124E21E1
:105FC400E32B75F003A4FB124E7EE3FC124E78E340
:105FD4002C75F009A4FC2B75F00A84E5F0125FEF30
:105FE400B51004D0D0D322D0D0C3220483221814F5
:085FF40012110C06030A090555
:0A7F1800A5A5A5A5A5A5A5A5A5A5ED
:1061D400C082C08390004041FFE520C082C083900C
:1061E4000C041FFC082C083900140D293E0F461BB
:1061F4002C082C08374018017C082C0837402808D
:1062040000FC082C083E5F05403440490946D512D73
:10621400511B90000041FFC0E0C000784B517F301B
:10622400E702D8F9D000D0E022C0905390F0F0D02B
:1062340009043903022C082C083E5F0540744089014
:10624400946E512D80CAC082C083511BE5F0540C5A
:1062540044109000004193C082C083743880B1C060
:1062640082C083D218E5F0543F444080A3C082C06A
```

44

```
:1062740083C218E5F0547FD2E78095C082C0839032
:10628400010041E8C082C083511BE5F0900200D2B6
:1062940093F0C293C185C082C083511B900300D286
:1062A40093E0C293C185F563E0F5F05188A3D5630B
:1062B400F72220204C4F572042415454552592034
:1062C4002020740A800A740B8006740C8002740DFA
:1062D400C082C0838008C082C083E5F0543F90012F
:1062E40080127387D293E08015740A8002740BC005
:1062F40082C083900080127387E5F0D293F0C2933A
:10630400C185C082C083C090C000783B51C630E7CD
:1063140002D8F95390F0907F6B75A0017880756373
:106324000ED293E2C293F0A308D563F5D000C180E6
:10633400C082C083C090C000C0F05390F0907F76BC
:10634400E0D2E7F5F051F1907F6B75A0007880758D
:10635400630CC293E0D293F2A308D563F5D0F0D0D6
:1063640000C180C2AFD20C125705911990D2FE71B0
:10637400AD5390F0907F76E0C2E3F5F01262F190B5
:10638400F0B2A3209906E583458270F674DF1261AA
:10639400D41261E830E5FAC295C296D296900FFF06
:1063A400A3E582458370F980EED20531DD71B7C271
:1063B4000521DDA3E582458370F9221261F574108D
:1063C40000262AAC2AFD20CC0E0E52054C331DFD0D0
:1063D400E012570591197A0590ED1871AD71B390DB
:1063E400C9FE71B1DAF29062B65390F071BF7A08C7
:1063F400090000071B1DAF96175C2AFC20C12570591
:106404006175C2AFD20C12570591196175740 6C03B
:10641400 82C0834114C0E0C0D0C0F0C082C083C039
:10642400905390F090946F517FF0911131FD913D14
:10643400075F0405171913D8047756310A3519AF0F6
:10644400D563F922C0E0C0D0C0F0C082C083C09040
:106454005390F031FD909470919475F04051719186
:1064640009490946DE0F5F0126205A3E0F5F01262E9
:1064740039A3E0F5F0201805126271 8003126263FB
:10648400D090439030D083D082D0F0D0D0D0E022CE
:0F649400C063756310E0F5F0126288A3D563F65C
:1064A300D06322C082C083C0905390F030150DE5B5
:1064B300F0C0E0C491C391D1D0E091C391D1C18028
:1064C300540FB40A00400224072430F5F0222011AF
:1064D300FDE55A245FF582E43492F583E5F0F0E5B7
:1064E3005A04B4FF01E4F55A04B4FF01E4B55B02B6
:1064F300D211301D04C21DD29922C082C083C09024
:106503005390F0C216C0F075F0002010FDE5592439
:106513006 0F582E43491F583E55904B4FF01E4F5B1
:106523 0059B55802D210C3E5589559500224FFB407
:106533000 02005002C217301A22C3E5599558 50027F
:106543 00 24FFC3947F4014C21A201306C20031DD16
:1065530 08009D21B301D04C21DD299E0301405B44A
:1065630 0A302D21630150DC5F0609FB17BC4C5F0F0
:1065730 0B17B45F0D0F0C180C394304013B40A001E
:106583 00400DC39407B40A004006B4100050012222
:106593 00E422755A00755B00C211D21D22755800A2
:1065A30 0755900D210C200C21921DDC082C083C058
:1065B30 0E0C0D0C0905390F8E5F090C599F090A05A
:1065C30 0001A2E392E6C2E3C2E7F0E5F0A2E7929FFD
```

```
:1065D300929BA2E39215A2E49213A2E59214A2E67F
:1065E3009207540790660193F58D301304C242C29B
:1065F30019438780C245D090D0D0D0E0C18540A058
:10660300D0E8F4FAFDE8C082C083C090C0D05390B4
:10661300F0301203E4801CE55D2440F582E43491FC
:10662300F583E55D04B42001E4F55DE55CB55D0249
:10663300D212E0D0D0C180755C00755D00D2122209
:10664300C082C083C090C0E0C0D0C001C0025390DC
:10665300F0909000300804E4F0801AD19DE3F0F547
:1066663063D193A312669DE3F0D563F5D193E55E01
:10667300B55F02D208D002D001D0D0D0E0D0904391
:106683009030D083D08222755E00755F00D20822DD
:10669300E55F04B44001E4F55F22E55F2400F9E41B
:1066A3003491FAF5A0227464C38001D3C082C083FD
:1066B300C0905390F09094904007C0E0E070FDD0FC
:1066C300E0F0D20531DDC180C082C083C0E07583B4
:1066D3000A758205F121758205F12BD583F3803785
:1066E300C082C08375830A8007C082C0837583021A
:1066F300C0E075820AF121D583F8758201F12B8000
:1067030016C082C083C0E075830A758205F12175C6
:106713008228F12BD583F3D0E0D083D08222D20517
:10672300D204F135D582F722C205C204F135D582F0
:0E673300F722749AC0E031DDD0E01470F72236
:107F69000000000000000000C0004010156250E00006D
:0D7F7900C8140E05FF130000000000205A80
:10766800436F70722E20313938362C313938372033
:107678004D61727320456C656374726F6E696373D4
:0576880056322E3137DF
:00000001FF
```

## Claims

1. A handheld, lightweight scanning and detection apparatus for use in scanning and decoding barcode data under adverse environmental scanning conditions comprising:

   laser light projecting means for projecting a laser light beam at a particular wavelength, said light being focused so that the spot size of the beam on a barcode printed on a surface being scanned is substantially the same size as the smallest feature of the barcode, to reduce the effect of noise resulting from reflections from the surface so that such noise is not decoded as a bar or space;

   means for filtering reflected light which has been reflected from the surface to remove light of wavelengths other than that of the laser light projecting means;

   means for detecting the filtered, reflected light and for producing an electrical signal representative of the detected, reflected light;

   means for electronically filtering the electrical signal, and producing an output signal from which the DC component of the electrical signal has been filtered out; and,

   means for decoding the output signal of said means for electronically filtering.

2. The apparatus of claim 1, wherein the means for decoding the output signal comprises a microprocessor having storage means, wherein the microprocessor decodes the output signal by using a scanning algorithm to find start and end characters to identify barcode data, and stores the data in the storage means.

3. The apparatus of claim 1, wherein the laser light projecting means is a high power laser diode having an output of not less than 2.5 milliwatts which emits a visible light beam.

4. The apparatus of claim 3, wherein the high power laser diode has a wavelength of approximately 670 nanometers.

5. The apparatus of claim 1, wherein the means for detecting the filtered, reflected light and producing the electrical signal is a photodiode.

6. The apparatus of claim 1, wherein the means for filtering the reflected light is a narrow band optical bandpass filter.

7. The apparatus of claim 1, wherein the means for electronically filtering the electrical signal is a high pass filter.

8. The apparatus of claim 7, wherein the high pass filter filters out frequencies less than 2.6 kilohertz.

9. The apparatus of claim 6, wherein the optical bandpass filter has a center frequency of 670 namometers and a bandwidth of 20 nanometers.

10. A method of contactless scanning of barcode data under adverse environmental scanning conditions using a handheld, lightweight and rugged laser scanner, comprising:
focusing a laser light source which emits a visible beam so that the spot size of the beam is substantially the same size as the smallest feature of the barcode to be scanned;
depressing a switch to energize the laser light source to aim the scanner, wherein an aiming period lasts a predetermined period of time;
automatically scanning an object after the aiming period elapses with the laser light beam source;
filtering the light reflected from the object being scanned with an optical bandpass filter to block light of wavelengths other than that of the laser light source;
detecting the filtered light and generating an electrical signal which is proportional to the intensity of the detected light and is indicative of the data scanned;
electronically filtering the electrical signal to remove low frequency signals with a high-pass filter; and,
decoding the electronically filtered signal.

11. The method of claim 10, wherein the electronic filtering of the electrical signal comprises:
filtering out all signals below 2650 Hertz; and,
blocking the DC component of the filtered electrical signals.

12. The method of claim 10, wherein the laser light source emits a beam of not less than 2.5 milliwatts and has a wavelength of 670 nanometers.

13. The method of claim 10, wherein the aiming period can be adjusted by an operator.

14. The apparatus of claim 6, wherein the optical bandpass filter reduces the DC level and glare on the light reflected from the scanned object by approximately 13 decibels.

15. The apparatus of claim 1, wherein the means for decoding the output signal comprises a current to voltage converter, a high pass filter, amplifier circuitry, a data separator circuit and a microprocessor.

16. The apparatus of claim 15, wherein the amplifier circuitry comprises a voltage controlled gain amplifier, two amplifier circuits, and an automatic gain control circuit.

17. The apparatus of claim 16, wherein the voltage controlled gain amplifier has a maximum gain of 3.2, and the two amplifier circuits have gains of 16 and 26.8.

18. The apparatus of claim 15, wherein the microprocessor further comprises storage means, and decodes the output signal by using a software program which finds start and end characters to identify barcode data, and stores the data in the storage means.

19. The method of claim 10, wherein the spot size of the laser light source is focused during manufacturing of the laser scanner.

20. The method of claim 19, wherein focusing depends on the data to be scanned.

**21.** The method of claim 10, wherein the decoding of the electronically filtered signal comprises:

amplifying the electrical signal and producing a differentiated electrical signal;

generating a digital signal from the differentiated electrical signal;

searching the digital signal for valid start and end characters; and

translating the digital signal found after the valid start character and before the valid end character into data.

**22.** The method of claim 21, wherein an operator can program the scanner to recognize different barcode types.

FIG. I

FIG.2

FIG.3

FIG.4

50

FIG.5

EP 0 481 606 A2

FIG.6a

FIG.6b

FIG.6c

FIG.6d

FIG.6e

FIG.6f

ABCDEFG1234567890

FIG. 7

# FIG. 7 cont.

FIG.8a

FIG.8b

FIG.8c

```
TD_2:    ;THIS DECODE ATTEMPT IGNORS MARGINS.WE WILL LOOK DIRECTLY FOR START
         ;STOP CHARACTERS FOR CODE 39 ONLY.

         ;R2,R1 ARE POINTING TO A SPACE.    1st ENTRY = 1st SPACE
                MOV     P2,R2          ;OUTPUT ADDRESS HIGHBYTE
                MOVX    A,@R1          ;GET SPACE LOWBYTE
                MOV     R6,A
                CALL    INC_adr
                MOVX    A,@R1          ;GET SPACE HIGHBYTE
                ORL     A,R6
                CALL    INC_ADR
                JZ      EX_TD_BAD      ;ZERO DATA MEANS END OF BUFFER
                MOVX    A,@R1          ;GET BAR LOWBYTE
                MOV     R6,A
                call    inc_adr
                MOVX    A,@R1          ;GET BAR HIGHBYTE
                ORL     A,R6
                call    inc_adr
                JZ      EX_TD_BAD      ;ZERO DATA MEANS END OF BUFFER
                call    dec_adr4       ; BACK UP TO SPACE ADRESS

TD_C39:         CALL    DCD39
                JC      EX_TD_OK              ;EXIT IF GOOD DECODE
                ACALL   CONTINUE
                call    inc_adr4       ; SKIP ONE SPACE AND ONE BAR
                SJMP    TD_1           ;LOOP TILL OUT OF DATA

EX_TD_BAD:      cir     c
                ret
EX_TD_OK:       setb    c
EX_TD:          RET
```

# FIG.9

FIG. 10A

EP 0 481 606 A2

FIG.10B

FIG. IOC

FIG.10C cont.

FIG. IOD

# FIG.IOD cont.

FIG. 10E

EP 0 481 606 A2

FIG. IOE cont.

# FIG.IOF

+5V

33

Vcc DB0 39 DB0
DB1 40 DB1
DB2 41 DB2
DB3 42 DB3
DB4 43 DB4
DB5 44 DB5
DB6 45 DB6
DB7 46 DB7

P1 19 R/S 36

P1 28 R/V 37

P1 18 E 38

CDM1 47 ROW1
CDM2 48 ROW2
CDM3 49 ROW3
CDM4 50 ROW4
CDM5 51 ROW5
CDM6 52 ROW6
CDM7 53
CDM8 54
CDM9 55
CDM10 56
CDM11 57
CDM12 58
CDM13 59
CDM14 60
CDM15 61
CDM16 62

UI
HD44786
or
M6222

SEG1 22 COL1
SEG2 21 COL2
SEG3 20 COL3
SEG4 19 COL4
SEG5 18 COL5
SEG6 17 COL6
SEG7 16 COL7
SEG8 15 COL8
SEG9 14 COL9
SEG10 13 COL10
SEG11 12 COL11
SEG12 11 COL12
SEG13 10 COL13

DOT MATRIX LIQUID CRYSTAL
DISPLAY PANAL

R7 2
10K
5VR  D1

98 2
10K

R9 2
10K  D2

EP 0 481 606 A2

## FIG.IOF cont.

EP 0 481 606 A2

FIG.10G

FIG.10 H